# EUROPEAN PATENT APPLICATION

(11) **EP 4 607 258 A1**
(43) Date of publication of application: **27.08.2025**
(21) Application number: 23879930.8
(22) Date of filing: 28.06.2023
(51) Int. Cl.: G02B 7/09, G02B 7/02, G03B 3/10, G03B 13/36, H02K 33/18, G03B 5/02, G03B 5/04, H04N 23/55

(54) **LENS DRIVING DEVICE, CAMERA DEVICE, AND OPTICAL DEVICE**

(30) Priority: 21.10.2022 KR 20220136879; 24.10.2022 KR 20220137817
(71) Applicant: LG INNOTEK CO. LTD, Gangseo-gu Seoul 07796 (KR)
(72) Inventor: NOH, Yun Ho, Seoul 07796 (KR); SON, Byung Wook, Seoul 07796 (KR); KWON, Tae Hoon, Seoul 07796 (KR)
(74) Representative: DREISS Patentanwälte PartG mbB
(86) International application number: PCT/KR2023/009060
(87) International publication number: WO 2024/085345

(57) **Abstract**

The present embodiment relates to a lens driving device comprising: a fixed part; a first moving part being disposed inside the fixed part; a second moving part being disposed inside the first moving part; a first driving part for moving the first moving part in an optical axis direction; a second driving part for moving the second moving part in a direction perpendicular to the optical axis direction; a plate member being disposed between the fixed part and the first moving part; a first ball part being disposed between the plate member and the first moving part; an elastic member being disposed between the fixed part and the plate member; and a second ball part being disposed between the fixed part and the first moving part, wherein the elastic member presses the second ball part to be supported by the fixed part.

## Description

### [Technical Field]

The present embodiment relates to a lens driving device, a camera device, and an optical apparatus.

### [Background Art]

A camera device is a device that photographs a picture or video of a subject and is installed in an optical apparatus such as a smartphone, a drone, a vehicle, and the like.

An auto focus function that automatically adjusts a focus according to a distance to a subject is applied to the camera device. In addition, hand shake correction function is applied to prevent a phenomenon in which focus is shaking due to a user's hand shake.

The auto focus function and hand shake correction function may be performed through electromagnetic interaction between a magnet and a coil.

However, in a conventional lens driving device, when disposing a magnet and a coil for performing an auto focus function, a magnet that does not require electrical connection is disposed in a moving part and a coil is disposed in a fixed part. In this case, there is a problem in that current consumption for performing the auto focus function increases because a magnet having a larger weight than a coil is disposed in the moving part.

In particular, in recent years, the lens diameter has increased according to the high-pixel image sensors, and accordingly, the weight of the lens is also increased, thereby increasing problems.

In addition, in the conventional lens driving device, the height of the camera device in an optical axis direction increases as a guide structure for OIS-x-axis driving and a guide structure for OIS-y-axis driving are disposed as separate layers.

Meanwhile, the auto focus function is performed as a lens moves in an optical axis direction against the image sensor, and the movement of the lens in the optical axis direction may be guided by a ball. At this time, an attractive force between the magnet and the yoke may be used to hold the ball between the fixed part and the moving part.

However, in this case, there is a problem in that a centering force exists in the optical axis direction. Furthermore, there may be a possibility for the moving part to be tilted by the contact point of the ball.

In addition, when the ball is used to guide the movement of the moving part for the hand shake compensation function, there is a problem in that the ball may be deviated from its original position due to an external impact or the like.

(Patent Literature 1) KR 10-2015-0118005 A

### [Detailed Description of the Invention]

### [Technical Subject]

The present embodiment is intended to provide a lens driving device in which current consumption for performing an autofocus function is reduced by disposing a coil that is lighter than a magnet in a moving part.

In addition, it is intended to provide a lens driving device having a minimized height in an optical axis direction by integrally forming a guide structure for OIS-x-axis driving and a guide structure for OIS-y-axis driving.

The present embodiment is intended to provide a lens driving device that presses the ball through an elastic member so that there is no centering force being generated in an optical axis direction when the ball is pressed through the yoke and the magnet.

In addition, it is intended to provide a lens driving device in which rotation and tilt of a moving unit are prevented by disposing a ball guide structure diagonally.

The present embodiment is intended to provide a lens driving device that minimizes deviation or damage of a structure for guiding the movement of a moving part for a hand shake compensation function due to an external impact or the like.

### [Technical Solution]

A lens driving device according to a first embodiment of the present invention comprises: a fixed part; a first moving part being disposed inside the fixed part; a second moving part being disposed inside the first moving part; a first driving part for moving the first moving part in an optical axis direction; a second driving part for moving the second moving part in a direction perpendicular to the optical axis direction; and a guide member being disposed between the first moving part and the second moving part, wherein the guide member may comprise a protruding part fixed to the second moving part and being in contact with the first moving part.

The guide member may comprise a plurality of guide members being spaced apart from each other, and the protruding part of each of the plurality of guide members may be in contact with the first moving part at one point.

The guide member may be formed of a metal member.

The protruding part of the guide member may be formed to be bent on a metal plate so that an opposite side of the protruding part may have a groove shape corresponding thereto.

The guide member may comprise a plate portion being disposed in the second moving part, the protruding part may be integrally formed with the plate port, and the protruding part may be protruded from the plate portion toward the second moving part.

The plate portion of the guide member may be integrally formed with the second moving part.

The first moving part may comprise a plate member, and the protruding part of the guide member may be in contact with the plate member.

The guide member may be formed of the same material as the plate member.

The lens driving device is a lens driving device that comprises an elastic member that presses the guide member in a direction toward the first moving part.

The lens driving device comprises: a first elastic member being coupled to the first moving part; a second elastic member being coupled to the second moving part; and a wire connecting the first elastic member and the second elastic member, wherein the protruding part of the guide member may be overlapped with the wire in a first direction perpendicular to the optical axis direction.

The protruding part of the guide member may be overlapped with the second elastic member in a second direction perpendicular to the optical axis direction.

The first direction may be the same direction as the second direction.

The first driving part comprises a first magnet being disposed in the fixed part and a first coil being disposed in the first moving part, and in a direction perpendicular to the optical axis direction, the first coil may comprise a portion being disposed between the first magnet and the protruding part of the guide member.

A lens driving device according to a first embodiment of the present invention comprises: a fixed part; a first moving part being disposed inside the fixed part; a second moving part being disposed inside the first moving part; a first driving part which moves the first moving part in an optical axis direction; a second driving part which moves the second moving part in a direction perpendicular to the optical axis direction; and a guide member being disposed between the first moving part and the second moving part, wherein the guide member may comprise a protruding part being fixed to the first moving part and in contact with the second moving part.

A lens driving device according to a first embodiment of the present invention comprises: a fixed part; a moving part being disposed inside the fixed part; a driving part that moves the moving part in a direction perpendicular to the optical axis direction; and a guide member being disposed between the fixed part and the moving part, wherein the guide member may comprise a protruding part being fixed to the moving part and in contact with the fixed part.

A camera device according to a first embodiment of the present invention may comprise: a printed circuit board; an image sensor being disposed in the printed circuit board; a lens driving device being disposed on the printed circuit board; and a lens being coupled to the lens driving device.

An optical device according to a first embodiment of the present invention may comprise: a main body; a camera device being disposed on the main body; and a display being disposed in the main body and outputting at least one of an image and a video photographed by the camera device.

A lens driving device according to a second embodiment of the present invention comprises: a fixed part; a first moving part being disposed inside the fixed part; a second moving part being disposed inside the first moving part; a first driving part which moves the first moving part in an optical axis direction; a second driving part which moves the second moving part in a direction perpendicular to the optical axis direction; a plate member being disposed between the fixed part and the first moving part; a first ball part being disposed between the plate member and the first moving part; an elastic member being disposed between the fixed part and the plate member; and a second ball part being disposed between the fixed part and the first moving part, wherein the elastic member may press the second ball portion to be supported on the fixed part.

The fixed part comprises a base, and a first protruding part and a second protruding part protruded from the base in the optical axis an direction; the first moving part comprises a first carrier and a third protruding part protruded from the first carrier in a first direction perpendicular to the optical axis direction; the first ball part is disposed between the plate and the first protruding part; and the second ball part may be disposed between the second protruding part and the third protruding part.

The first protruding part and the second protruding part may be disposed in a first corner region of the base.

A lens driving device according to a second embodiment of the present invention may comprise: a fixed part; a first moving part being disposed inside the fixed part; a second moving part being disposed inside the first moving part; a first driving part which moves the first moving part in an optical axis direction; a second driving part which moves the second moving part in a direction perpendicular to the optical axis direction; a first ball being disposed between the fixed part and the first moving part; a plate member being in contact with the first ball; and an elastic member for pressing the plate member toward the first ball.

The lens driving device may comprise a second ball being disposed between the first moving part and the second moving part.

It comprises a first ball comprising the first ball part and the second ball part, wherein the first ball may comprise a first unit ball being disposed in a first corner region of the fixed part when viewed from above and a second unit ball being disposed in a second corner region being disposed in a diagonal direction of the first corner region of the fixed part.

The second ball may comprise a third unit ball and a fourth unit ball being spaced from each other and disposed between the first unit ball and the second unit ball in the diagonal direction when viewed from above.

The first ball may comprise a ball being overlapped with the second ball in a direction perpendicular to the optical axis direction.

The first driving part may comprise a first magnet being disposed in the fixed part and a first coil being disposed on the first moving part.

The lens driving device comprises: a first substrate being disposed in the first moving part; and a second substrate connecting the fixed part and the first substrate, wherein the first coil may be disposed on the first substrate.

The second driving part comprises: a second magnet and a second coil for moving the second moving part in a first direction perpendicular to the optical axis direction; and a third magnet and a third coil for moving the second moving part in a second direction perpendicular to the optical axis direction and the first direction, wherein the second coil and the third coil may be disposed on the first substrate.

The first driving part may comprise: a substrate being disposed in the fixed part; a first coil being disposed on the substrate; and a first magnet being disposed in the first moving part.

The plate member is disposed between the first ball part and the fixed part and the elastic member is disposed between the plate member and the fixed part so that the plate member can be pressed in a direction opposite to the fixed part.

The fixed part comprises an outer wall part and a pillar part disposed inside the outer wall part, and the first ball may comprise a first unit ball being disposed between the first moving part and the pillar part of the fixed part and a second unit ball being disposed between the first moving part and the outer wall part of the fixed part.

The plate member is disposed between the first unit ball and the pillar part of the fixed part, and the elastic member may be disposed between the plate member and the pillar part of the fixed part.

The first ball part comprises a plurality of balls being disposed in the optical axis direction; the plurality of balls comprise a first uppermost ball being disposed highest and a first lowermost ball being disposed lowest; and the height of a point at which the elastic member presses the plate member may be disposed between the height of the first uppermost ball and the height of the first lowermost ball.

A camera device according to a second embodiment of the present invention may comprise: a printed circuit board; an image sensor being disposed on the printed circuit board; the lens driving device being disposed on the printed circuit board; and a lens being coupled to the lens driving device.

An optical apparatus according to a second embodiment of the present invention may comprise: a main body; the camera device being disposed in the main body; and a display being disposed on the main body and outputting at least one of a video and an image photographed by the camera device.

### [Advantageous Effects]

Through this embodiment, current consumption for performing the auto focus function can be reduced as the coil, which is lighter in weight than the magnet, is disposed in the moving part.

In addition, since the guide structure for OIS-x-axis driving and the guide structure for OIS-y-axis driving are integrally formed, the height of the lens driving device in an optical axis direction can be minimized.

Through this, the height at which the camera device is protruded from the smartphone can be minimized. Or, the camera device may not be protruded from the smartphone.

In addition, since the centering force in an optical axis direction being generated when the ball is pressurized through the yoke and magnet disappears, that is, since there is no force to return to the centering position, even it is minute, the consumption of current consumed in AF driving can be reduced and the accuracy of AF driving can be enhanced.

In addition, in the present embodiment, since the ball guide structure is disposed diagonally, rotation and tilt of the moving part can be prevented.

In addition, in the present embodiment, deviation or damage due to external impact or the like of the structure for guiding the movement of the moving part for the hand shake correction function can be minimized.

### [Brief Description of Drawings]

FIG. 1 is a conceptual diagram of a lens driving device according to a first embodiment of the present invention.
FIG. 2 is a perspective view of a lens driving device according to a first embodiment of the present invention.
FIG. 3 is a cross-sectional view viewed from A-A in FIG. 2.
FIG. 4 is a cross-sectional view viewed from B-B in FIG. 2.
FIG. 5 is an enlarged view of a partial region of FIG. 4.
FIG. 6 is a cross-sectional view viewed from C-C in FIG. 2.
FIG. 7 is a cross-sectional view viewed from D-D in FIG. 2.
FIG. 8 is a cross-sectional view of a lens driving device according to a first embodiment of the present invention cut in a direction perpendicular to an optical axis and viewed from above.
FIG. 9 is an exploded perspective view of a lens driving device according to a first embodiment of the present invention.
FIG. 10 is an exploded perspective view of a lens driving device according to a first embodiment of the present invention viewed from a direction different from that of FIG. 9.
FIG. 11 is a perspective view of a state in which a cover is omitted from a lens driving device according to a first embodiment of the present invention.
FIG. 12 is a perspective view viewed from a direction different from that of FIG. 11.
FIG. 13 is a perspective view illustrating a fixed part and related components of a lens driving device according to a first embodiment of the present invention.
FIG. 14 is a perspective view illustrating a moving part and related components of a lens driving device according to a first embodiment of the present invention.
FIG. 15 is a bottom perspective view viewed from a direction different from that of FIG. 14.
FIG. 16 is a bottom perspective view of a state in which the cover of an AF moving part in FIG. 15 is removed.
FIG. 17 is a bottom perspective view of a state in which an OIS moving part is removed in FIG. 16.
FIG. 18(a) is an enlarged view of a partial region of FIG. 17, and FIG. 18(b) is a separated view of the plate member in FIG. 18(a).
FIG. 19 is a bottom view of FIG. 17 viewed from below.
FIG. 20 is a perspective view illustrating an OIS moving part and related components of a lens driving device according to a first embodiment of the present invention.
FIG. 21(a) is an enlarged view of a partial region of FIG. 20, and FIG. 21(b) is a separated view of the guide member in FIG. 21(a).
FIG. 22 is a bottom perspective view of FIG. 20 viewed from a different direction.
FIG. 23 is a perspective view of an elastic member of the lens driving device according to a first embodiment of the present invention.
FIG. 24 is a plan view of a lens driving device according to a first embodiment of the present invention in a state where a cover is removed.
FIG. 25 is an enlarged plan view of a part of FIG. 24 in which a cover is omitted.
FIG. 26 is a cross-sectional perspective view illustrating a ball and a related structure of a lens driving device according to a first embodiment of the present invention.
FIG. 27 is a perspective view illustrating a ball and a related structure of a lens driving device according to a first embodiment of the present invention.
FIG. 28 is a perspective view illustrating a structure for accommodating a ball of a base of a lens driving device according to a first embodiment of the present invention.
FIG. 29 is a perspective view illustrating a state in which a ball, a plate member, an elastic member, and a reinforcing member are disposed in FIG. 28.
FIG. 30 is a perspective view of FIG. 29 viewed from another direction.
FIG. 31 is a perspective view illustrating a moving part and a ball of a lens driving device according to a first embodiment of the present invention.
FIG. 32 is a perspective view of FIG. 31 viewed from another direction;
FIG. 33(a) is a view comparing the heights of a ball and a pressing point in a state in which the moving part has moved upward; and FIG. 33(b) is a diagram comparing the heights of a ball and a pressing point in a state in which the moving part has moved downward.
FIG. 34 is a cross-sectional perspective view that illustrates an OIS guide member and related components of a lens driving device according to a first embodiment of the present invention.
FIG. 35 is a cross-sectional perspective view that illustrates an OIS guide member and related components of a part of a lens driving device according to a first embodiment of the present invention.
FIGS. 36 to 38 are views for explaining autofocus driving of a lens driving device according to a first embodiment of the present invention. FIG. 36 is a cross-sectional view of a moving part in an initial state in which no current is applied to an AF coil. FIG. 37 is a cross-sectional view illustrating a state in which a moving part moves upward in an optical axis direction when a forward current is applied to an AF coil. FIG. 38 is a cross-sectional view illustrating a moving part moving downward in an optical axis direction when a reverse current is applied to an AF coil.

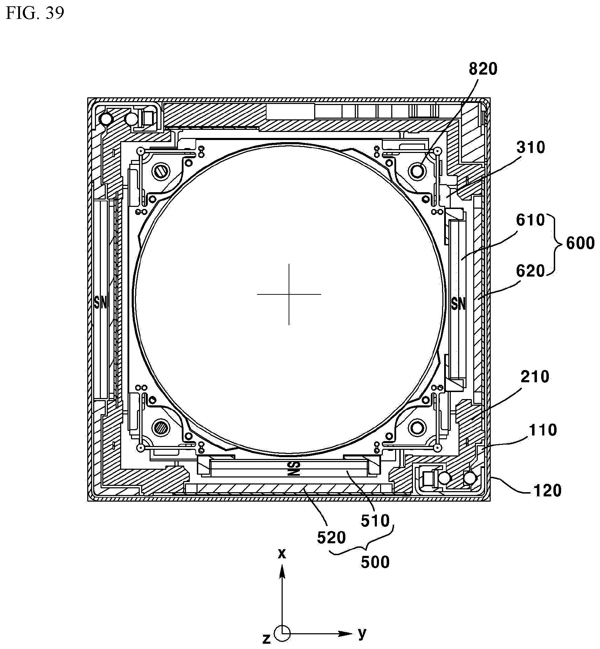

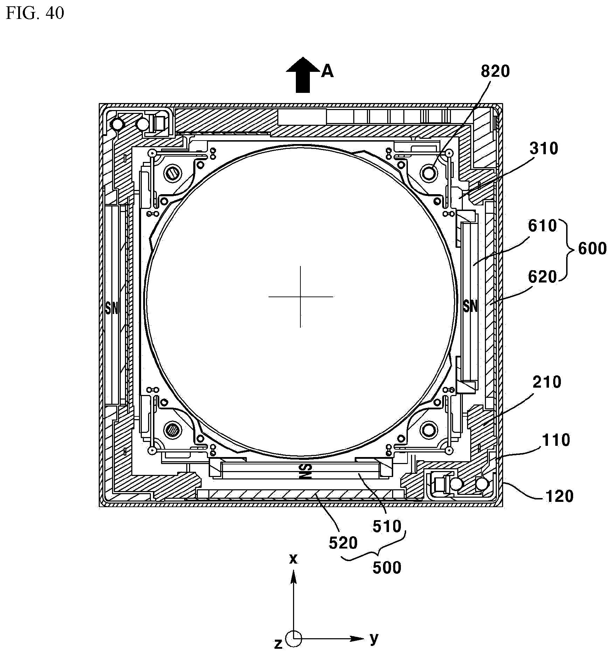

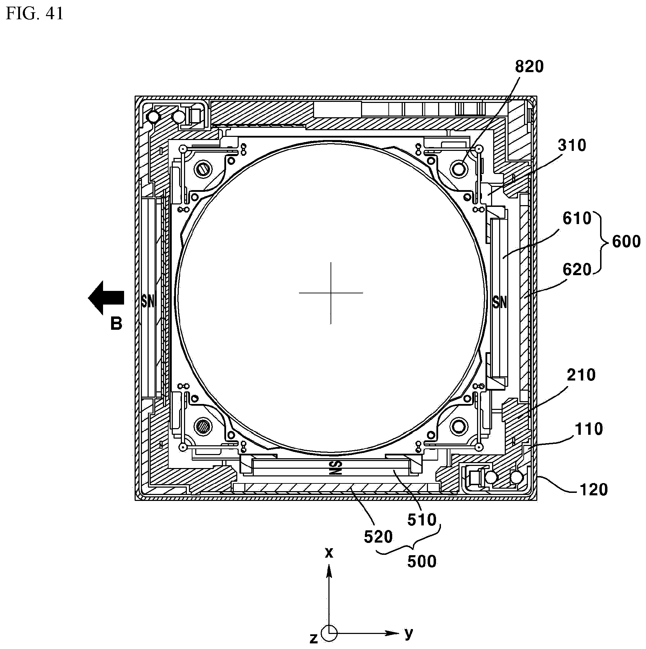

FIGS. 39 to 41 are views for explaining hand shake compensation driving of a lens driving device according to a first embodiment of the present invention. FIG. 39 is a cross-sectional view illustrating the appearance of an OIS moving part in an initial state in which no current is applied to an OIS-x coil and an OIS-y coil. FIG. 40 is a cross-sectional view illustrating a state in which an OIS moving part moves in an x-axis direction perpendicular to an optical axis as current is applied to an OIS-x coil. FIG. 41 is a cross-sectional view illustrating a state in which a current is applied to an OIS-y coil so that an OIS moving part moves in a y-axis direction perpendicular to both the optical axis and the x-axis.
FIG. 42 is an exploded perspective view of a camera device according to a first embodiment of the present invention.
FIG. 43 is a perspective view of an optical apparatus according to a first embodiment of the present invention.
FIG. 44 is a perspective view of an optical apparatus according to a modified embodiment.
FIG. 45 is a conceptual diagram of a lens driving device according to a second embodiment of the present invention.
FIG. 46 is a perspective view of a lens driving device according to a second embodiment of the present invention.
FIG. 47 is a cross-sectional view viewed from A-A in FIG. 46.
FIG. 48 is a cross-sectional view viewed from B-B in FIG. 46.
FIG. 49 is an enlarged view of a partial region of FIG. 48.
FIG. 50 is a cross-sectional view viewed from C-C in FIG. 46.
FIG. 51 is a cross-sectional view viewed from D-D in FIG. 46.
FIG. 52 is a cross-sectional view of a lens driving device according to a second embodiment of the present invention cut in a direction perpendicular to an optical axis and viewed from above.
FIG. 53 is an exploded perspective view of a lens driving device according to a second embodiment of the present invention.
FIG. 54 is an exploded perspective view of a lens driving device according to a second embodiment of the present invention, viewed from a direction different from that of FIG. 53.
FIG. 55 is a perspective view of a lens driving device according to a second embodiment of the present invention in which a cover is omitted.
FIG. 56 is a perspective view viewed from a direction different from that in FIG. 55;
FIG. 57 is a perspective view illustrating a fixed part and related components of a lens driving device according to a second embodiment of the present invention.
FIG. 58 is a perspective view illustrating a moving part and related components of a lens driving device according to a second embodiment of the present invention.
FIG. 59 is a bottom perspective view viewed from a direction different from that in FIG. 58;
FIG. 60 is a bottom perspective view of a state in which the cover of an AF moving part in FIG. 59 is removed.
FIG. 61 is a bottom perspective view of a state in which an OIS moving part is removed in FIG. 60.
FIG. 62 is an enlarged view of a partial region of FIG. 61.
FIG. 63 is a bottom view of FIG. 61 viewed from below.
FIG. 64 is a perspective view illustrating an OIS moving part and related components of a lens driving device according to a second embodiment of the present invention.
FIG. 65 is an enlarged view of a partial region of FIG. 64.
FIG. 66 is a bottom perspective view of FIG. 64 viewed from a different direction.
FIG. 67 is a perspective view of an elastic member of a lens driving device according to a second embodiment of the present invention.
FIG. 68 is a plan view of a lens driving device according to a second embodiment of the present invention with a cover removed.
FIG. 69 is an enlarged plan view of a part of FIG. 68 in a state where a cover is omitted;
FIG. 70 is a sectional perspective view illustrating a ball and a related structure of a lens driving device according to a second embodiment of the present invention.
FIG. 71 is a perspective view illustrating a ball and a related structure of a lens driving device according to a second embodiment of the present invention.
FIG. 72 is a perspective view illustrating a ball accommodation structure of a base of a lens driving device according to a second embodiment of the present invention.
FIG. 73 is a perspective view illustrating a state in which a ball, a plate member, an elastic member, and a reinforcing member are disposed in FIG. 72.
FIG. 74 is a perspective view of FIG. 73 viewed from another direction;
FIG. 75 is a perspective view illustrating a moving part and a ball of a lens driving device according to a second embodiment of the present invention.
FIG. 76 is a perspective view of FIG. 75 viewed from another direction;
FIG. 77(a) is a view comparing the heights of a ball and a pressure point in a state in which a moving part moves upward; and FIG. 77(b) is a view comparing the heights of a ball and a pressure point in a state where a moving part moves downward.
FIG. 78 is a cross-sectional view of a lens driving device according to a modified embodiment cut in a direction perpendicular to an optical axis and viewed from above.
FIG. 79 is an exploded perspective view of some components of a lens driving device according to a modified embodiment.

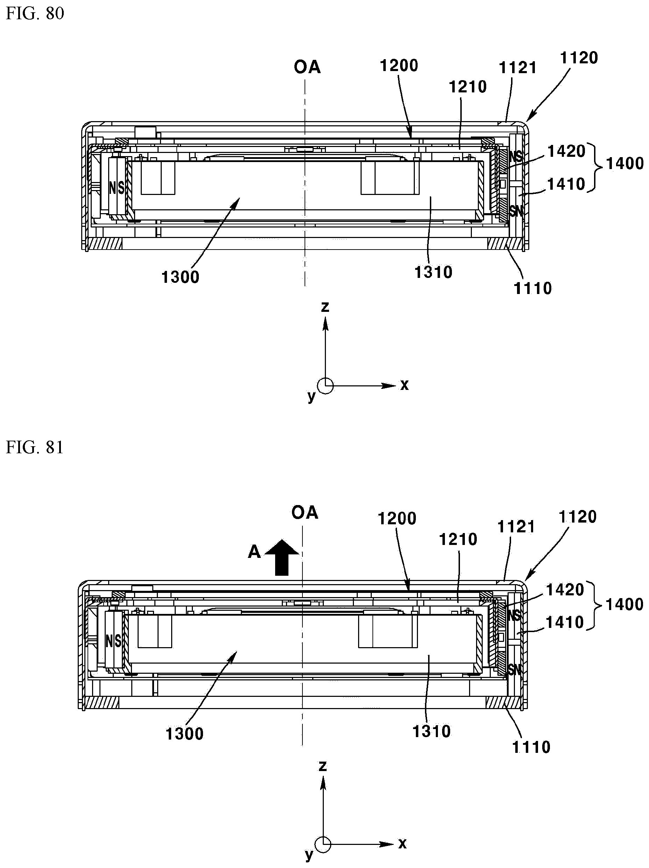

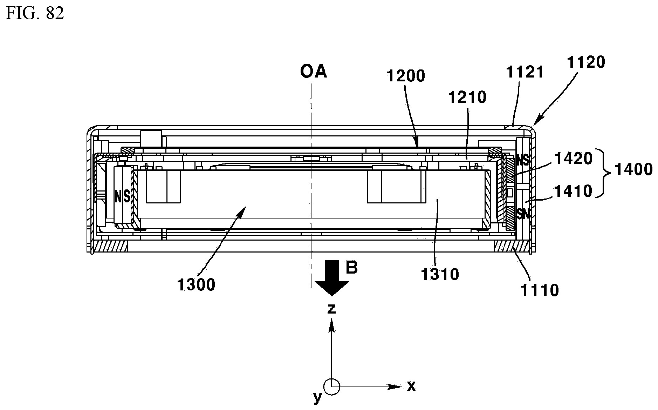

FIGS. 80 to 82 are views for explaining auto focus driving of a lens driving device according to a second embodiment of the present invention. FIG. 80 is a cross-sectional view illustrating the appearance of a moving part in an initial state in which no current is applied to an AF coil. FIG. 81 is a cross-sectional view illustrating a state in which a moving part moves upward in an optical axis direction when a forward current is applied to an AF coil. FIG. 82 is a cross-sectional view illustrating how a moving part moves downward in an optical axis direction when a reverse current is applied to an AF coil.

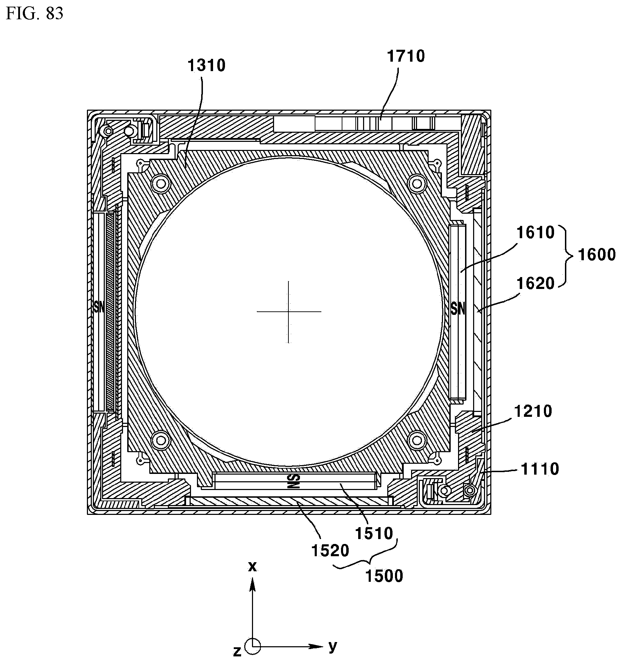

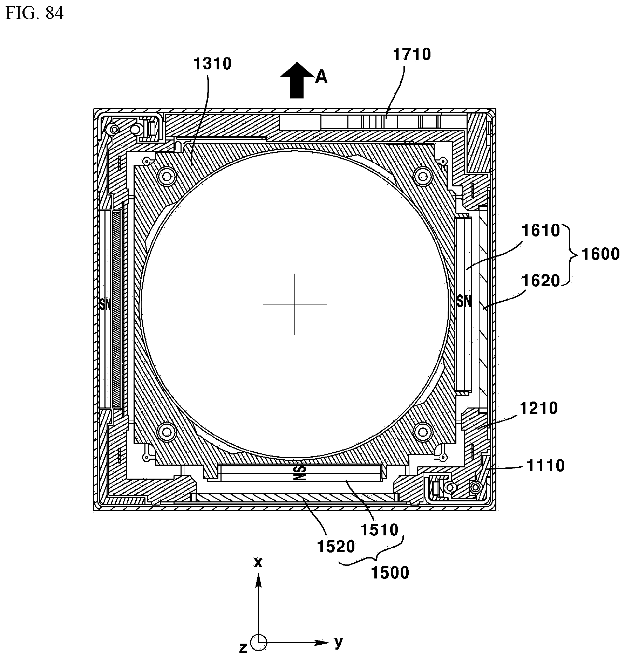

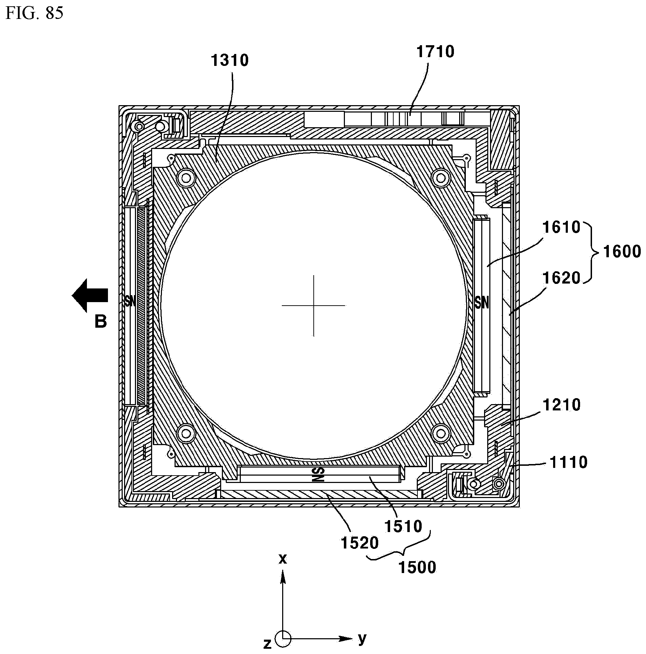

FIGS. 83 to 85 are views for explaining hand shake compensation driving of the lens driving device according to a second embodiment of the present invention. FIG. 83 is a cross-sectional view illustrating the appearance of the OIS moving part in an initial state in which no current is applied to an OIS-x coil and an OIS-y coil. FIG. 84 is a cross-sectional view illustrating a state in which an OIS moving part moves in an x-axis direction perpendicular to an optical axis as current is applied to an OIS-x coil. FIG. 85 is a cross-sectional view illustrating a state in which a current is applied to an OIS-y coil so that an OIS moving part moves in a y-axis direction perpendicular to both the optical axis and the x-axis.
FIG. 86 is an exploded perspective view of a camera device according to a second embodiment of the present invention.
FIG. 87 is a perspective view of an optical apparatus according to a second embodiment of the present invention.
FIG. 88 is a perspective view of an optical apparatus according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or arranged in "on (above)" or "below (under)" of each component, "on (above)" or "below (under)" means that it comprises not only the case where the two components are directly in contact with, but also the case where one or more other components are formed or arranged between the two components. In addition, when expressed as "on (above)" or "below (under)", the meaning of not only an upward direction but also a downward direction with respect to one component may be comprised.

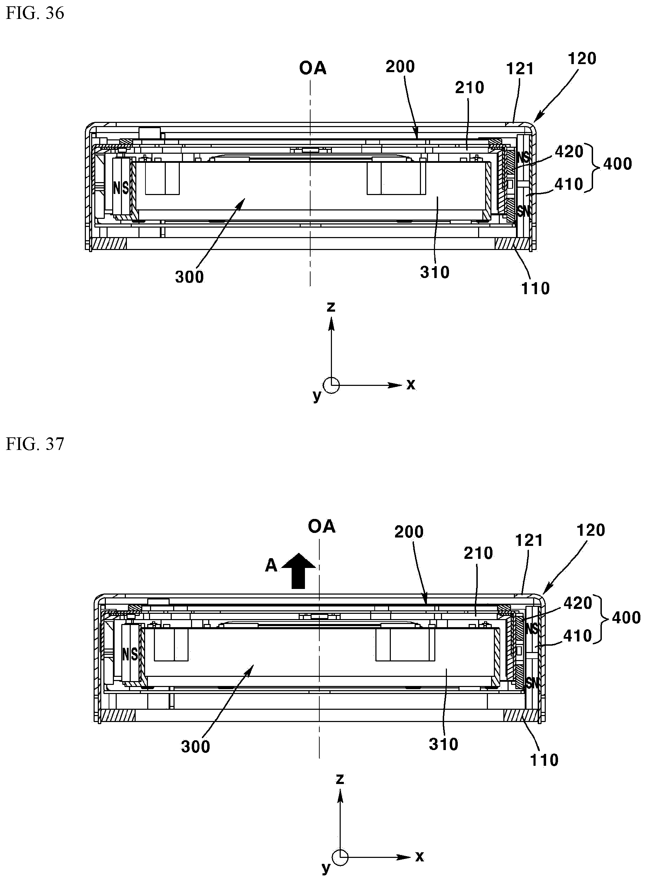

An 'optical axis (see **OA** of FIG. 36) direction' used below is defined as an optical axis direction of a lens and/or an image sensor being coupled to a lens driving device.

The 'vertical direction' used below may be a direction parallel to or the same direction as an optical axis direction. A vertical direction may correspond to a 'z-axis direction'. A 'horizontal direction' used below may be a direction perpendicular to a vertical direction. That is, a horizontal direction may be a direction perpendicular to an optical axis. Accordingly, a horizontal direction may comprise an 'x-axis direction' and a 'y-axis direction'.

The 'auto focus (AF) function' used below is defined as a function that adjusts the distance to an image sensor by moving a lens in an optical axis direction according to the distance of a subject so that a clear image of the subject can be obtained on the image sensor, thereby automatically focusing on the subject. In addition, 'closed-loop auto focus (CLAF) control' is defined as real-time feedback control of the position of a lens by detecting the distance between an image sensor and a lens to enhance the accuracy of focus control

An 'optical image stabilization (OIS) function' used below is defined as a function that moves or tilts a lens in a direction perpendicular to an optical axis to offset the hand shake in order to prevent an image or a video from shaking due to a user's hand shake. In addition, 'closed-loop auto focus (CLAF) control' is defined as a real-time feedback control of lens position by detecting the position of the lens relative to an image sensor to enhance the accuracy of image stabilization.

Hereinafter, any one of the "AF moving part **200"** and the "OIS moving part **300"** may be referred to as a "first moving part" and the other may be referred to as a "second moving part".

Hereinafter, any one of the "AF driving part **400"** and the "OIS driving part" may be referred to as a "first driving part" and the other may be referred to as a "second driving part".

Hereinafter, any one of the "AF driving part **400",** the "OIS-x driving part **500"** and the "OIS-y driving part **600"** is referred to as a "first driving part", the other may be referred to as a "second driving part", and the other may be referred to as a "third driving part".

Hereinafter, one of the "AF magnet **410",** the "OIS-x magnet **510"** and the "OIS-y magnet **610"** is referred to as a "first magnet", the other is referred to as a "second magnet", and the other may be referred to as a "third magnet".

Hereinafter, one of the "AF coil **420",** the "OIS-x coil **520"** and the "OIS-y coil **620"** is referred to as a "first coil", the other is referred to as a "second coil", and the other may be referred to as a "third coil".

Hereinafter, one among the "AF magnet **410",** the "OIS-x magnet **510",** the "OIS-y magnet **610",** the "AF coil **420",** the "OIS-x coil **520"** and the "OIS-y coil **620"** is referred to as "first driving unit", the other is referred to as a "second driving unit", the other is referred to as a "third driving unit", the other is referred to as a "fourth driving unit", the other is referred to as a "fifth driving unit", and the other may be referred to as a "sixth driving unit".

Hereinafter, any one of the "outer substrate **710"** and the "inner substrate **720"** may be referred to as a "first substrate" and the other may be referred to as a "second substrate".

Hereinafter, any one of the "holder member **220"** and the "pre-pressurizing member **230"** is referred to as a "first member" and the other may be referred to as a "second member". In addition, hereinafter, any one of the "holder member **220"** and the "pre-pressurizing member **230"** may be referred to as a "first housing" and the other may be referred to as a "second housing".

Hereinafter, any one of the "upper elastic member **830"** and the "lower elastic member **840"** is referred to as a "first elastic member" and the other may be referred to as a "second elastic member".

Hereinafter, one among the "upper elastic member **830",** the "lower elastic member **840",** and the "wire **850"** is referred to as a "first support member", the other is referred to as a "second support member", and the other may be referred to as a "third support member".

Hereinafter, one among the "AF sensor **430",** the "OIS-x sensor **530",** and the "OIS-y sensor **630"** is referred to as a "first sensor", the other is referred to as a "second sensor", and the other may be referred to as a "third sensor".

Hereinafter, one among the "AF yoke **440",** the "OIS-x yoke **540",** and the "OIS-y yoke **640"** is referred to as a "first yoke", the other is referred to as a "second yoke", and the other may be referred to as a "third yoke".

Hereinafter, one among the individual balls of the AF guide ball 810 is referred to as a "first unit ball", the other is referred to as a "second unit ball", the other is referred to as a "third unit ball", and the other may be referred to as a "fourth unit ball". Furthermore, "nth unit ball" may be used to refer to individual balls such as "fifth unit ball" and "sixth unit ball".

Hereinafter, one of the "pillar part **111"** and the "outer wall part **112"** is referred to as a "first portion", and the other may be referred to as a "second portion".

Hereinafter, one of the "inner groove **111-1"** and the "outer groove **112-1"** is referred to as a "first groove", and the other may be referred to as a "second groove".

Hereinafter, one of the "inner groove **224-1"** and "outer groove **224-2"** is referred to as a "first groove", and the other may be referred to as a "second groove".

Hereinafter, one of the "inner ball **811"** and the "outer ball **812"** is referred to as a "first unit ball", and the other may be referred to as a "second unit ball".

Hereinafter, one of the "uppermost inner ball **811-1"** and the "uppermost outer ball **812-1"** is referred to as a "first uppermost ball", and the other may be referred to as a "second uppermost ball".

Hereinafter, one of the "lowermost inner ball **811-2"** and the "lowermost outer ball **812-2"** is referred to as a "first lowermost ball", and the other may be referred to as a "second lowermost ball".

Hereinafter, one among the "upper bent part **921",** the "lower bent part **922",** and the "connection bent part **923"** is referred to as a "first bent part", the other is referred to as a "second bent part", and the other may be referred to as a "third bent part".

Hereinafter, any one of the "AF moving part **1200"** and the "OIS moving part **1300"** is referred to as a "first moving part", and the other may be referred to as a "second moving part".

Hereinafter, any one of the "AF driving unit **1400"** and the "OIS driving unit" is referred to as a "first driving unit" and the other may be referred to as a "second driving unit".

Hereinafter, any one among the "AF driving part **1400",** the "OIS-x driving part **1500",** and the "OIS-y driving part **1600"** is referred to as a "first driving part", the other is referred to as "second driving part", and the other can be referred to as a "third driving part".

Hereinafter, any one of the "AF magnet **1410",** the "OIS-x magnet **1510",** and the "OIS-y magnet **1610"** is referred to as a "first magnet", the other is referred to as a "second magnet", and the other may be referred to as a "third magnet".

Hereinafter, one among the "AF coil **1420",** the "OIS-x coil **1520",** and the "OIS-y coil **1620"** is referred to as a "first coil", the other is referred to as a "second coil", and the other may be referred to as a "third coil".

Hereinafter, one among the "AF magnet **1410",** the "OIS-x magnet **1510",** the "OIS-y magnet **1610",** the "AF coil **1420",** the "OIS-x coil **1520",** and the "OIS-y coil **1620"** is referred to as a "first driving unit", the other is referred to as a "second driving unit", the other is referred to as a "third driving unit", the other is referred to as a "fourth driving unit", the other is referred to as a "fifth driving unit", and the other may be referred to as a "sixth driving unit".

Hereinafter, any one of the "outer substrate **1710"** and the "inner substrate **1720"** may be referred to as a "first substrate" and the other may be referred to as a "second substrate".

Hereinafter, any one of the "AF guide ball **1810"** and the "OIS guide ball **1820"** is referred to as a "first ball", and the other may be referred to as a "second ball".

Hereinafter, any one of the "holder member **1220"** and the "pre-pressurizing member **1230"** is referred to as a "first member", and the other may be referred to as a "second member". In addition, hereinafter, any one of the "holder member **1220"** and the "pre-pressurizing member **1230"** is referred to as a "first housing", and the other may be referred to as a "second housing".

Hereinafter, any one of the "upper elastic member **1830"** and the "lower elastic member **1840"** is referred to as a "first elastic member", and the other may be referred to as a "second elastic member".

Hereinafter, one among the "upper elastic member **1830",** the "lower elastic member **1840",** and the "wire **1850"** is referred to as a "first support member", the other is referred to as a "second support member", and the other may be referred to as a "third support member".

Hereinafter, one among the "AF sensor **1430",** the "OIS-x sensor **1530",** and the "OIS-y sensor **1630"** is referred to as a "first sensor", the other is referred to as a "second sensor", and the other may be referred to as a "third sensor".

Hereinafter, one among the "AF yoke **1440",** the "OIS-x yoke **1540",** and the "OIS-y yoke **1640"** is referred to as a "first yoke", the other is referred to as a "second yoke", and the other may be referred to as a "third yoke".

Hereinafter, one of the individual balls of the AF guide ball **1810** and the individual ball of the OIS guide ball **1820** is referred to as a "first unit ball", the other is referred to as a "second unit ball", the other is referred to as a "third unit ball", and the other may be referred to as a "fourth unit ball". Furthermore, "nth unit ball" may be used to refer to individual balls such as "fifth unit ball" and "sixth unit ball".

Hereinafter, one of the "pillar part **1111"** and the "outer wall part **1112"** is referred to as a "first portion", and the other may be referred to as a "second portion". Or, hereinafter, one of the "pillar part **1111"** and the "outer wall part **1112"** is referred to as a "first pillar", and the other may be referred to as a "second pillar". Or, hereinafter, one of the "pillar part **1111"** and the "outer wall part **1112"** may be referred to as a "first protruding part" and the other may be referred to as a "second protruding part".

Hereinafter, one of the "inner groove **1111-1"** and the "outer groove **1112-1"** is referred to as a "first groove", and the other may be referred to as a "second groove".

Hereinafter, one of the "inner groove **1224-1"** and "outer groove **1224-2"** is referred to as a "first groove", and the other may be referred to as a "second groove".

Hereinafter, one of the "inner ball **1811"** and the "outer ball **1812"** is referred to as a "first unit ball", and the other may be referred to as a "second unit ball". Or, hereinafter, one of the "inner ball **1811"** and the "outer ball **1812"** is referred to as a "first ball part" and the other may be referred to as a "second ball part".

Hereinafter, one of the "uppermost inner ball **1811-1"** and the "uppermost outer ball **1812-1"** is referred to as a "first uppermost ball", and the other may be referred to as a "second uppermost ball".

Hereinafter, one of the "lowermost inner ball **1811-2"** and the "lowermost outer ball **1812-2"** is referred to as a "first lowermost ball", and the other may be referred to as a "second lowermost ball".

Hereinafter, one among the "upper bent part **1921",** the "lower bent part **1922",** and the "connection bent part **1923"** is referred to as a "first bent part", the other is referred to as a "second bent part", and the other may be referred to as a "third bent part".

Hereinafter, a configuration of a lens driving device according to a first embodiment of the present invention will be described with reference to the drawings.

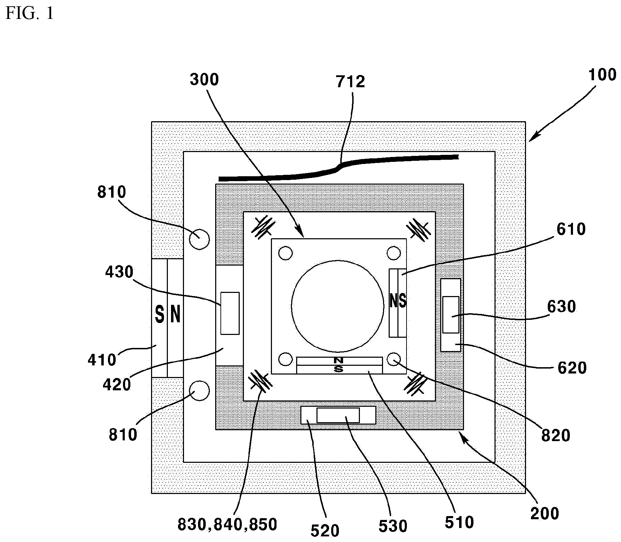

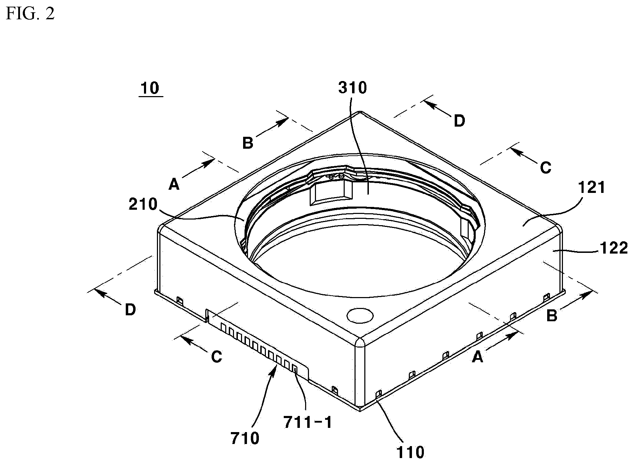

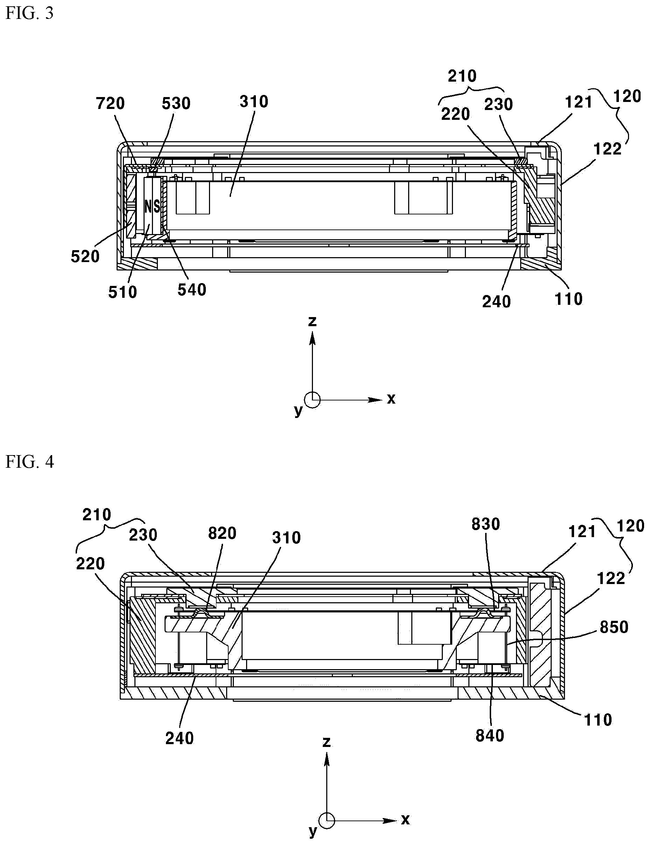

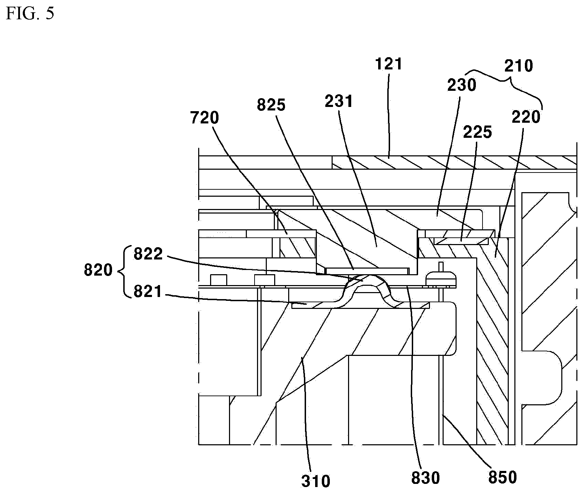

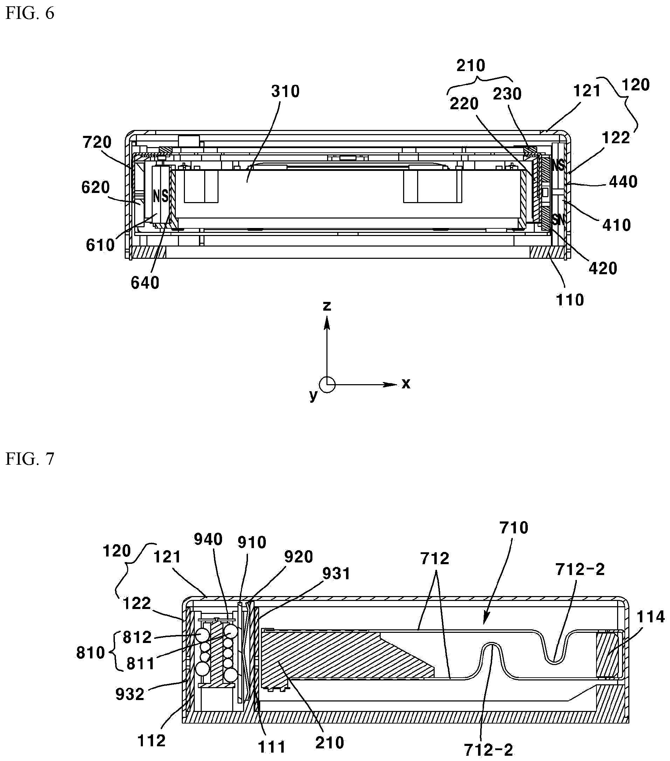

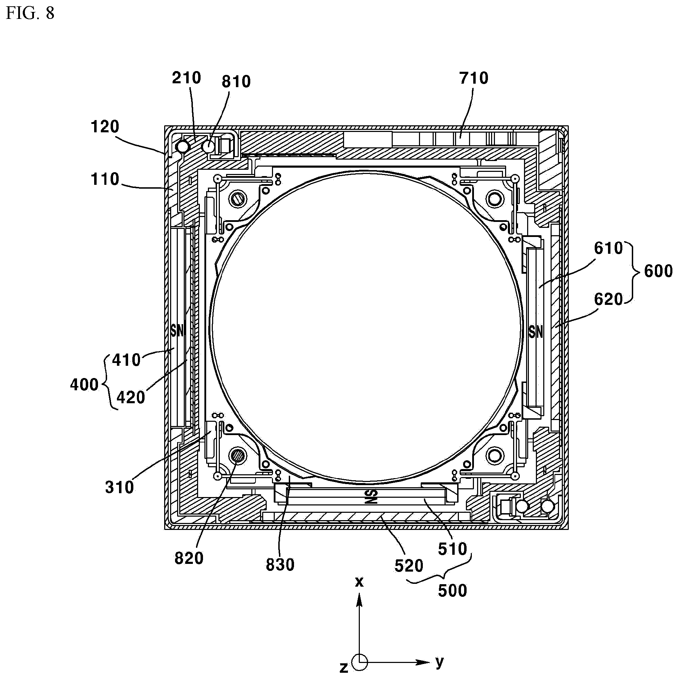

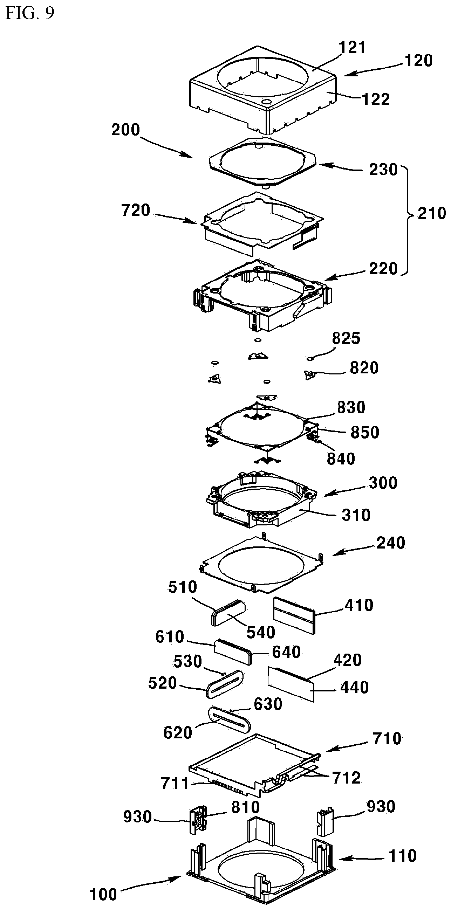

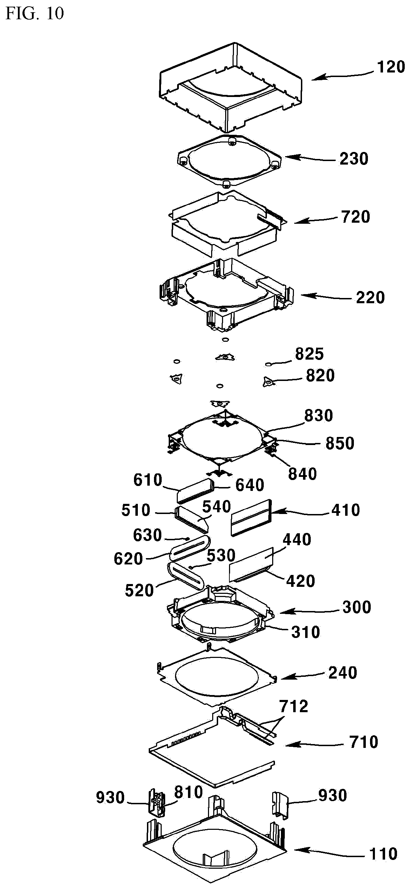

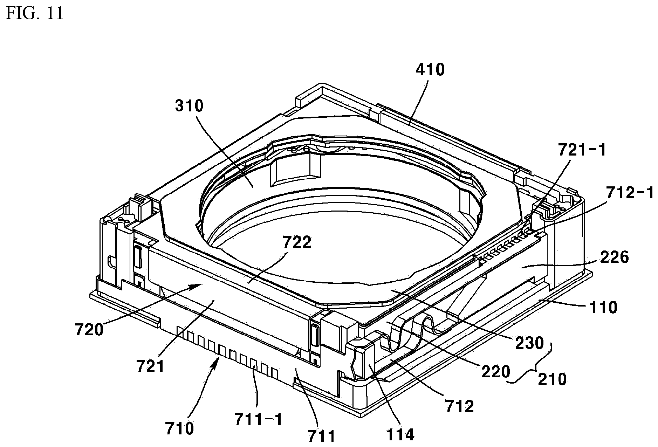

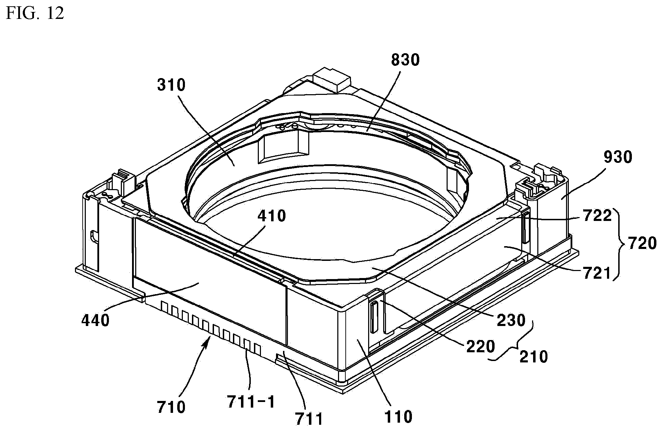

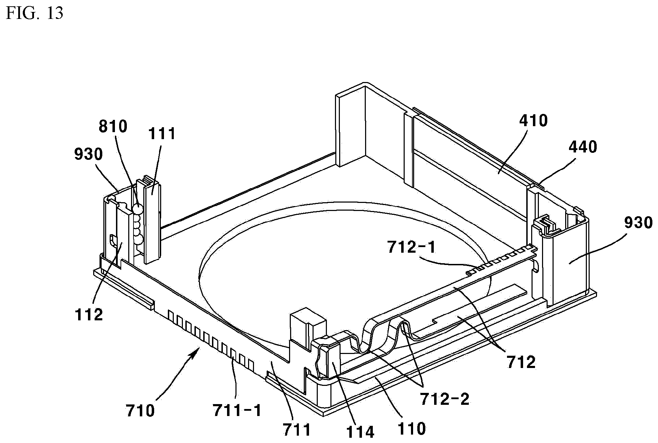

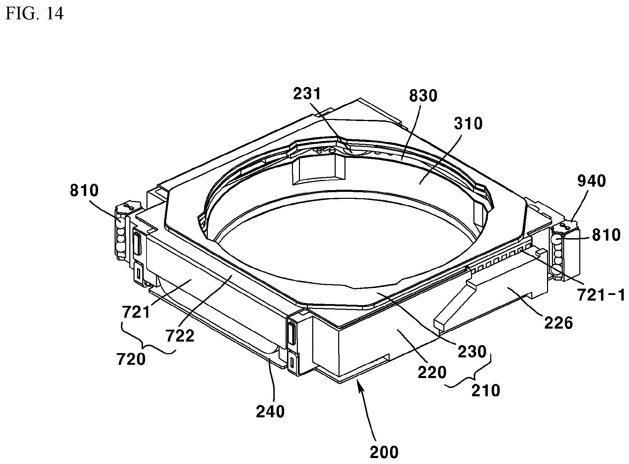

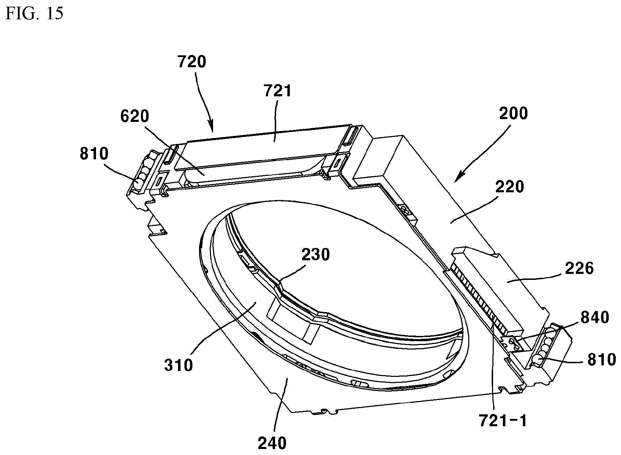

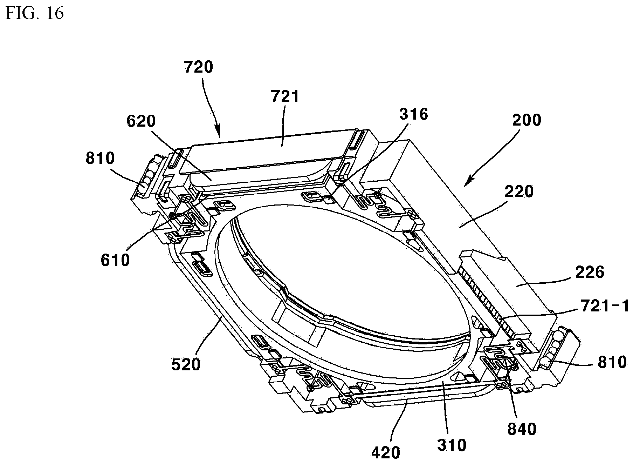

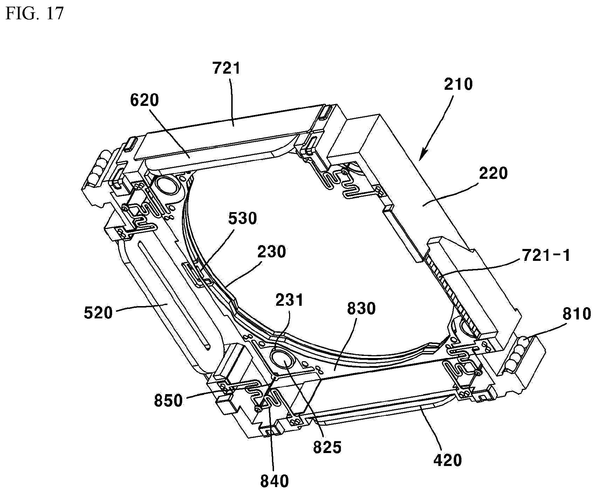

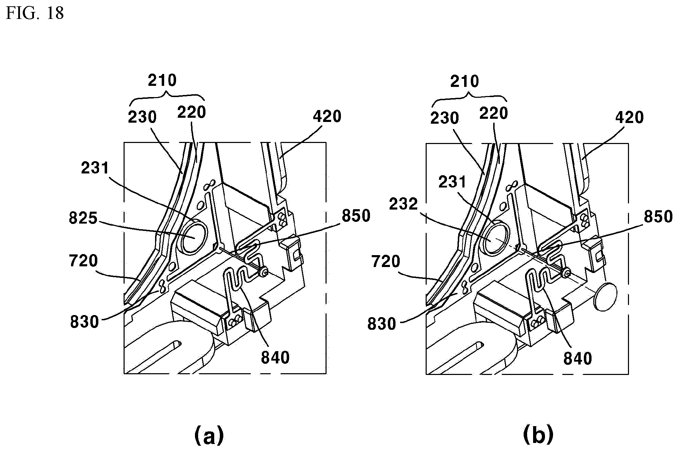

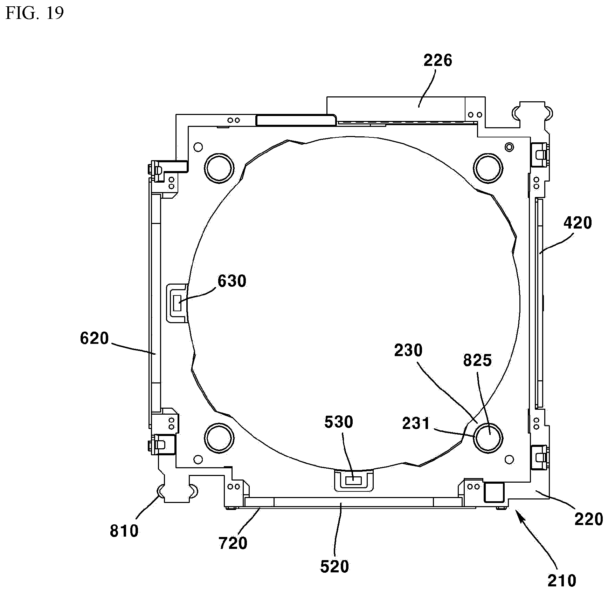

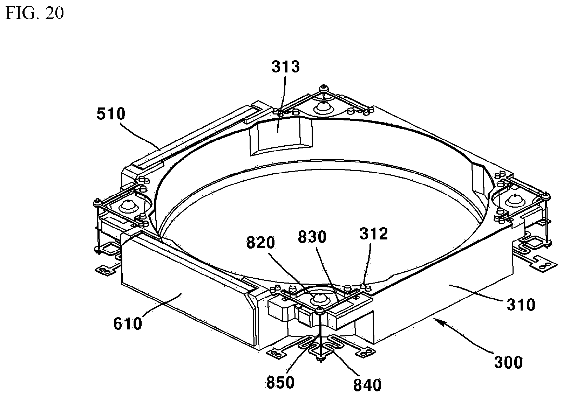

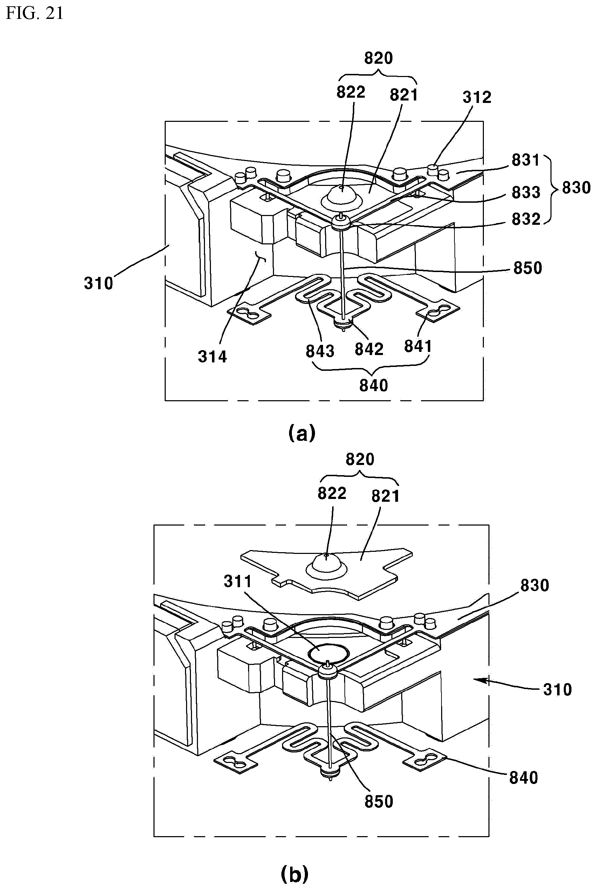

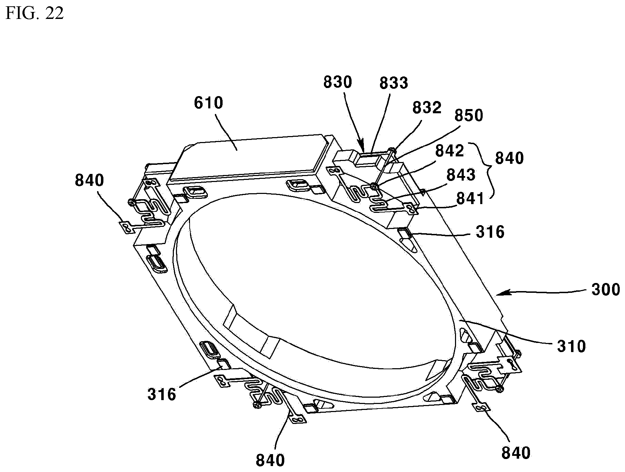

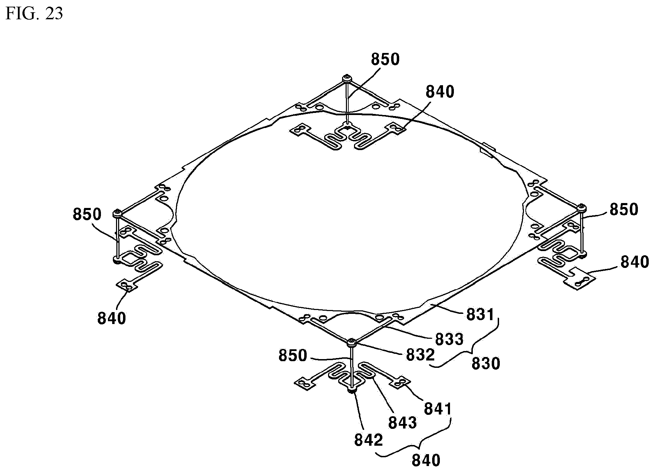

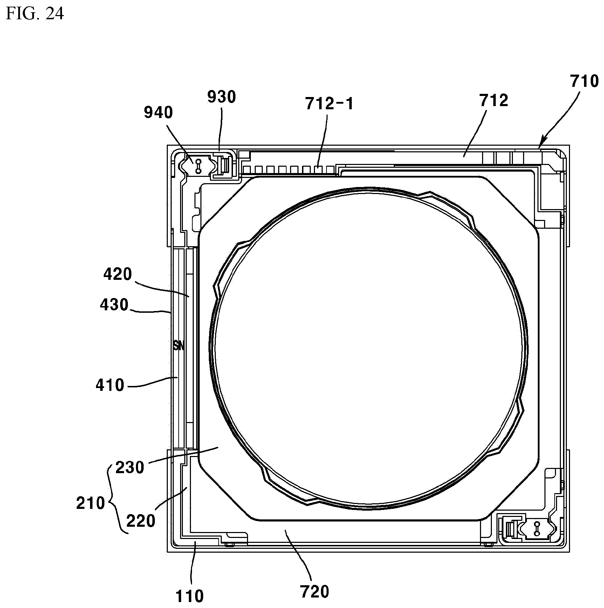

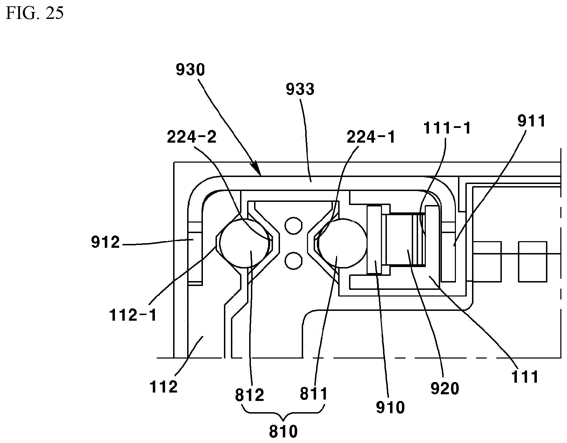

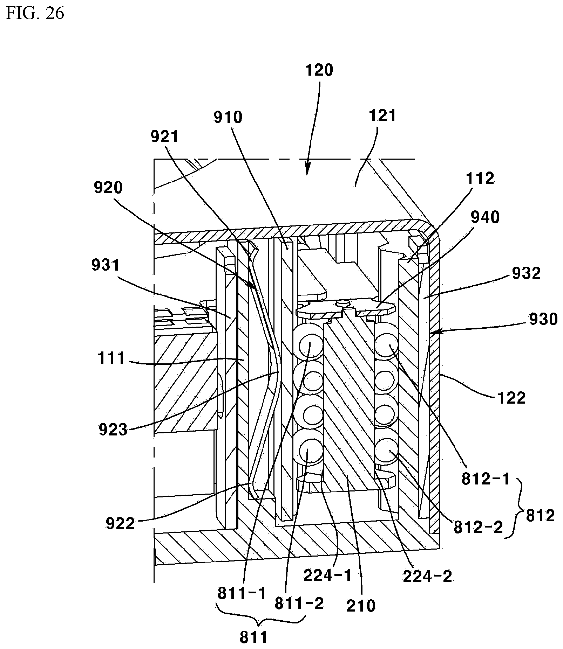

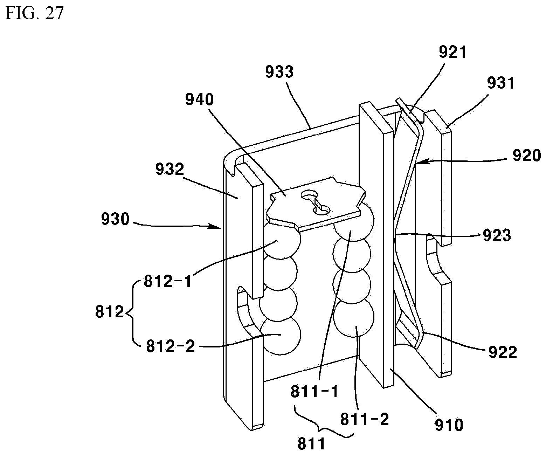

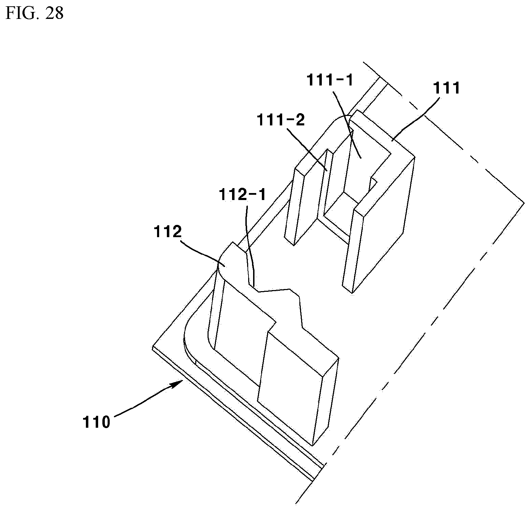

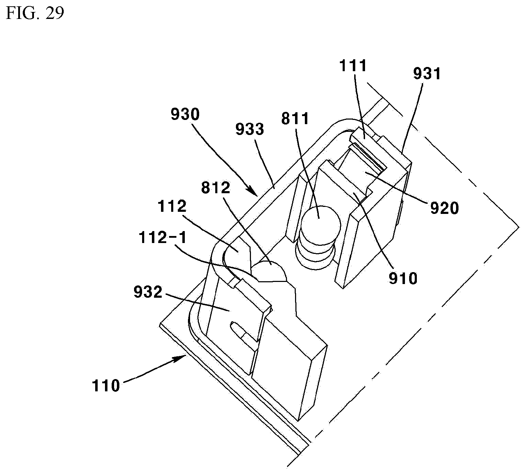

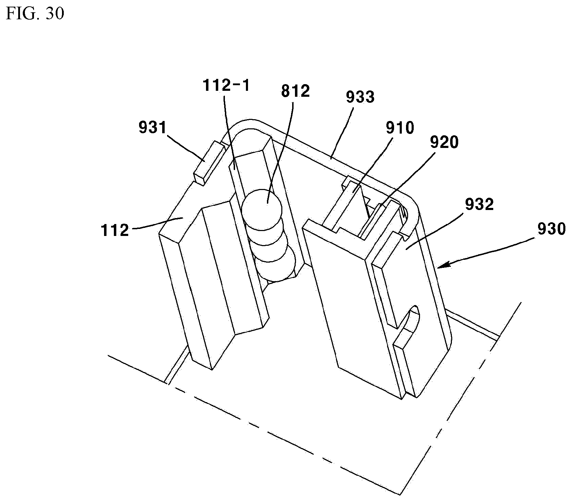

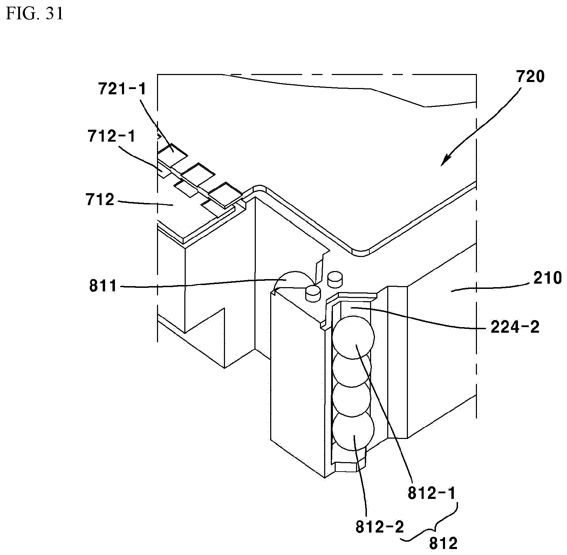

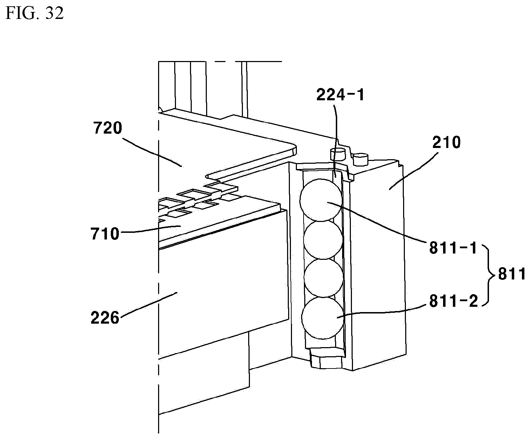

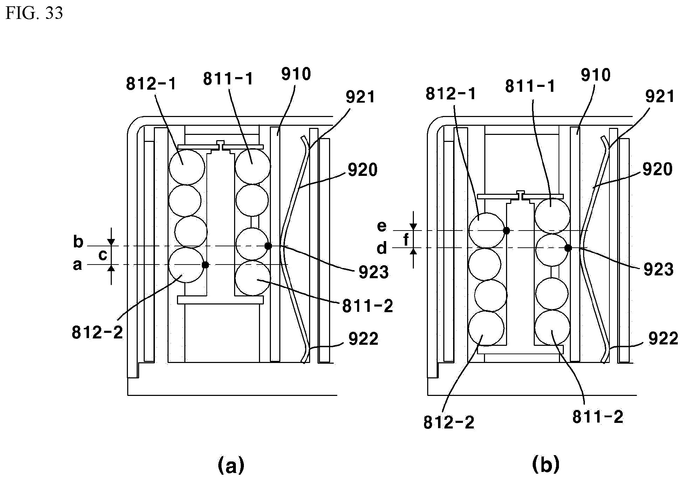

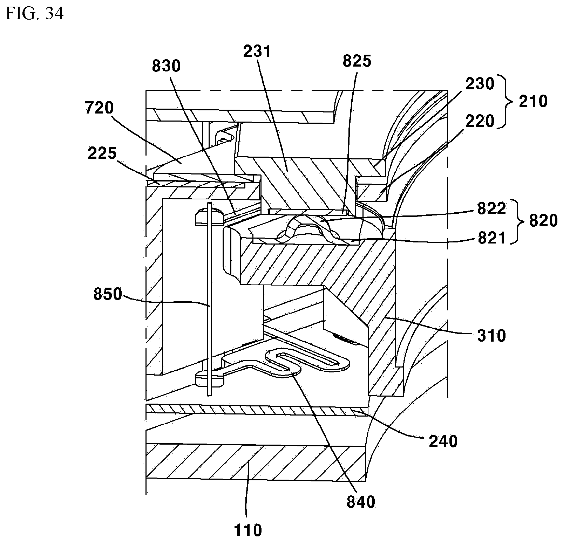

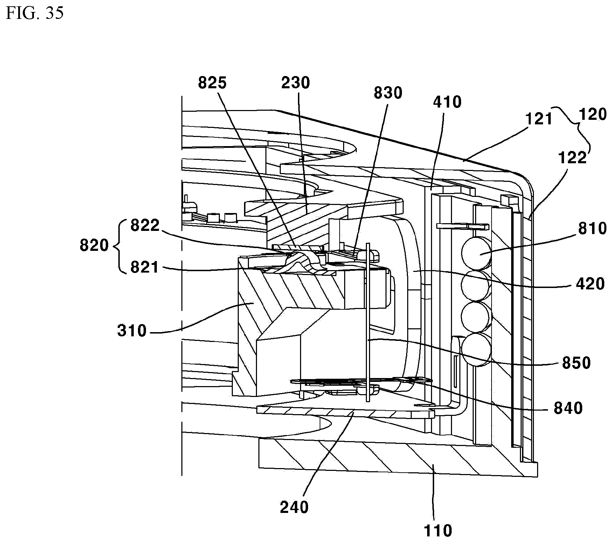

FIG. 1 is a conceptual diagram of a lens driving device according to a first embodiment of the present invention. FIG. 2 is a perspective view of a lens driving device according to a first embodiment of the present invention. FIG. 3 is a cross-sectional view viewed from A-A in FIG. 2. FIG. 4 is a cross-sectional view viewed from B-B in FIG. 2. FIG. 5 is an enlarged view of a partial region of FIG. 4. FIG. 6 is a cross-sectional view viewed from C-C in FIG. 2. FIG. 7 is a cross-sectional view viewed from D-D in FIG. 2. FIG. 8 is a cross-sectional view of a lens driving device according to a first embodiment of the present invention cut in a direction perpendicular to an optical axis and viewed from above. FIG. 9 is an exploded perspective view of a lens driving device according to a first embodiment of the present invention. FIG. 10 is an exploded perspective view of a lens driving device according to a first embodiment of the present invention viewed from a direction different from that of FIG. 9. FIG. 11 is a perspective view of a state in which a cover is omitted from a lens driving device according to a first embodiment of the present invention. FIG. 12 is a perspective view viewed from a direction different from that of FIG. 11. FIG. 13 is a perspective view illustrating a fixed part and related components of a lens driving device according to a first embodiment of the present invention. FIG. 14 is a perspective view illustrating a moving part and related components of a lens driving device according to a first embodiment of the present invention. FIG. 15 is a bottom perspective view viewed from a direction different from that of FIG. 14. FIG. 16 is a bottom perspective view of a state in which the cover of an AF moving part in FIG. 15 is removed. FIG. 17 is a bottom perspective view of a state in which an OIS moving part is removed in FIG. 16. FIG. 18(a) is an enlarged view of a partial region of FIG. 17, and FIG. 18(b) is a separated view of the plate member in FIG. 18(a). FIG. 19 is a bottom view of FIG. 17 viewed from below. FIG. 20 is a perspective view illustrating an OIS moving part and related components of a lens driving device according to a first embodiment of the present invention. FIG. 21(a) is an enlarged view of a partial region of FIG. 20, and FIG. 21(b) is a separated view of the guide member in FIG. 21(a). FIG. 22 is a bottom perspective view of FIG. 20 viewed from a different direction. FIG. 23 is a perspective view of an elastic member of the lens driving device according to a first embodiment of the present invention. FIG. 24 is a plan view of a lens driving device according to a first embodiment of the present invention in a state where a cover is removed. FIG. 25 is an enlarged plan view of a part of FIG. 24 in which a cover is omitted. FIG. 26 is a cross-sectional perspective view illustrating a ball and a related structure of a lens driving device according to a first embodiment of the present invention. FIG. 27 is a perspective view illustrating a ball and a related structure of a lens driving device according to a first embodiment of the present invention. FIG. 28 is a perspective view illustrating a structure for accommodating a ball of a base of a lens driving device according to a first embodiment of the present invention. FIG. 29 is a perspective view illustrating a state in which a ball, a plate member, an elastic member, and a reinforcing member are disposed in FIG. 28. FIG. 30 is a perspective view of FIG. 29 viewed from another direction. FIG. 31 is a perspective view illustrating a moving part and a ball of a lens driving device according to a first embodiment of the present invention. FIG. 32 is a perspective view of FIG. 31 viewed from another direction; FIG. 33(a) is a view comparing the heights of a ball and a pressing point in a state in which the moving part has moved upward; and FIG. 33(b) is a diagram comparing the heights of a ball and a pressing point in a state in which the moving part has moved downward. FIG. 34 is a cross-sectional perspective view that illustrates an OIS guide member and related components of a lens driving device according to a first embodiment of the present invention. FIG. 35 is a cross-sectional perspective view that illustrates an OIS guide member and related components of a part of a lens driving device according to a first embodiment of the present invention.

The lens driving device **10** may be a voice coil motor (VCM). The lens driving device **10** may be a lens driving motor. The lens driving device **10** may be a lens driving actuator. The lens driving device **10** may comprise an AF module. The lens driving device **10** may comprise an OIS module.

The lens driving device **10** may comprise a fixed part **100.** The fixed part **100** may be a relatively fixed part when the moving part moves. The moving part may move against the fixed part **100.**

The lens driving device **10** may comprise a base **110.** The fixed part **100** may comprise a base **110.** The base **110** may be disposed below the AF carrier **210.** The base **110** may be disposed below the OIS carrier **310.** The base **110** may be coupled with cover **120.** The AF carrier **210** and the OIS carrier **310** may be disposed on the base **110.** The AF carrier **210** and the OIS carrier **310** may be disposed on a lower plate portion of the base **110.** The AF carrier **210** and the OIS carrier **310** may be disposed inside the base **110.** The AF carrier **210** and the OIS carrier **310** may be disposed inside the side wall part of the base **110.**

The base **110** may comprise a lower plate portion. The lower plate portion of the base **110** may support a lower surface of the AF moving part **200.** The lower plate portion of the base **110** may support a lower surface of the AF carrier **210.**

The base **110** may comprise a pillar part **111.** The pillar part **111** may be extended from an upper surface of the lower plate portion. The pillar part **111** may be disposed inside the outer wall part **112.**

The base **110** may comprise an inner groove **111-1.** The pillar part **111** may comprise an inner groove **111-1.** The inner groove **111-1** may be formed in the pillar part **111.** The inner groove **111-1** may be an 'AF guide ball accommodating groove'. An AF guide ball **810** may be disposed in the inner groove **111-1.** An inner ball **811** may be disposed in the inner groove **111-1.** The inner groove **111-1** may be directly in contact with the AF guide ball **810.** The inner groove **111-1** may be disposed in an optical axis direction. The inner groove **111-1** may comprise a plurality of grooves. The inner groove **111-1** may comprise two grooves. The two grooves may be disposed parallel to each other. The two grooves may be disposed in a diagonal direction from each other with respect to an optical axis.

The base **110** may comprise a step **111-2.** The step **111-2** may be formed in the pillar part **111.** A plate member **910** may be disposed in the step **111-2.**

The base **110** may comprise an outer wall part **112.** The outer wall part **112** may be a 'side portion'. The outer wall part **112** may be a 'side plate'. The outer wall part **112** may be a 'side wall'. The outer wall part **112** of the base **110** may be extended from an upper surface of the lower plate portion.

The base **110** may comprise an outer groove **112-1.** The outer wall part **112** may comprise an outer groove **112-1.** The outer groove **112-1** may be formed to face the inner groove **111-1.** The outer groove **112-1** may face the inner groove **111-1.** The outer groove **112-1** may be an 'AF guide ball accommodating groove'. An AF guide ball **810** may be disposed in the outer groove **112-1.** An outer ball **812** may be disposed in the outer groove **112-1.** The outer groove **112-1** may directly in contact with the AF guide ball **810.** The outer groove **112-1** may be disposed in an optical axis direction. The outer groove **112-1** may comprise a plurality of grooves. The outer groove **112-1** may comprise two grooves. The two grooves may be disposed parallel to each other. The two grooves may be disposed in a diagonal direction from each other with respect to an optical axis. The outer groove **112-1** may be disposed at an opposite side of the inner groove **111-1.** The outer groove **112-1** may have a shape corresponding to the inner groove **111-1.** The outer groove **112-1** and the inner groove **111-1** may have the same length in an optical axis direction.

The base **110** may comprise a protruding part **114.** The protruding part **114** may be protruded outward. A connection part **712** of the outer substrate **710** may be disposed above and below the protruding part **114.** A groove may be formed in the protruding part **114** so as not to interfere even when the connecting part **712** of the outer substrate **710** moves.

The base **110** may comprise a step. The step may be formed on a lower end portion of an outer side surface of the base **110.** The step may be protruded from an outer side surface of the base **110.** The side plate **122** of the cover **120** may be disposed in a step of the base **110.**

The lens driving device **10** may comprise a cover **120.** The fixed part **100** may comprise a cover **120.** The cover **120** may be disposed in the base **110.** The cover **120** may be disposed on the base **110.** The cover **120** may be coupled to the base **110.** The cover **120** may be fixed to the base **110.** The cover **120** may accommodate the AF carrier **210** therein. The cover **120** may accommodate the OIS carrier **310** therein. The cover **120** may be a shield member. The cover **120** may be a shield can.

The cover **120** may comprise an upper plate **121.** The upper plate **121** may be disposed on a moving part. The upward movement of the moving part may be limited by contacting of the moving part with the upper plate **121.** The upper plate **121** may comprise a hole through which light passes.

The cover **120** may comprise a side plate **122.** The side plate **122** may be extended from the upper plate **121.** The side plate **122** may be disposed in the base **110.** The side plate **122** may be disposed on a step portion being protruded from a lower end portion of an outer side surface of the base **110.** The side plate **122** may comprise a plurality of side plates. The side plate **122** may comprise four side plates. The side plate **122** may comprise a first side plate and a second side plate being disposed opposite to each other, and a third side plate and a fourth side plate being disposed opposite to each other.

The lens driving device **10** may comprise a moving part. The moving part may be disposed in the fixed part **100.** The moving part may be disposed inside the fixed part **100.** The moving part may be disposed on the fixed part **100.** The moving part may be movably disposed in the fixed part **100.** The moving part may move based on the fixed part **100** by the driving part. The moving part can move during AF driving. The moving part can move during OIS driving. A lens may be coupled to the moving part.

The lens driving device **10** may comprise an AF moving part **200.** The AF moving part **200** may be disposed in the fixed part **100.** The AF moving part **200** may be disposed inside the fixed part **100.** The AF moving part **200** may be disposed on the fixed part **100.** The AF moving part **200** may be disposed between the fixed part **100** and the OIS moving part **300.** The AF moving part **200** may be movably disposed in the fixed part **100.** The AF moving part **200** may move in an optical axis direction against the fixed part **100** by the AF driving part **400.** The AF moving part **200** may move during AF driving.

In a modified embodiment, the AF moving part **200** and the AF driving part **400** may be omitted. That is, the OIS moving part **300** may be disposed in the fixed part **100.** Or, the OIS moving part **300** may be disposed on the fixed part **100** and the AF moving part **200** may be disposed inside the OIS moving part **300.**

The lens driving device **10** may comprise an AF carrier **210.** The AF moving part **200** may comprise an AF carrier **210.** The AF carrier **210** may be an 'AF holder'. The AF carrier **210** may be a 'housing'. The AF carrier **210** may be disposed inside the base **110.** AF carrier **210** may be disposed on the base **110.** The AF carrier **210** may be disposed inside the cover **120.** The AF carrier **210** may be disposed between the base **110** and the OIS carrier **310.** The AF carrier **210** may be movably disposed in an optical axis direction.

The AF carrier **210** may comprise a frame, a first upper plate, and a second upper plate. At this time, the frame may be a body part. The frame may be the holder member **220.** The first upper plate may be a metal member **225.** The second upper plate may be a pre-pressurizing member **230.** The AF carrier **210** may be a housing. The housing may comprise a first housing and a second housing. At this time, the first housing may comprise the holder member **220** and the second housing may comprise the pre-pressurizing member **230.** The OIS carrier **310** may be a bobbin. The OIS guide member **820** may be disposed between the housing and the bobbin. The AF guide ball **810** may be disposed between a side surface of the housing and the cover **120.** The AF guide ball **810** may be disposed between a side surface of the housing and a base or pillar of the base.

The lens driving device **10** may comprise a holder member **220.** The AF carrier **210** may comprise a holder member **220.** The holder member **220** may be formed separately from the pre-pressurizing member **230.** A lower elastic member **840** may be coupled to the holder member **220.**

The AF carrier **210** may comprise an upper plate. The upper plate may be disposed on the OIS carrier **310.** The upper plate may be disposed between the OIS carrier **310** and the upper plate **121** of the cover **120.** The upper plate may be disposed on the OIS moving part **300.**

The AF carrier **210** may comprise a hole. The holder member **220** may comprise a hole. The upper plate of the holder member **220** may comprise a hole. A hole may be formed in an upper plate of the holder member **220.** The hole can be opened inward. A pre-pressurizing member **230** may be inserted into the hole. The protruding part **231** of the pre-pressurizing member **230** may be inserted into the hole. The hole may be formed as a groove. The hole can be replaced by a groove. That is, as a modified embodiment, the AF carrier **210** may comprise a groove into which the protruding part **231** of the pre-pressurizing member **230** is inserted.

The AF carrier **210** may comprise a side wall. The sidewall may be extended downward from an upper plate. An inner substrate **720** may be disposed on a sidewall. An AF coil **420** may be disposed on the sidewall. An OIS-x coil **520** may be disposed on a side wall. An OIS-y coil **620** may be disposed on a side wall. The sidewall may comprise a groove that avoids the coil. The sidewall may comprise a plurality of sidewalls. The sidewall may comprise four sidewalls. The sidewall may comprise a first sidewall and a second sidewall being disposed opposite to each other, and a third sidewall and a fourth sidewall being disposed opposite to each other.

The AF carrier **210** may comprise an inner groove **224-1.** The holder member **220** may comprise an inner groove **224-1.** The inner groove **224-1** may be an 'AF guide ball accommodating groove'. An AF guide ball **810** may be disposed in the inner groove **224-1.** An inner ball **811** may be disposed in the inner groove **224-1.** The inner groove **224-1** may directly in contact with the AF guide ball **810.** The inner groove **224-1** may be disposed in an optical axis direction. The inner groove **224-1** may guide the AF guide ball **810** to move in an optical axis direction. The inner groove **224-1** may comprise a plurality of grooves. The inner groove **224-1** may comprise two grooves. The two grooves may be disposed parallel to each other. The two grooves may be disposed at a diagonal direction from each other with respect to an optical axis.

The AF carrier **210** may comprise an outer groove **224-2.** The holder member **220** may comprise an outer groove **224-2.** The outer groove **224-2** may be an 'AF guide ball accommodating groove'. An AF guide ball **810** may be disposed in the outer groove **224-2.** An outer ball **812** may be disposed in the outer groove **224-2.** The outer groove **224-2** may be directly in contact with the AF guide ball **810.** The outer groove **224-2** may be disposed in an optical axis direction. The outer groove **224-2** may guide the AF guide ball **810** to move in an optical axis direction. The outer groove **224-2** may comprise a plurality of grooves. The outer groove **224-2** may comprise two grooves. The two grooves may be disposed parallel to each other. The two grooves may be disposed in a diagonal direction from each other with respect to an optical axis. The outer groove **224-2** may be disposed at an opposite side of the inner groove **224-1.** The outer groove **224-2** may have a shape corresponding to the inner groove **224-1.** The outer groove **224-2** and the inner groove **224-1** may have the same length in an optical axis direction.

The AF carrier **210** may comprise a metal member **225.** The holder member **220** may comprise a metal member **225.** The metal member **225** may be insert-injected into the holder member **220.** At least a portion of the metal member **225** may be disposed on an upper surface of the holder member **220.** The metal member **225** may be disposed to reinforce the strength of the holder member **220.**

The AF carrier **210** may comprise a protruding part **226.** The holder member **220** may comprise a protruding part **226.** The protruding part **226** may be formed on an outer side surface of the AF carrier **210.** The protruding part **226** may be protruded outward from the AF carrier **210.** A connection part **712** may be disposed on an upper surface and a lower surface of the protruding part **226.**

The lens driving device **10** may comprise a pre-pressurizing member **230.** The AF carrier **210** may comprise a pre-pressurizing member **230.** The pre-pressurizing member **230** may be coupled to an upper surface of the holder member **220.** The pre-pressurizing member **230** may be coupled with the holder member **220.** The pre-pressurizing member **230** may be inserted and coupled to the holder member **220** from above. The pre-pressurizing member **230** may apply pressure to the OIS guide member **820.** The pre-pressurizing member **230** may be in contact with the OIS guide member **820.** The pre-pressurizing member **230** may be directly in contact with the OIS guide member **820.** The pre-pressurizing member **230** may apply pressure to the OIS guide member **820** by being coupled to the holder member **220.**

The AF carrier **210** may comprise a protruding part **231.** The pre-pressurizing member **230** may comprise a protruding part **231.** The protruding part **231** may be coupled to the hole of the holder member **220.** The protruding part **231** of the pre-pressurizing member **230** may be inserted into a hole of the holder member **220** from above. The protruding part **231** of the pre-pressurizing member **230** may be disposed in a hole of the holder member **220.** At least a part of the protruding part **231** of the pre-pressurizing member **230** may be disposed in a hole of the holder member **220.** The OIS guide member **820** may be disposed on a lower end portion of the protruding part **231** of the pre-pressurizing member **230.** The protruding part **231** may comprise a plurality of protrusions. The protruding part **231** may comprise four protrusions.

The AF carrier **210** may comprise a groove **232.** The pre-pressurizing member **230** may comprise a groove **232.** The groove **232** may be a 'plate member accommodating groove'. The groove **232** may be formed in the protruding part **231.** The groove **232** may be formed on a lower surface of the protruding part **231.** The groove **232** may be formed at an end portion of the protruding part **231.** The groove **232** may be concavely formed on a lower surface of the protruding part **231.** A plate member **825** may be disposed in the groove **232.** The groove **232** may be directly in contact with the plate member **825.** At this time, the OIS guide member **820** may be in contact with the plate member **825.**

However, the plate member **825** may be omitted as a modified embodiment. At this time, the groove **232** may comprise a flat bottom surface. The OIS guide member **820** may be in contact with the bottom surface of the groove **232** at one point. In other words, the groove **232** comprises a flat bottom surface, and the OIS guide member **820** may be in contact with the flat surface at one point. Or, the bottom surface of the groove **232** may comprise at least three planes being disposed inclined to each other. In this case, the OIS guide member **820** may be in contact with the bottom surface of the groove **232** at three points.

The lens driving device **10** may comprise a cover **240.** The AF moving part **200** may comprise a cover **240.** The cover **240** may be coupled with the AF carrier **210.** The cover **240** may be coupled to a lower surface of the AF carrier **210.** The cover **240** may be coupled to the AF carrier **210** at a lower side. The cover **240** may comprise a hook. The hook of the cover **240** may be coupled to the AF carrier **210.** The hook of the cover **240** is protruded upward and may be coupled to a side surface of the AF carrier **210.**

The lens driving device **10** may comprise an OIS moving part **300.** The OIS moving part **300** may be disposed in the fixed part **100.** The OIS moving part **300** may be disposed inside the fixed part **100.** The OIS moving part **300** may be disposed on the fixed part **100.** The OIS moving part **300** may be disposed inside the AF moving part **200.** The OIS moving part **300** may be movably disposed. The OIS moving part **300** may move in a direction perpendicular to the optical axis against the fixed part **100** and the AF moving part **200** by the OIS driving part. The OIS moving part **300** may move in an x-axis direction by the OIS-x driving part **500.** The OIS moving part **300** may move in a y-axis direction by the OIS-y driving part **600.** The OIS moving part **300** may move during OIS driving.

The lens driving device **10** may comprise an OIS carrier **310.** The OIS moving part **300** may comprise an OIS carrier **310.** The OIS carrier **310** may be an 'OIS holder'. The OIS carrier **310** may be a 'bobbin'. The OIS carrier **310** may be disposed inside the AF carrier **210.** The OIS carrier **310** may be disposed inside the base **110.** The OIS carrier **310** may be disposed on the base **110.** The OIS carrier **310** may be disposed inside the cover **120.** The OIS carrier **310** may be movably disposed in a direction perpendicular to the optical axis.

The OIS carrier **310** may comprise an outer side surface. The OIS carrier **310** may comprise a plurality of side surfaces. The OIS carrier **310** may comprise a first side surface and a second side surface being disposed opposite to each other, and a third side surface and a fourth side surface being disposed opposite to each other. The AF coil **420** may be disposed between a first side surface of the OIS carrier **310** and the AF magnet **410.** The OIS-x magnet **510** may be disposed on a third side surface of the OIS carrier **310.** The OIS-y magnet **610** may be disposed on a second side surface of the OIS carrier **310.**

The OIS carrier **310** may comprise a groove. The groove may be an 'upper elastic member interference prevention groove'. A groove may be formed on an upper surface of the OIS carrier **310.** The groove may be concavely formed on an upper surface of the OIS carrier **310.** The groove may be disposed at a position corresponding to the upper elastic member **830** to prevent interference between the OIS carrier **310** and the upper elastic member **830.**

The OIS carrier **310** may comprise a groove **311.** The groove **311** may be an 'insert groove'. An OIS guide member **820** may be disposed in the groove **311.** The groove **311** may be directly in contact with the OIS guide member **820.** The groove **311** may be disposed in a direction perpendicular to the optical axis. The groove **311** may be recessed in an optical axis direction. The groove **311** may comprise a plurality of grooves. The groove **311** may comprise four grooves. The OIS guide member **820** may be coupled to the groove **311.** The OIS guide member **820** may be disposed in the groove **311.** The OIS guide member **820** may be coupled to the groove **311.** The OIS guide member **820** may be coupled to the groove **311** through insert injection. The OIS guide member **820** may be fixed to the groove **311.** The groove **311** may be formed on an upper surface of the OIS carrier **310.**

The OIS carrier **310** may comprise a lateral stopper. The lateral stopper may limit the stroke of the OIS carrier **310** in a lateral direction. That is, when the OIS carrier **310** moves to the maximum, the lateral stopper of the OIS carrier **310** may be in contact with one or more of the AF carrier **210** and the base **110.** The lateral stopper may be formed on an outer side surface of the OIS carrier **310.** The lateral stopper may be protruded outward from a side surface of the OIS carrier **310.**

The OIS carrier **310** may comprise a protrusion **312.** The protrusion **312** may be coupled with the upper elastic member **830.** The protrusion **312** may be a 'coupling protrusion'. The upper elastic member **830** may comprise a hole into which the protrusion **312** of the OIS carrier **310** is inserted. The protrusion **312** may be formed on an upper surface of the OIS carrier **310.**

The OIS carrier **310** may comprise a groove **313.** The groove **313** may be a 'lens adhesive accommodating groove'. The groove **313** may be formed on an inner circumferential surface of the OIS carrier **310.** The groove **313** may be concavely formed on an inner circumferential surface of the OIS carrier **310.** An adhesive may be injected between the lens and the OIS carrier **310** through the groove **313.** An adhesive for bonding the lens and the OIS carrier **310** may be disposed in the groove **313.**

The OIS carrier **310** may comprise a groove **314.** The groove **314** may be formed on a lower surface of the OIS carrier **310.** The groove **314** may be opened outward.

The OIS carrier **310** may comprise a mounting part **315.** The mounting part **315** may be a 'magnet mounting part'. The magnets **510** and **620** may be disposed on the mounting part **315.** The mounting part **315** may be formed as a groove, for an example.

The OIS carrier **310** may comprise a lower stopper **316.** The lower stopper **316** may be formed on a lower surface of the OIS carrier **310.** The lower stopper **316** may be protruded downward from a lower surface of the OIS carrier **310.** The lower stopper **316** may limit the downward movement of the OIS carrier **310** by being in contact with the AF carrier **210** or the base **110.**

Hereinafter, one among the 'groove **311',** the 'groove **313',** and the 'groove **314'** of the OIS carrier **310** is referred to as a 'first groove', the other is referred to as a 'second groove', and another one may be referred to as the 'third groove'.

The lens driving device **10** may comprise a driving part. The driving part may move the moving part against the fixed part **100.** The driving part may comprise the AF driving part **400.** The driving part may comprise an OIS driving part. The driving part may comprise an OIS-x driving part **500.** The driving part may comprise an OIS-y driving part **600.** The driving part may comprise a coil and a magnet.

The lens driving device **10** may comprise an AF driving part **400.** The AF driving part **400** may move the AF moving part **200** in an optical axis direction. The AF driving part **400** may move the AF carrier **210** in an optical axis direction. The AF driving part **400** may move the AF carrier **210** in an optical axis direction through electromagnetic force. The AF driving part **400** may comprise a coil and a magnet.

In a first embodiment of the present invention, the AF carrier **210** and the OIS carrier **310** can move in an optical axis direction by the interaction between the AF coil **420** and the AF magnet **410.** The AF coil **420,** the AF carrier **210,** and the OIS carrier **310** may move integrally in an optical axis direction.

The lens driving device **10** may comprise an AF magnet **410.** The AF driving part **400** may comprise an AF magnet **410.** The AF magnet **410** may be an 'AF magnet'. The AF magnet **410** may be a permanent magnet. The AF magnet **410** may be disposed in the fixed part **100.** The AF magnet **410** may be disposed in the base **110.** The AF magnet **410** may be disposed in the cover **120.** The AF magnet **410** may be disposed in the side plate **122** of the cover **120.** The AF magnet **410** may be disposed on an outer side surface of the base **110.** The AF magnet **410** may be disposed on an inner side surface of the base **110.** The AF magnet **410** may be fixed to the base **110.** AF magnet **410** may be coupled to the base **110.** The AF magnet **410** may be attached to the base **110** with an adhesive. The AF magnet **410** may be disposed inside the cover **120.** The AF magnet **410** may interact with the AF coil **420.** The AF magnet **410** may interact with the AF coil **420** electromagnetically. The AF magnet **410** may be disposed at a position corresponding to the AF coil **420.** The AF magnet **410** and the AF coil **420** may face each other. The AF magnet **410** may face the AF coil **420.** The AF magnet **410** may be overlapped with the AF coil **420** in a direction perpendicular to the optical axis.

The AF magnet **410** may be a 4-pole magnet. The AF magnet **410** may comprise a 4-pole magnetized magnet. The AF magnet **410** may comprise a first magnet part comprising an N pole and an S pole, and a second magnet part comprising an N pole and an S pole. The first magnet part and the second magnet part may be disposed in a vertical direction. The first magnet part and the second magnet part are disposed spaced apart from each other in a vertical direction, and a neutral part may be disposed between the first magnet part and the second magnet part.

The lens driving device **10** may comprise an AF coil **420.** The AF driving part **400** may comprise an AF coil **420.** The AF coil **420** may interact with the AF magnet **410.** The AF coil **420** may face the AF magnet **410.** The AF coil **420** and the AF magnet **410** may face each other. The AF coil **420** may be disposed at a position corresponding to the AF magnet **410.** The AF coil **420** may be overlapped with the AF magnet **410** in a direction perpendicular to the optical axis. The AF coil **420** may be disposed on an inner substrate **720.** The AF coil **420** may be disposed in the AF carrier **210.** The AF coil **420** may be disposed in the AF moving part **200.**

In a first embodiment of the present invention, the AF coil **420** can move in an optical axis direction. The AF coil **420** may move in an optical axis direction through interaction with the AF magnet **410.** The AF coil **420** may move together with the AF moving part **200.** The AF coil **420** may move in an optical axis direction together with the AF moving part **200.** During the AF driving process, the AF coil **420** may move along with the AF moving part **200** in an optical axis direction. The AF coil **420** may be disposed in the AF moving part **200.** The AF coil **420** may be fixed to the AF moving part **200.** The AF coil **420** may be coupled to the AF moving part **200.**

The lens driving device **10** may comprise an AF sensor **430.** The AF driving part **400** may comprise an AF sensor **430.** The AF sensor **430** may be a Hall sensor. The AF sensor **430** may be disposed in the inner substrate **720.** The AF sensor **430** may detect the AF magnet **410.** The AF sensor **430** may detect movement of the AF magnet **410.** The movement amount or position of the AF magnet **410** detected by the AF sensor **430** may be used for feedback of auto focus driving.

The AF sensor **430** may be a driver IC. The driver IC may comprise a sensing unit. The sensing unit may comprise a Hall IC. The driver IC may be electrically connected to the AF coil **420.** The driver IC may supply current to the AF coil **420.**

The AF sensor **430** may be disposed inside the AF coil **420.** The AF sensor **430** may be overlapped with a neutral portion of the AF magnet **410** in a direction perpendicular to the optical axis. As a modified embodiment, the AF sensor **430** may be disposed outside the AF coil **420.** The AF sensor **430** may be overlapped with the AF coil **420** in an optical axis direction. The AF sensor **430** may be overlapped with the AF coil **420** in a direction perpendicular to the optical axis.

The lens driving device **10** may comprise an AF yoke **440.** The AF yoke **440** may be disposed at a position corresponding to the AF magnet **410.** An attractive force may act between the AF yoke **440** and the AF magnet **410.** The contact between the AF guide ball **810** and the base **110** and the AF carrier **210** can be maintained as it is by the attractive force between the AF yoke **440** and the AF magnet **410.** The AF yoke **440** may be disposed in the inner substrate **720.** The AF yoke **440** may be disposed inside the AF coil **420.**

The lens driving device **10** may comprise an OIS driving part. The OIS driving part may move the OIS moving part **300** in a direction perpendicular to the optical axis direction. The OIS driving part may move the OIS carrier **310** in a direction perpendicular to the optical axis. The OIS driving part may move the OIS carrier **310** in a direction perpendicular to the optical axis through electromagnetic force.

The lens driving device **10** may comprise an OIS-x driving part **500.** The OIS driving part may comprise an OIS-x driving part **500.** The OIS-x driving part **500** may move the OIS carrier **310** in an x-axis direction perpendicular to the optical axis. The OIS-x driving part **500** may move the OIS carrier **310** in an x-axis direction perpendicular to the optical axis through electromagnetic force. The OIS-x driving part **500** may comprise a coil and a magnet.

In a first embodiment of the present invention, the OIS-x magnet **510** and the OIS-x coil **520** may move the OIS moving part **300** in a first direction perpendicular to the optical axis direction. At this time, the first direction may be an x-axis direction. Due to the interaction between the OIS-x coil **520** and the OIS-x magnet **510,** the OIS carrier **310** can move in an x-axis direction perpendicular to the optical axis direction. The OIS-x magnet **510** and the OIS carrier **310** may integrally move in an x-axis direction.

The lens driving device **10** may comprise an OIS-x magnet **510.** The OIS driving part may comprise an OIS-x magnet **510.** The OIS-x magnet **510** may be 'OIS-x magnet'. The OIS-x magnet **510** may be a permanent magnet. The OIS-x magnet **510** may be disposed in the OIS moving part **300.** The OIS-x magnet **510** may be spaced apart from the AF magnet **410.** The OIS-x magnet **510** may be disposed in the OIS carrier **310.** The OIS-x magnet **510** may be disposed on an outer side surface of the OIS carrier **310.** The OIS-x magnet **510** may be fixed to the OIS carrier **310.** The OIS-x magnet **510** may be coupled to the OIS carrier **310.** The OIS-x magnet **510** may be attached to the OIS carrier **310** with an adhesive. The OIS-x magnet **510** may be disposed inside the cover **120.** The OIS-x magnet **510** may interact with the OIS-x coil **520.** The OIS-x magnet **510** may interact electromagnetically with the OIS-x coil **520.** The OIS-x magnet **510** may be disposed at a position corresponding to the OIS-x coil **520.** The OIS-x magnet **510** and the OIS-x coil **520** may face each other. The OIS-x magnet **510** may face the OIS-x coil **520.** The OIS-x magnet **510** may be overlapped with the OIS-x coil **520** in a direction perpendicular to the optical axis. The OIS-x magnet **510** may be overlapped with the OIS-x coil **520** in an x-axis direction. The OIS-x magnet **510** can move in an x-axis direction perpendicular to the optical axis.

The OIS-x magnet **510** may be a two-pole magnet. The OIS-x magnet **510** may comprise a two-pole magnetized magnet. The OIS-x magnet **510** may comprise an N pole and an S pole.

The lens driving device **10** may comprise an OIS-x coil **520.** The OIS driving part may comprise an OIS-x coil **520.** The OIS-x coil **520** may interact with the OIS-x magnet **510.** The OIS-x coil **520** may move the OIS-x magnet **510** in an x-axis direction perpendicular to the optical axis. The OIS-x coil **520** may move the OIS-x magnet **510** in an x-axis direction through interaction with the OIS-x magnet **510.** The OIS-x coil **520** may face the OIS-x magnet **510.** The OIS-x coil **520** and the OIS-x magnet **510** may face each other. The OIS-x coil **520** may be disposed at a position corresponding to the OIS-x magnet **510.** The OIS-x coil **520** may be overlapped with the OIS-x magnet **510** in a direction perpendicular to the optical axis. The OIS-x coil **520** may be disposed in the inner substrate **720.** The OIS-x coil **520** may be disposed in the AF carrier **210.**

In a first embodiment of the present invention, the OIS-x coil **520** may move together with the AF moving part **200.** The OIS-x coil **520** may move in an optical axis direction together with the AF moving part **200.** During the AF driving process, the OIS-x coil **520** may move along with the AF moving part **200** in an optical axis direction. The OIS-x coil **520** may be disposed in the AF moving part **200.** The OIS-x coil **520** may be fixed to the AF moving part **200.** The OIS-x coil **520** may be coupled to the AF moving part **200.**

The lens driving device **10** may comprise an OIS-x sensor **530.** The OIS driving part may comprise an OIS-x sensor **530.** The OIS-x sensor **530** may be disposed in the inner substrate **720.** The OIS-x sensor **530** may comprise a Hall sensor. The OIS-x sensor **530** may detect the OIS-x magnet **510.** The OIS-x sensor **530** may detect the magnetic force of the OIS-x magnet **510.** The OIS-x sensor **530** may be disposed above the OIS-x magnet **520.** The OIS-x sensor **530** may be overlapped with the OIS-x magnet **520** in an optical axis direction. In a modified embodiment, the OIS-x sensor **530** may be disposed inside the OIS-x coil **520.** The OIS-x sensor **530** may be overlapped with the OIS-x coil **520** in an optical axis direction. The OIS-x sensor **530** may be overlapped with the OIS-x coil **520** in a direction perpendicular to the optical axis. The OIS-x sensor **530** may face the OIS-x magnet **510.** The OIS-x sensor **530** may be disposed at a position corresponding to the OIS-x magnet **510.** The OIS-x sensor **530** may detect the movement of the OIS-x magnet **510.** The movement amount or position of the OIS-x magnet **510** detected by the OIS-x sensor **530** may be used for feedback of hand shake correction driving in an x-axis direction.

The lens driving device **10** may comprise an OIS-x yoke **540.** The OIS-x yoke **540** may be disposed in the OIS-x magnet **510.** The OIS-x yoke **540** may be disposed between the OIS-x magnet **510** and the OIS carrier **310.** The OIS-x yoke **540** may enhance the interaction force with the OIS-x coil **520** by preventing magnetic flux leakage of the OIS-x magnet **510.**

The lens driving device **10** may comprise an OIS-y driving part **600.** The OIS driving part may comprise an OIS-y driving part **600.** The OIS-y driving part **600** may move the OIS carrier **310** in a y-axis direction perpendicular to both the optical axis and the x-axis direction. The OIS-y driving part **600** may move the OIS carrier **310** in a y-axis direction perpendicular to both the optical axis and the x-axis direction through electromagnetic force. The OIS-y driving part **600** may comprise a coil and a magnet.

In a first embodiment of the present invention, the OIS-y magnet **610** and the OIS-y coil **620** may move the OIS moving part **300** in a second direction perpendicular to the optical axis direction and the first direction. At this time, the second direction may be a y-axis direction. Due to the interaction between the OIS-y coil **620** and the OIS-y magnet **610,** the OIS carrier **310** can move in a y-axis direction perpendicular to both the optical-axis direction and the x-axis direction. The OIS-y magnet **610** and the OIS carrier **310** may move integrally in a y-axis direction. The OIS-y magnet **610** may be overlapped with the AF magnet **410** in a second direction. The OIS-y magnet **610** may be overlapped with the AF magnet **410** in a y-axis direction.

The lens driving device **10** may comprise an OIS-y magnet **610.** The OIS-y driving part **600** may comprise an OIS-y magnet **610.** The OIS-y magnet **610** may be 'OIS-y magnet'. The OIS-y magnet **610** may be a permanent magnet. The OIS-y magnet **520** may be disposed in the OIS moving part **300.** The OIS-y magnet **610** may be spaced apart from the OIS-x magnet **510.** The OIS-y magnet **610** may be spaced apart from the AF magnet **410.** The OIS-y magnet **610** may be disposed in the OIS carrier **310.** The OIS-y magnet **610** may be disposed on an outer side surface of the OIS carrier **310.** The OIS-y magnet **610** may be fixed to the OIS carrier **310.** The OIS-y magnet **610** may be coupled to the OIS carrier **310.** The OIS-y magnet **610** may be attached to the OIS carrier **310** with an adhesive. The OIS-y magnet **610** may be disposed inside the cover **120.** The OIS-y magnet **610** may interact with the OIS-y coil **620.** The OIS-y magnet **610** may interact electromagnetically with the OIS-y coil **620.** The OIS-y magnet **610** may be disposed at a position corresponding to the OIS-y coil **620.** The OIS-y magnet **610** and the OIS-y coil **620** may face each other. The OIS-y magnet **610** may face the OIS-y coil **620.** The OIS-y magnet **610** may be overlapped with the OIS-y coil **620** in a direction perpendicular to the optical axis. The OIS-y magnet **610** may be overlapped with the OIS-y coil **620** in a y-axis direction. The OIS-y magnet **610** may move in a y-axis direction.

The OIS-y magnet **610** may be a two-pole magnet. The OIS-y magnet **610** may comprise a two-pole magnetized magnet. The OIS-y magnet **610** may comprise an N pole and an S pole.

The lens driving device **10** may comprise an OIS-y coil **620.** The OIS-y driving part **600** may comprise an OIS-y coil **620.** The OIS-y coil **620** may interact with the OIS-y magnet **610.** The OIS-y coil **620** may be disposed at an opposite side of the AF coil **420** with respect to the optical axis. The OIS-y coil **620** may move the OIS-y magnet **610** in a y-axis direction perpendicular to both the optical axis and the x-axis. The OIS-y coil **620** may move the OIS-y magnet **610** in a y-axis direction through interaction with the OIS-y magnet **610.** The OIS-y coil **620** may face the OIS-y magnet **610.** The OIS-y coil **620** and the OIS-y magnet **610** may face each other. The OIS-y coil **620** may be disposed at a position corresponding to the OIS-y magnet **610.** The OIS-y coil **620** may be overlapped with the OIS-y magnet **610** in a direction perpendicular to the optical axis. The OIS-y coil **620** may be disposed in the inner substrate **720.** The OIS-y coil **620** may be disposed in the AF carrier **200.**

In a first embodiment of the present invention, the OIS-y coil **620** may move together with the AF moving part **200.** The OIS-y coil **620** may move in an optical axis direction together with the AF moving part **200.** During the AF driving process, the OIS-y coil **620** may move along with the AF moving part **200** in an optical axis direction. The OIS-y coil **620** may be disposed in the AF moving part **200.** The OIS-y coil **620** may be fixed to the AF moving part **200.** The OIS-y coil **620** may be coupled to the AF moving part **200.**

The lens driving device **10** may comprise an OIS-y sensor **630.** The OIS-y driving part **600** may comprise an OIS-y sensor **630.** The OIS-y sensor **630** may be disposed in the inner substrate **720.** The OIS-y sensor **630** may comprise a Hall sensor. The OIS-y sensor **630** may detect the OIS-y magnet **610.** The OIS-y sensor **630** may detect the magnetic force of the OIS-y magnet **610.** The OIS-y sensor **630** may be disposed above the OIS-y magnet **620.** The OIS-y sensor **630** may be overlapped with the OIS-y magnet **620** in an optical axis direction. The OIS-y sensor **630** may be overlapped with the OIS-y magnet **620** in a direction perpendicular to the optical axis. In a modified embodiment, the OIS-y sensor **630** may be disposed inside the OIS-y coil **620.** The OIS-y sensor **630** may be overlapped with the OIS-y coil **620** in an optical axis direction. The OIS-y sensor **630** may face the OIS-y magnet **610.** The OIS-y sensor **630** may be disposed at a position corresponding to the OIS-y magnet **610.** The OIS-y sensor **630** may detect the movement of the OIS-y magnet **610.** The movement amount or position of the OIS-y magnet **610** detected by the OIS-y sensor **630** may be used for feedback of hand shake correction driving in a y-axis direction.

The lens driving device **10** may comprise an OIS-y yoke **640.** The OIS-y yoke **640** may be disposed in the OIS-y magnet **610.** The OIS-y yoke **640** may be disposed between the OIS-y magnet **610** and the OIS carrier **310.** The OIS-y yoke **640** may prevent magnetic flux leakage of the OIS-y magnet **610** to enhance interaction force with the OIS-y coil **620.**

When viewed from above, the AF magnet **410,** the AF coil **420,** the OIS-y magnet **610,** and the OIS-y coil **620** may be sequentially disposed on an imaginary straight line. When viewed from an upper surface, the AF magnet **410,** the AF coil **420,** the OIS-y magnet **610,** and the OIS-y coil **620** may be sequentially disposed on an imaginary straight line. When viewed from above, the AF magnet **410,** the AF coil **420,** the OIS-y magnet **610,** and the OIS-y coil **620** may be disposed in order. When viewed from above, the AF magnet **410,** the AF coil **420,** the OIS-y magnet **610,** and the OIS-y coil **620** may be sequentially disposed in a y-axis direction. When viewed from above, the AF magnet **410,** the AF coil **420,** the OIS-y magnet **610,** and the OIS-y coil **620** may be overlapped in a y-axis direction.

The lens driving device **10** may comprise substrates **710** and **720.** The substrates **710** and **720** may comprise a flexible printed circuit board (FPCB). The substrates **710** and **720** may be electrically connected to the coils **420, 520,** and **620.** The substrates **710** and **720** may be electrically connected to the sensors **430, 530,** and **630.**

The lens driving device **10** may comprise an outer substrate **710.** An outer substrate **710** may be disposed in the base **110.** The outer substrate **710** may be electrically connected to the coils **420, 520,** and **620.** The outer substrate **710** may be electrically connected to the sensors **430, 530,** and **630.** The outer substrate **710** may connect the AF carrier **210** and the base **110.** The outer substrate **710** may elastically connect the AF carrier **210** and the base **110.** The outer substrate **710** may connect the fixed part **100** and the inner substrate **720.** The outer substrate **710** may movably support the AF carrier **210** against the base **110.** The outer substrate **710** may guide the AF carrier **210** to move in an optical axis direction against the base **110.** The outer substrate **710** may comprise a flexible substrate. The outer substrate **710** may comprise a flexible printed circuit board (FPCB). The outer substrate **710** may comprise an elastic portion. The outer substrate **710** may comprise an elastic member. The outer substrate **710** may comprise an outer side portion **711** being disposed in the fixed part **100** and a connection part **712** being extended from the outer side portion **711** and coupled to the inner substrate **720.**

The outer substrate **710** may comprise an outer side portion **711.** The outer side portion **711** may be disposed in the base **110.** The outer side portion **711** may be formed to surround the side surface of the base **110.** The outer side portion **711** may be disposed on three side surfaces of the base **110.** The outer side portion **711** may comprise two terminal units. The two terminal units may be disposed opposite to each other with respect to the optical axis. The terminal unit may comprise a terminal **711-1.**

The outer substrate **710** may comprise a terminal **711-1.** The outer side portion **711** of the outer substrate **710** may comprise a terminal **711-1.** The terminal **711-1** may be electrically connected to the terminal **712-1.** The terminal **711-1** may be disposed in a lower end portion of the base **110.** The terminal **711-1** may be coupled to the printed circuit board **50.** The terminal **711-1** may be coupled to a terminal of the printed circuit board **50** through soldering. The terminal **711-1** may be coupled to a terminal of the printed circuit board **50** through a conductive member. The terminal **711-1** may be connected to a terminal of the printed circuit board **50.** The terminal **711-1** may be electrically connected to a terminal of the printed circuit board **50.**

The outer substrate **710** may comprise a connection part **712.** The connection part **712** may be an 'extension part'. The connection part **712** may be a 'leg part'. The connection part **712** may be extended from the outer side portion **711.** At least a portion of the connection part **712** may move along with the AF carrier **210.** The extension part may be extended from the outer side portion **711.** At least a portion of the extension part may move together with the AF carrier **210.** At least a portion of the connection part **712** may be disposed perpendicular to the optical axis direction. The connection part **712** of the outer substrate **710** may be coupled with the inner substrate **720** so that the inner substrate **720** can move in an optical axis direction. At least a portion of the connection part **712** may be disposed parallel to an optical axis direction.

The connection part **712** may comprise a plurality of connection parts. The connection part **712** may comprise a first connection part and a second connection part. The second connection part may be disposed under the first connection part.

The outer substrate **710** may comprise a terminal **712-1.** The connection part **712** of the outer substrate **710** may comprise a terminal **712-1.** The terminal **712-1** may be coupled with the terminal **721-1** of the inner substrate **720.** The terminal **712-1** of the outer substrate **710** may be coupled to the terminal **721-1** of the inner substrate **720** through soldering. The terminal **712-1** of the outer substrate **710** may be coupled to the terminal **721-1** of the inner substrate **720** through a conductive member. The terminal **712-1** of the outer substrate **710** may be connected to the terminal **721-1** of the inner substrate **720.** The terminal **712-1** of the outer substrate **710** may be electrically connected to the terminal **721-1** of the inner substrate **720.**

The outer substrate **710** may comprise a bent part **712-2.** The bent part **712-2** may be formed in the connection part **712.** The bent part **712-2** may be formed in each of the first connection part and the second connection part. The bent part **712-2** may comprise a shape bent at least twice. The bent part **712-2** may comprise a shape bent in a U shape. The bent part **712-2** may have a rounded shape. The bent part **712-2** may comprise a part disposed parallel to an optical axis.

Hereinafter, one of the 'terminal **711-1'** and the 'terminal **712-1'** of the outer substrate **710** may be referred to as a 'first terminal', and the other may be referred to as a 'second terminal'.

The lens driving device **10** may comprise an inner substrate **720.** The inner substrate **720** may be electrically connected to the coils **420, 520,** and **620.** The inner substrate **720** may be electrically connected to the sensors **430, 530,** and **630.** The inner substrate **720** may be disposed in the AF moving part **200.** The inner substrate **720** may be disposed in the AF carrier **210.** The inner substrate **720** may be fixed to the AF carrier **210.** The inner substrate **720** may be coupled to the AF carrier **210.** The inner substrate **720** may be attached to the AF carrier **210** with an adhesive. The inner substrate **720** may comprise a flexible substrate. The inner substrate **720** may comprise a flexible printed circuit board (FPCB). The inner substrate **720** may comprise an elastic portion. The inner substrate **720** may comprise an elastic member.

The inner substrate **720** may comprise a side plate portion **721.** The side plate portion **721** may be disposed on a side surface of the AF carrier **210.** The side plate portion **721** may be disposed on an outer side surface of the AF carrier **210.** In another embodiment, the side plate portion **721** may be disposed on an inner surface of the AF carrier **210.** The side plate portion **721** of the inner substrate **720** may comprise a plurality of portions. The side plate portion **721** may comprise first to fourth portions.

The inner substrate **720** may comprise a first portion. The first portion may be disposed in the AF carrier **210.** The AF coil **420** may be disposed in a first portion of the inner substrate **720.** The AF sensor **430** may be disposed in a first portion of the inner substrate **720.** The AF yoke **440** may be disposed on a first portion of the inner substrate **720.**

The inner substrate **720** may comprise a second portion. The second portion can be placed at an opposite side of the first portion. The second portion may be disposed in the AF carrier **200.** The second portion may be disposed on a second side surface of the AF carrier **200.** The OIS-y coil **620** may be disposed in a second portion of the inner substrate **720.** The OIS-y sensor **630** may be disposed in a second portion of the inner substrate **720.** More specifically, the OIS-y sensor **630** may be disposed in the upper plate portion **722** which is bent and disposed above a second portion of the inner substrate **720.** The OIS-y sensor **630** may be disposed on a lower surface of the upper plate portion **722.**

The inner substrate **720** may comprise a third portion. A third portion may be disposed in the AF carrier **200.** The third portion may be disposed on a third side surface of the AF carrier **200.** The OIS-x coil **520** may be disposed in a third portion of the inner substrate **720.** The OIS-x sensor **530** may be disposed in a third portion of the inner substrate **720.** In more detail, the OIS-x sensor **530** may be disposed in the upper plate portion **722** bent from an upper side of the third portion of the inner substrate **720.** The OIS-x sensor **530** may be disposed on a lower surface of the upper plate portion **722.**

The inner substrate **720** may comprise a fourth portion. The fourth portion may be disposed at an opposite side of the third portion. The fourth portion may be disposed in the AF carrier **200.** The fourth portion may be disposed on a fourth side surface of the AF carrier **200.**

The inner substrate **720** may comprise a terminal **721-1.** The terminal **721-1** may be disposed in the fourth portion of the inner substrate **720.** The terminal 721-1 may be electrically connected to the coils **420, 520,** and **620.** The terminal **721-1** may be electrically connected to the sensors **430, 530,** and **630.**

The lens driving device **10** may comprise a guide member. The guide member may comprise a ball. The guide member may comprise a pin. The guide member may comprise a cylindrical member. The guide member may guide the movement of the moving part against the fixed part **100** in a specific direction.

The lens driving device **10** may comprise an AF guide ball **810.** The AF guide ball **810** may guide the movement of the AF moving part **200** against the fixed part **100** in an optical axis direction. The AF guide ball **810** may guide the movement of the AF carrier **210** against the base **110** in an optical axis direction. The AF guide ball **810** may be disposed between the fixed part **100** and the AF moving part **200.** The AF guide ball **810** may be disposed between the base **110** and the AF carrier **210.** The AF guide ball **810** may be disposed between the base **110** and the AF carrier **210** in an x direction. Or, the AF guide ball **810** may be disposed between the base **110** and the AF carrier **210** in a y direction. The AF guide ball **810** may be disposed in a groove of the base **110.** The AF guide ball **810** may be disposed in a groove of the AF carrier **210.** The AF guide ball **810** may have a spherical shape. The AF guide ball **810** may be formed of metal. Grease may be applied to the surface of the AF guide ball **810.**

The AF guide ball **810** may be disposed at a first corner of the base **110.** The AF guide ball **810** may be disposed at a second corner in a diagonal direction of the first corner of the base **110.** The AF guide ball **810** may be disposed at each of the first corner and the second corner of the base **110.** The first corner region and the second corner region of the fixed part **100** may be disposed in diagonal directions with respect to an optical axis. The AF guide balls **810** may be disposed in the first corner region and the second corner region of the fixed part **100.** Two sets of AF guide balls **810** may be disposed at each of the first corner and the second corner of the base **110.** At this time, one set may comprise 4 balls. The two sets may be disposed at an opposite side of the pillar part of the AF carrier **210** from each other.

When viewed from above, the AF guide ball **810** may comprise: a first unit ball being disposed in a first corner region of the fixed part **100;** and a second unit ball being disposed in a second corner region disposed in a diagonal direction of the first corner region of the fixed part **100.** At this time, when viewed from above, the OIS guide member **820** may comprise: a first guide member being spaced apart from each other and disposed between the first unit ball and the second unit ball of the AF guide ball **810** in a diagonal direction; and a second guide member.

When viewed from above, the AF guide ball **810** may comprise: a first unit ball and a second unit ball being disposed in a first corner region of the fixed part **100;** and a third unit ball and a fourth unit ball being disposed in a second corner region being disposed in a diagonal direction of the first corner region of the fixed part **100.** The AF guide ball **810** may be disposed in two sets at one corner.

The AF guide ball **810** may comprise a ball being overlapped with the OIS guide member **820** in a direction perpendicular to the optical axis direction. At least a portion of the AF guide ball **810** may be overlapped with the OIS guide member **820.**

The AF guide ball **810** may comprise an inner ball **811.** The inner ball **811** may be disposed in the pillar part **111** of the base **110.** The inner ball **811** may be disposed in the inner groove **111-1** of the base **110.** The inner ball **811** may be disposed in the inner groove **224-1** of the AF carrier **210.** The inner ball **811** may be disposed in the inner groove **224-1** of the AF moving part **200.** The inner ball **811** may be disposed in the inner groove **111-1** of the base **110** and the inner groove **224-1** of the AF carrier **210.** The inner ball **811** may be disposed between the inner groove **111-**1 of the base **110** and the inner groove **224-1** of the AF carrier **210.** The inner ball **811** may be disposed between the AF moving part **200** and the pillar part **111** of the fixed part **100.**

The AF guide ball **810** may comprise an outer ball **812.** The outer ball **812** may be disposed in the outer wall part **112** of the base **110.** The outer ball **812** may be disposed in the outer groove **112-1** of the base **110.** The outer ball **812** may be disposed in the outer groove **224-2** of the AF carrier **210.** The outer ball **812** may be disposed in the outer groove **112-1** of the base **110** and the outer groove **224-2** of the AF carrier **210.** The outer ball **812** may be disposed between the outer groove **112-1** of the base **110** and the outer groove **224-2** of the AF carrier **210.** The outer ball **812** may be disposed between the outer groove **112-1** of the fixed part **100** and the outer groove **224-2** of the AF moving part **200.** The outer ball **812** may be disposed between the AF moving part **200** and the outer wall part **112** of the fixed part **100.**

The inner ball **811** may comprise a plurality of inner balls **811.** The plurality of inner balls **811** may be disposed in an optical axis direction. The inner ball **811** may comprise four inner balls **811.** The inner ball **811** may comprise first to fourth inner balls. Two of the four inner balls **811** may have a large diameter and the other two may have a small diameter. Two balls with a large diameter can be disposed at an uppermost place and at a lowermost place. That is, two balls with a small diameter may be disposed between the two balls with a large diameter.

The inner ball **811** may comprise an uppermost inner ball **811-1.** The uppermost inner ball **811-1** may be disposed at a highest point among the inner balls **811.** The uppermost inner ball **811-1** may be disposed closest to the upper plate **121** of the cover **120** among the inner balls **811.** The inner ball **811** may comprise a lowermost inner ball **811-2.** The lowermost inner ball **811-2** may be disposed at a lowest point among the inner balls **811.** The lowermost inner ball **811-2** may be disposed closest to the lower plate portion of the base **110** among the inner balls **811.** The plurality of inner balls **811** may comprise balls having a smaller diameter than each of the uppermost inner ball **811-1** and the lowermost inner ball **811-2.** The plurality of inner balls **811** may comprise balls being disposed between the uppermost inner ball **811-1** and the lowermost inner ball **811-2.**

The outer ball **812** may comprise a plurality of outer balls **812.** The plurality of outer balls **812** may be disposed in an optical axis direction. The outer ball **812** may comprise four outer balls **812.** The outer ball **812** may comprise first to fourth outer balls. Two of the four outer balls **812** may have a large diameter and the other two may have a small diameter. Two balls with a large diameter can be disposed at an uppermost place and at a lowermost place. That is, two balls with a small diameter may be disposed between the two balls with a large diameter.

The outer ball **812** may comprise an uppermost outer ball **812-1.** The uppermost outer ball **812-1** may be disposed at a highest point among the outer balls **812.** The uppermost outer ball **812-1** may be disposed closest to the upper plate **121** of the cover **120** among the outer balls **812.** The outer ball **812** may comprise a lowermost outer ball **812-2.** The lowermost outer ball **812-2** may be disposed at a lowest point among the outer balls **812.** The lowermost outer ball **812-2** may be disposed closest to a lower plate portion of the base **110** among the outer balls **812.** The plurality of outer balls **812** may comprise balls having a smaller diameter than each of the uppermost outer ball **812-1** and the lowermost outer ball **812-2.** The plurality of outer balls **812** may comprise balls being disposed between the uppermost outer ball **812-1** and the lowermost outer ball **812-2.**

The AF guide ball **810** may comprise a plurality of balls being disposed in an optical axis direction. At this time, the plurality of balls may comprise uppermost balls **811-1** and **812-1** being disposed at a highest point and lowermost balls **811-2** and **812-2** being disposed at a lowest point. The height of the point where the elastic member **920** presses the plate member **910** may be disposed between the heights of the uppermost balls **811-1** and **812-1** and the heights of the lowermost balls **811-2** and **812-2.**

The lens driving device **10** may comprise an OIS guide member **820.** The OIS guide member **820** may be a guide member. The OIS guide member **820** may be a guide unit. The OIS guide member **820** may be a guide plate. The OIS guide member **820** may be a guide plate. The OIS guide member **820** may be a guide structure.

The OIS guide member **820** may guide the movement of the OIS carrier **310** against the AF carrier **210** in a direction perpendicular to the optical axis. The OIS guide member **820** may be disposed between the AF moving part **200** and the OIS moving part **300.** The OIS guide member **820** may be disposed between the AF carrier **210** and the OIS carrier **310.** The OIS guide member **820** may be disposed between the AF carrier **210** and the OIS carrier **310** in an optical axis direction.

The OIS guide member **820** may be disposed between the pre-pressurizing member **230** of the AF carrier **210** and the OIS carrier **310.** The OIS guide member **820** may be pressed between the AF carrier **210** and the OIS carrier **310** by the pressing force of the elastic members **830, 840,** and **850.** The pre-pressurizing member **230** may press the OIS guide member **820** downward while being coupled to the holder member **220.** The pre-pressurizing member **230** may press the OIS guide member **820** in a direction of the OIS carrier **310** while being coupled to the holder member **220.** At this time, the OIS carrier **310** may press the OIS guide member **820** in a direction of the pre-pressurizing member **230** by the restoring force of the elastic members **830, 840,** and **850.** Accordingly, the OIS guide member **820** may be pressed between the pre-pressurizing member **230** and the OIS carrier **310.**

The OIS guide member **820** may guide the movement of the OIS moving part **300** in an x-axis direction and a y-axis direction. The OIS guide member **820** may guide the OIS carrier **310** to move in an x-axis direction and a y-axis direction perpendicular to an optical axis direction against the AF carrier **210.** That is, the OIS guide member **820** may guide the OIS carrier **310** to move in an x-axis direction and a y-axis direction. In other words, the OIS guide member **820** may guide the movement in both the x-axis direction and the y-axis direction. For reference, compared to the comparative example in which the ball for guiding the x-axis direction and the ball for guiding the y-axis direction are separately provided, the size of the lens driving device **10** can be minimized in a first embodiment of the present invention in which a structure for guiding the x-axis direction and a structure for guiding the y-axis direction are integrally provided. In particular, the height of the lens driving device **10** in an optical axis direction can be reduced. Through this, the height being protruded from the smartphone, that is, the shoulder height can be minimized. The OIS guide member **820** may comprise a plurality of guide members. The OIS guide member **820** may comprise four guide members.

As a modified embodiment, the OIS guide member **820** may separately comprise a guide member for guiding the driving in an x-axis direction and a guide member for guiding the driving in a y-axis direction.

In a first embodiment of the present invention, the OIS guide member **820** may guide both the movement of the OIS moving part **300** in an x-axis direction and a y-axis direction. However, in a modified embodiment, the OIS guide member **820** may comprise a first member for guiding the movement of the OIS moving part **300** in an x-axis direction and a second member for guiding the movement of the OIS moving part **300** in a y-axis direction. At this time, the first member and the second member may be spaced apart. In a modified embodiment, the OIS moving part **300** may comprise an OIS-x moving part and an OIS-y moving part being disposed inside the OIS-x moving part. The first member may be disposed between the AF moving part 200 and the OIS-x moving part. The second member may be disposed between the OIS-x moving part and the OIS-y moving part. Each of the first member and the second member may comprise a protruding part **822.**

The OIS guide member **820** may be disposed between the AF moving part **200** and the OIS moving part **300.** The OIS guide member **820** may be formed of a metal member. The OIS guide member **820** may be made of metal. The OIS guide member **820** may be formed of the same material as the plate member **825.** The OIS guide member **820** may be made of the same material as the plate member **825.** The OIS guide member **820** may be formed of the same material as the plate member **825.** The OIS guide member **820** may have a point contact structure. The OIS guide member **820** may be in contact with the AF moving part **200** at one point. The OIS guide member **820** may be formed of brass. The OIS guide member **820** may be formed of phosphor bronze. The OIS guide member **820** may be formed of a copper material. The OIS guide member **820** may be formed of a material different from that of the cover **120.**

The OIS guide member **820** may comprise a plate portion **821.** The plate portion **821** may be disposed in the OIS moving part **300.** The plate portion **821** may be disposed in the OIS moving part **300** through insert injection. The plate portion **821** may be integrally formed with the OIS moving part **300.**

The OIS guide member **820** may comprise a protruding part **822.** The protruding part **822** may be fixed to the OIS moving part **300.** The protruding part **822** may come into contact with the AF moving part **200.** The protruding part **822** may be in contact with the AF moving part **200** at one point.

The OIS guide member **820** may comprise a plurality of OIS guide members. The OIS guide member **820** may comprise four OIS guide members. The OIS guide member **820** may comprise first to fourth OIS guide members. The four OIS guide members may be spaced apart from each other. Each of the four OIS guide members may comprise a protruding part **822.** Each of the protruding parts **822** of the four OIS guide members may be in contact with the AF moving part **200** at one point. Accordingly, the four OIS guide members may be in contact with the AF moving part **200** at four points. That is, the OIS guide member **820** and the AF moving part **200** may be in contact with as many points as the number of OIS guide members. Furthermore, a contact point between the protruding part **822** of the OIS guide member **820** and the AF moving part **200** may be recognized as a surface when magnified. That is, the protruding part **822** of the OIS guide member **820** may be in contact with the AF moving part **200** at one area.

The protruding part **822** may be formed by bending a metal plate. The protruding part **822** may be integrally formed with the plate portion **821.** The protruding part **822** may be protruded from the plate portion **821** toward the OIS moving part **300.** The protruding part **822** may be in contact with the plate member **825.** The protruding part **822** may be overlapped with the wire **850** in a direction perpendicular to the optical axis direction. The protruding part **822** may be overlapped with the upper elastic member **850** in a direction perpendicular to the optical axis direction. In a direction perpendicular to the optical axis direction, the AF coil **420** may comprise a portion being disposed between the AF magnet **410** and the protruding part **822** of the OIS guide member **820.** Or, when viewed on the cross-sectional view of FIG. 35, the AF coil **420** may comprise a portion being disposed between the AF magnet **410** and the protruding part **822** of and the OIS guide member **820** in a direction perpendicular to the optical axis.

The protruding part **822** may comprise a curved surface. The protruding part **822** may be protruded in a round shape. The protruding part **822** may have a curvature. The protruding part **822** may have a hemispherical shape. As a modified embodiment, the protruding part **822** may comprise a conical shape. In another modified embodiment, the protruding part **822** may comprise a trapezoidal cross-sectional shape. The protruding part **822** may be formed to be convex upward.

The opposite side of the protruding part **822** may have a corresponding groove shape. However, in a modified embodiment, the opposite side of the protruding part **822** may be formed as a plane. That is, the opposite side of the protruding part **822** may be a shape fully filled without being depressed. Or, the opposite side of the protruding part **822** may be a shape partially filled. That is, the thickness of the protruding part **822** may be greater than the thickness of the plate portion **821.**

The lens driving device **10** may comprise a plate member **825.** The AF moving part **200** may comprise a plate member **825.** The plate member **825** may be formed of a metal member. The plate member **825** may be formed of metal. The plate member **825** may be formed in a circular shape. An OIS guide member **820** may be disposed in the plate member **825.** A protruding part **822** of the OIS guide member **820** may be disposed in the plate member **825.** The plate member **825** may come into contact with the OIS guide member **820.** The plate member **825** may come into contact with the protruding part **822** of the OIS guide member **820.** The plate member **825** may be disposed in the pre-pressurizing member **230.** The plate member **825** may be disposed on the protruding part **231** of the pre-pressurizing member **230.** The plate member **825** may be disposed in the groove **232** of the pre-pressurizing member **230.**

The plate member **825** may be formed of brass. The plate member **825** may be formed of phosphor bronze. The plate member **825** may be formed of a copper material. The plate member **825** may be formed of a material different from that of the cover **120.**

In a modified embodiment, the plate member **825** may be omitted. In this case, the OIS guide member **820** may be directly in contact with the pre-pressurizing member **230.** The OIS guide member **820** may be directly in contact with the AF moving part **200.**

However, when the plate member **825** is provided, frictional force between the OIS guide members **820** may be minimized compared to a modified embodiment. In addition, when the plate member **825** is provided, flatness management may be advantageous. The plate member **825** may be formed of a member with minimized frictional force.

In a first embodiment of the present invention, the OIS guide member **820** may be disposed in the OIS moving part **300.** At this time, the plate member **825** may be disposed in the AF moving part **200.** However, in a modified embodiment, the OIS guide member **820** may be disposed in the AF moving part **200.** At this time, the plate member **825** may be disposed in the OIS moving part **300.** In a modified embodiment, the OIS guide member **820** may comprise a protruding part **822** being fixed to the AF moving part **200** and in contact with the OIS moving part **300.** In a modified embodiment, the OIS guide member **820** may comprise a protruding part **822** that is convex downward.

The lens driving device **10** may comprise an elastic member. The elastic member may be formed to support the OIS driving. The elastic member may support the movement of the OIS moving part **300.** The elastic member may be formed to press the OIS guide member **820.** The elastic member may be formed to guide both the OIS-x-axis driving and the OIS-y-axis driving only with the OIS guide member **820.** The elastic member may comprise a leaf spring. The elastic member may comprise a wire. The elastic member may have elasticity. The elastic member may be formed of metal.

The elastic member may press the OIS guide member **820** in a direction of the AF moving part **200.** The elastic member may press the OIS moving part **300** in a direction of the AF moving part **200.** At this time, the elastic member may comprise an upper elastic member **830,** a lower elastic member **840,** and a wire **850.**

The first support member may be disposed between the fixed part **100** and the AF moving part **200.** The first support member may guide the AF moving part **200** to move in an optical axis direction. The second support member may be disposed between the AF moving part **200** and the OIS moving part **300.** The second support member may guide the OIS moving part **300** to move in a direction perpendicular to the optical axis direction. One side of the third support member may be coupled to the AF moving part **200** and the other side may be coupled to the OIS moving part **300.**

The AF moving part **200** may comprise a first elastic member. The OIS moving part **300** may comprise a second elastic member. The third support member may couple the first elastic member and the second elastic member. The third support member may comprise a wire **850.**

The lens driving device **10** may comprise an upper elastic member **830.** The upper elastic member **830** may be an 'upper spring'. The upper elastic member **830** may be a leaf spring. The upper elastic member **830** may have elasticity. The upper elastic member **830** may be disposed in the OIS moving part **300.** The upper elastic member **830** may be coupled to the OIS moving part **300.** The upper elastic member **830** may be connected to the OIS moving part **300.** The upper elastic member **830** may be disposed on an upper surface of the OIS moving part **300.** The upper elastic member **830** may be disposed on an upper surface of the OIS carrier **310.** The upper elastic member **830** may be disposed in the OIS carrier **310.** The upper elastic member **830** may be disposed at an upper portion of the OIS carrier **310.** The upper elastic member **830** may be disposed above the OIS carrier **310.** The upper elastic member **830** may be disposed perpendicular to the optical axis.

The upper elastic member **830** may comprise an inner side portion **831.** The inner side portion **831** may be coupled to the OIS moving part **300.** The upper elastic member **830** may comprise an outer side portion **832.** The outer side portion **832** may be coupled to the wire **850.** The upper elastic member **830** may comprise a connection part **833.** The connection part **833** may connect the inner side portion **831** and the outer side portion **832.** The connection part **833** may elastically connect the inner side portion **831** and the outer side portion **832.** The connection part **833** may comprise elasticity. The connection part **833** may be an elastic part.

An inner side portion **831** of the upper elastic member **830** may be disposed lower than an outer side portion **832.** The inner side portion **831** of the upper elastic member **830** may be disposed lower than the outer side portion **832** by a first distance. The reason why the inner side portion **831** of the upper elastic member **830** is lower than the outer side portion **832** may be due to the pressing force of the pre-pressurizing member **230.** Through this structure, the OIS guide member **820** can be maintained as it is in contact with the pre-pressurizing member **230** of the AF carrier **210** and the OIS carrier **310.**

The lens driving device **10** may comprise a lower elastic member **840.** The lower elastic member **840** may be a 'terminal on a lower surface of the housing' or a 'plate on a lower surface of the housing'. The lower elastic member **840** may be a leaf spring. The lower elastic member **840** may have elasticity. The lower elastic member **840** may be disposed in the AF moving part **200.** The lower elastic member **840** may be coupled to the AF moving part **200.** The lower elastic member **840** may be connected to the AF moving part **200.** The lower elastic member **840** may be disposed on a lower surface of the AF moving part **200.** The lower elastic member **840** may be disposed on a lower surface of the AF carrier **210.** The lower elastic member **840** may be disposed in the AF carrier **210.** The lower elastic member **840** may be disposed at a lower portion of the AF carrier **210.** The lower elastic member **840** may be disposed below the AF carrier **210.** The lower elastic member **840** may be disposed perpendicular to the optical axis.

The lower elastic member **840** may comprise an outer side portion **841.** The outer side portion **841** may be coupled with the AF moving part **200.** The lower elastic member **840** may comprise an inner side portion **842.** The inner side portion **842** may be coupled to the wire **850.** The lower elastic member **840** may comprise a connection part **843.** The connection part **843** may connect the outer side portion **841** and the inner side portion **842.** The connection part **843** may elastically connect the outer side portion **841** and the inner side portion **842.** The connection part **843** may comprise elasticity. The connection part **843** may be an elastic part.

The lens driving device **10** may comprise a wire **850.** The wire **850** may be a 'side elastic member'. The wire **850** may be a wire. The wire **850** may be a wire spring. The wire **850** may be a suspension wire. The wire **850** may have elasticity. The wire **850** may connect the upper elastic member **830** and the lower elastic member **840.** The wire **850** may elastically connect the upper elastic member **830** and the lower elastic member **840.** The wire **850** may be disposed parallel to an optical axis. The wire **850** may be disposed in an optical axis direction.

The height of the point where the elastic member **920** presses the plate member **910** is lower than the height of the ball being disposed lower among the uppermost inner ball **811-1** and the uppermost outer ball **812-1,** and may be higher than the height of the ball being disposed higher among the lowermost inner ball **811-1** and the lowermost outer ball **812-2.** More specifically, as shown in FIG. 33(a), when the AF moving part **200** moves upward, the height **b** of the point where the elastic member **920** presses the plate member **910** may be higher than the height **a** of the ball being disposed higher among the lowermost inner ball **422** and the lowermost outer ball **412.** A gap **c** may exist at a height between the two points. In addition, as shown in FIG. 33(b), when the AF moving part **200** moves downward, the height e of the point where the elastic member **920** presses the plate member **910** may be lower than the height **d** of the ball being disposed lower among the uppermost inner ball **421** and the uppermost outer ball **411.** A gap **f** may exist at a height between the two points. Through this, generation of a moment generated when the elastic member **920** presses the plate member **910** may be prevented or minimized. That is, a phenomenon in which the plate member **910** is tilted or separated may be prevented.

The lens driving device **10** may comprise a pressing member. The pressing member may be an 'AF guide ball pressing member'. The pressing member may press the AF guide ball **810.** The pressing member may be formed to press a ball. The AF guide ball **810** pressed by the pressing member may be held between the fixed part **100** and the AF moving part **200.** The AF guide ball **810** pressed by the pressing member may be held between the base **110** and the AF carrier **210.** The pressing member may maintain the AF guide ball **810** as it is in contact with the fixed part **100** and the AF moving part **200.** The pressing member may maintain the AF guide ball **810** as it is in contact with the base **110** and the AF carrier **210.**

The lens driving device **10** may comprise a plate member **910.** The pressing member may comprise a plate member **910.** The plate member **910** may be disposed in the AF guide ball **810.** The plate member **910** may be in contact with the AF guide ball **810.** The plate member **910** may be disposed in the elastic member **920.** The plate member **910** may be disposed in the base **110.** The plate member **910** may be disposed between the elastic member **920** and the AF guide ball **810.** The plate member **910** may press the AF guide ball **810** toward the AF carrier **210** by the elastic member **920.** The plate member **910** may be disposed between the AF guide ball **810** and the fixed part **100.** The plate member **910** may be disposed between the inner ball **811** and the pillar part **111** of the fixed part **100.**

The lens driving device **10** may comprise an elastic member **920.** The pressing member may comprise an elastic member **920.** The elastic member **920** may be a spring. The elastic member **920** may be a tapered spring. The elastic member **920** may be disposed in the fixed part **100.** The elastic member **920** may press the AF guide ball **810** toward the AF moving part **200.** The elastic member **920** may press the plate member **910** toward the AF guide ball **810.** The elastic member **920** may be disposed between the plate member **910** and the fixed part **100.** The elastic member **920** may push the plate member **910** against the fixed part **100.** The elastic member **920** may press the plate member **910** in an opposite direction to the fixed part **100.** The elastic member **920** may be disposed between the plate member **910** and the pillar part **111** of the fixed part **100.** The elastic member **920** may be disposed in the inner groove **111-1** of the fixed part **100.**

As a modified embodiment, the elastic member **920** may be disposed in the AF moving part **200.** At this time, the elastic member **920** may press the AF guide ball **810** toward the fixed part **100.** The elastic member **920** may be disposed in one of the fixed part **100** and the AF moving part **200** to press the AF guide ball **810** toward the other one of the fixed part **100** and the AF moving part **200.** The elastic member **920** may press the plate member **910.** The elastic member **920** may be disposed between the plate member **910** and the base **110.** The elastic member **920** may be disposed between the AF guide ball **810** and the base **110.** The elastic member **920** may be disposed in the base **110.** The elastic member **920** may be disposed in the inner groove **111-1** of the base **110.** The elastic member **920** may press the AF guide ball **810** toward the AF carrier **210.** Through this, the AF guide ball **810** can maintain a contact state between the plate member **910** and the AF carrier **210.**

The elastic member **920** may comprise a bent part. The bent part may comprise a bent shape. The bent part may comprise a plurality of bent parts. The bent part may comprise three bent parts. The elastic member **920** may be bent at least three times. The elastic member **920** may comprise an upper bent part **921.** The elastic member **920** may comprise a lower bent part **922.** The elastic member **920** may comprise a connection bent part **923.** The connection bent part **923** may be disposed between the upper bent part **921** and the lower bent part **922.** The upper bent part **921** may form an obtuse angle. The lower bent part **922** may form an obtuse angle. The connection bent part **923** may form an obtuse angle. The upper bent part **921** may be disposed in the fixed part **100.** The lower bent part **922** may be disposed in the fixed part **100.** The connection bent part **923** may be disposed in the plate member **910.** Through this structure, the elastic member **920** may push the plate member **910** against the fixed part **100.** The connection bent part **923** may be in contact with the plate member **910** and press the plate member **910** toward the AF guide ball **810.**

The lens driving device **10** may comprise a reinforcing member **930.** The reinforcing member **930** may be disposed in the base **110.** The reinforcing member **930** may be disposed to reinforce the strength of the base **110.** The reinforcing member **930** may prevent damage to the base **110.** The reinforcing member **930** can prevent the pillar part **111** of the base **110** from damages. The reinforcing member **930** may prevent the outer wall part **112** of the base **110** from damages. The reinforcing member **930** may have elasticity. The reinforcing member **930** may be formed of metal. The reinforcing member **930** may comprise a shape bent at least twice. The reinforcing member **930** may be formed in the shape of a symbol 'c' when viewed from above. The reinforcing member **930** may be opened inward.

The reinforcing member **930** may comprise an inner side portion **931.** The inner side portion **931** may be disposed at an opposite surface of the inner groove **111-1** of the pillar part **111** of the fixed part **100.** The reinforcing member **930** may comprise an outer side portion **932.** The outer side portion **932** may be disposed at an opposite surface of the outer groove **112-1** of the outer wall part **112** of the fixed part **100.** The reinforcing member **930** may comprise a connection part **933.** The connection part **933** may connect the inner side portion **931** and the outer side portion **932.**

The lens driving device **10** may comprise a cover **940.** The cover **940** may be disposed above the AF guide ball **810.** The cover **940** may be overlapped with the AF guide ball **810** in an optical axis direction. The cover **940** may be overlapped with the inner ball **811** in an optical axis direction. The cover **940** may be overlapped with the outer ball **812** in an optical axis direction. The cover **940** may be disposed on the inner groove **224-1** and the outer groove **224-2** of the AF carrier **210** to prevent the AF guide ball **810** from escaping upward.

Hereinafter, auto focus (AF) driving of the lens driving device according to a first embodiment of the present invention will be described with reference to the drawings.

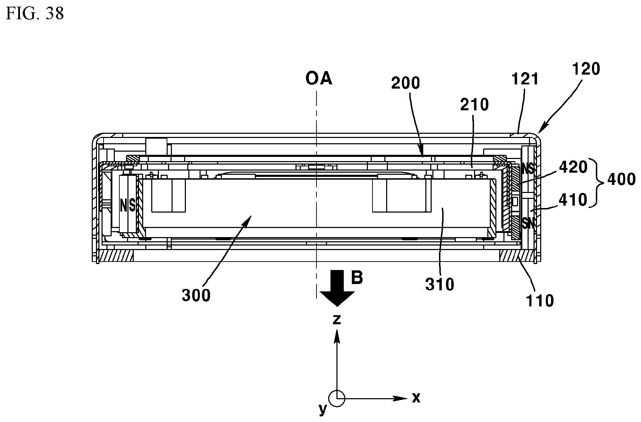

FIGS. 36 to 38 are views for explaining autofocus driving of a lens driving device according to a first embodiment of the present invention. FIG. 36 is a cross-sectional view of a moving part in an initial state in which no current is applied to an AF coil. FIG. 37 is a cross-sectional view illustrating a state in which a moving part moves upward in an optical axis direction when a forward current is applied to an AF coil. FIG. 38 is a cross-sectional view illustrating a moving part moving downward in an optical axis direction when a reverse current is applied to an AF coil.

As illustrated in FIG. 36, the moving part may be disposed at a position spaced apart from both the upper plate **121** of the cover **120** and the base **110** in an initial position where no current is applied to the AF coil **420.** At this time, the moving part may be the AF moving part **200.** In addition, the moving part may comprise the AF moving part **200** and the OIS moving part **300.**

When a forward current is applied to the AF coil **420,** the AF coil **420** may move upward in an optical axis direction due to electromagnetic interaction between the AF coil **420** and the AF magnet **410** (see A in FIG. 37). At this time, the AF carrier **210** together with the AF coil **420** may move upward in an optical axis direction. Furthermore, the OIS carrier **310** and the lens together with the AF carrier **210** may move upward in an optical axis direction. Accordingly, the distance between the lens and the image sensor is changed so that the focus of an image formed on the image sensor through the lens can be adjusted.

When a reverse current is applied to the AF coil **420,** the AF coil **420** may move downward in an optical axis direction due to electromagnetic interaction between the AF coil **420** and the AF magnet **410** (see **B** in FIG. 38). At this time, the AF carrier **210** together with the AF coil **420** may move downward in an optical axis direction. Furthermore, the OIS carrier **310** and the lens together with the AF carrier **210** may move downward in an optical axis direction. Accordingly, the distance between the lens and the image sensor is changed so that the focus of an image formed on the image sensor through the lens can be adjusted.

Meanwhile, during the movement of the AF coil **420,** the AF sensor **430** moves together with the AF coil **420** and detects the strength of the magnetic field of the AF magnet **410** to detect the amount or position of the lens in an optical axis direction. The movement amount or position of the lens in an optical axis direction detected by the AF sensor **430** may be used for autofocus feedback control.

Hereinafter, optical image stabilization (OIS) operation of the lens driving device according to a first embodiment of the present invention will be described with reference to drawings.

FIGS. 39 to 41 are views for explaining hand shake compensation driving of a lens driving device according to a first embodiment of the present invention. FIG. 39 is a cross-sectional view illustrating the appearance of an OIS moving part in an initial state in which no current is applied to an OIS-x coil and an OIS-y coil. FIG. 40 is a cross-sectional view illustrating a state in which an OIS moving part moves in an x-axis direction perpendicular to an optical axis as current is applied to an OIS-x coil. FIG. 41 is a cross-sectional view illustrating a state in which a current is applied to an OIS-y coil so that an OIS moving part moves in a y-axis direction perpendicular to both the optical axis and the x-axis.

As illustrated in FIG. 39, the moving part may be disposed at an initial position in a state in which no current is applied to the OIS-x coil **520** and the OIS-y coil **620.** At this time, the moving part may be the OIS moving part **300.**

When a current is applied to the OIS-x coil **520,** the OIS-x magnet **510** may move in an x-axis direction perpendicular to the optical axis due to electromagnetic interaction between the OIS-x coil **520** and the OIS-x magnet **510** (see **A** in FIG. 40). At this time, the OIS carrier **310** together with the OIS-x magnet **510** may move in an x-axis direction. Furthermore, the lens may move in an x-axis direction together with the OIS carrier **310.** More specifically, when a forward current is applied to the OIS-x coil **520,** the OIS-x magnet **510,** the OIS carrier **310,** and the lens may move in one direction on the x-axis. In addition, when a reverse current is applied to the OIS-x coil **520,** the OIS-x magnet **510,** the OIS carrier **310,** and the lens may move in another direction on the x-axis.

When current is applied to the OIS-y coil **620,** due to the electromagnetic interaction between the OIS-y coil **620** and the OIS-y magnet **610,** the OIS-y magnet **610** can move in a y-axis direction perpendicular to the optical axis (see **B** in FIG. 41). At this time, the OIS carrier **310** together with the OIS-y magnet **610** may move in a y-axis direction. Furthermore, the lens may move in a y-axis direction together with the OIS carrier **310.** More specifically, when a forward current is applied to the OIS-y coil **620,** the OIS-y magnet **610,** the OIS carrier **310,** and the lens may move in one direction on the y-axis. In addition, when a reverse current is applied to the OIS-y coil **620,** the OIS-y magnet **610,** the OIS carrier **310,** and the lens may move in another direction on the y-axis.

Meanwhile, the OIS-x sensor **530** may detect the amount or position of the OIS-x magnet **510** by detecting the strength of the magnetic field of the OIS-x magnet **510.** The movement amount or position detected by the OIS-x sensor **530** may be used for feedback control for hand shake compensation in an x-axis direction. The OIS-y sensor **630** may detect the movement amount or position of the OIS-y magnet **610** by detecting the strength of the magnetic field of the OIS-y magnet **610.** The movement amount or position detected by the OIS-y sensor **630** may be used for hand shake compensation feedback control in a y-axis direction.

Hereinafter, a camera device according to a first embodiment of the present invention will be described with reference to the drawings.

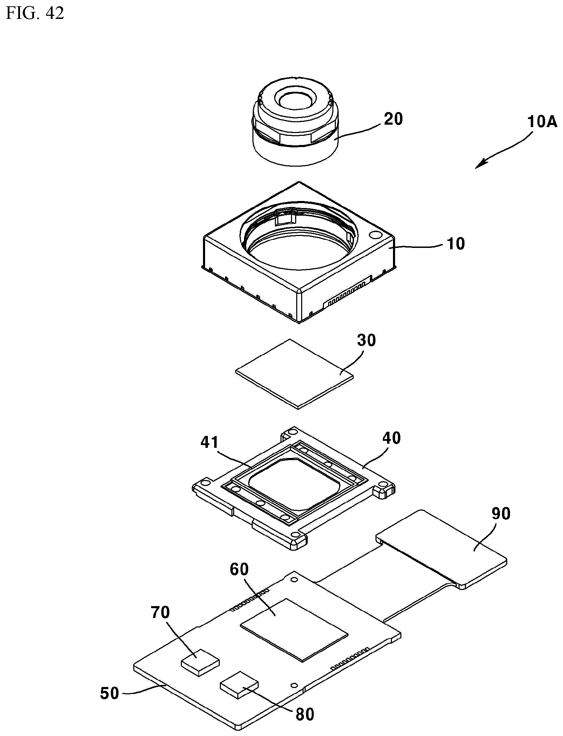

FIG. 42 is an exploded perspective view of a camera device according to a first embodiment of the present invention.

The camera device **10A** may comprise a camera module.

The camera device **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to the OIS carrier **310** of the lens driving device **10.** The lens module **20** may be coupled to the OIS carrier **310** by screw-coupling and/or adhesive. The lens module **20** may move integrally with the OIS carrier **310.**

The camera device **10A** may comprise a filter **30.** The filter **30** may serve to block light of a specific frequency band from entering the image sensor **60** from light passing through the lens module **20.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in base **110.** The filter **30** may comprise an infrared filter. The infrared filter may block light of an infrared region from being incident on the image sensor **60.**

The camera device **10A** may comprise a sensor base **40.** The sensor base **40** may be disposed between the lens driving device **10** and the printed circuit board **50.** The sensor base **40** may comprise a protruding part **41** in which the filter **30** is disposed. An opening may be formed in a portion of the sensor base **40** where the filter **30** is disposed so that light passing through the filter **30** may be incident to the image sensor **60.** The adhesive member may couple or attach the base **110** of the lens driving device **10** to the sensor base **40.** The adhesive member may additionally serve to prevent foreign substances from entering the lens driving device **10.** The adhesive member may comprise any one or more of an epoxy, a thermosetting adhesive, and an ultraviolet curable adhesive.

The camera device **10A** may comprise a printed circuit board (PCB) **50.** The printed circuit board **50** may be a substrate or a circuit board. The lens driving device **10** may be disposed on the printed circuit board **50.** A sensor base **40** may be disposed between the printed circuit board **50** and the lens driving device **10.** The printed circuit board **50** may be electrically connected to the lens driving device **10.** An image sensor **60** may be disposed on the printed circuit board **50.** The printed circuit board **50** may comprise various circuits, elements, and control units to convert an image formed by the image sensor **60** into an electrical signal and transmit the converted electrical signal to an external device.

The camera device **10A** may comprise an image sensor **60.** The image sensor **60** may be a component in which the light passing through the lens and the filter **30** is incident to form an image. The image sensor **60** may be mounted on the printed circuit board **50.** The image sensor **60** may be electrically connected to the printed circuit board **50.** For an example, the image sensor **60** may be coupled to the printed circuit board **50** by a surface mounting technology (SMT). As another example, the image sensor **60** may be coupled to the printed circuit board **50** using a flip chip technology. The image sensor **60** may be disposed such that an optical axis coincides with a lens. That is, the optical axis of the image sensor **60** and the optical axis of the lens may be aligned. The image sensor **60** may convert light being irradiated onto an effective image region of the image sensor **60** into an electrical signal. The image sensor **60** may be any one among a charge coupled device (CCD), a metal oxide semi-conductor (MOS), a CPD, and a CID.

The camera device **10A** may comprise a motion sensor **70.** The motion sensor **70** may be mounted on a printed circuit board **50.** The motion sensor **70** may be electrically connected to a control unit **80** through a circuit pattern provided on the printed circuit board **50.** The motion sensor **70** may output rotational angular velocity information due to the movement of the camera module. The motion sensor **70** may comprise a 2-axis or 3-axis gyro sensor or an angular velocity sensor.

The camera device **10A** may comprise a control unit **80.** The control unit **80** may be disposed in the printed circuit board **50.** The control unit **80** may be electrically connected to the coil **130** of the lens driving device **10.** The control unit **80** may individually control the direction, intensity, and amplitude of current supplied to the coil **130.** The control unit **80** may perform an auto focus function by controlling the lens driving device **10.** The control unit **80** may be electrically connected to the Hall sensor **140.** The control unit **80** may detect the position of the mover **200** through the Hall sensor **140** and perform autofocus feedback control for the lens driving device **10.**

The camera device **10A** may comprise a connector **90.** The connector **90** may be electrically connected to the printed circuit board **50.** The connector **90** may comprise a port for electrical connection with an external device.

Hereinafter, an optical apparatus according to a first embodiment of the present invention will be described with reference to drawings.

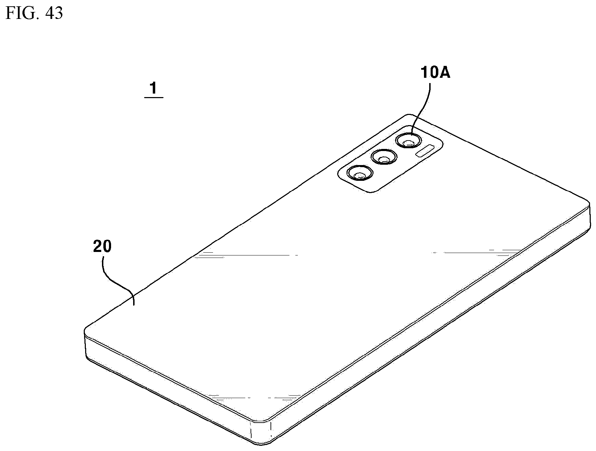

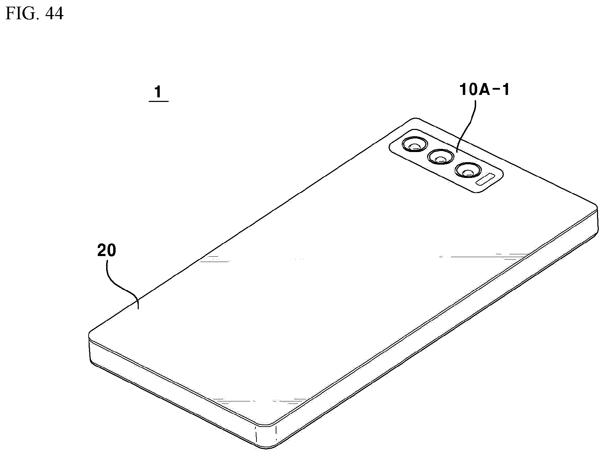

FIG. 43 is a perspective view of an optical apparatus according to a first embodiment of the present invention; and FIG. 44 is a perspective view of an optical apparatus according to a modified embodiment.

The optical apparatus **1** is a mobile phone, mobile phone, portable terminal, mobile terminal, smart phone, smart pad, portable smart device, digital camera, laptop computer, digital broadcasting terminal, personal digital assistants (PDAs), portable multimedia player (PMP), and navigation. The optical apparatus **1** may comprise any device for photographing images or photos.

The optical apparatus **1** may comprise a main body **20.** The optical apparatus **1** may comprise a camera device **10A.** The camera device **10A** may be disposed on the main body **20.** The camera device **10A** may photograph a subject. The optical apparatus **1** may comprise a display. The display may be disposed on the main body **20.** The display may output at least one of a video and an image photographed by the camera device **10A.** The display may be disposed on a first surface of the main body **20.** The camera device **10A** may be disposed on at least one of a first surface of the main body **20** and a second surface opposite to the first surface. As illustrated in FIG. 43, in the camera device **10A,** triple cameras may be disposed in a vertical direction. As illustrated in FIG. 44, in the camera device **10A-1,** triple cameras may be disposed in a horizontal direction.

Hereinafter, the component of a lens driving device according to a second embodiment of the present invention will be described with reference to the drawings.

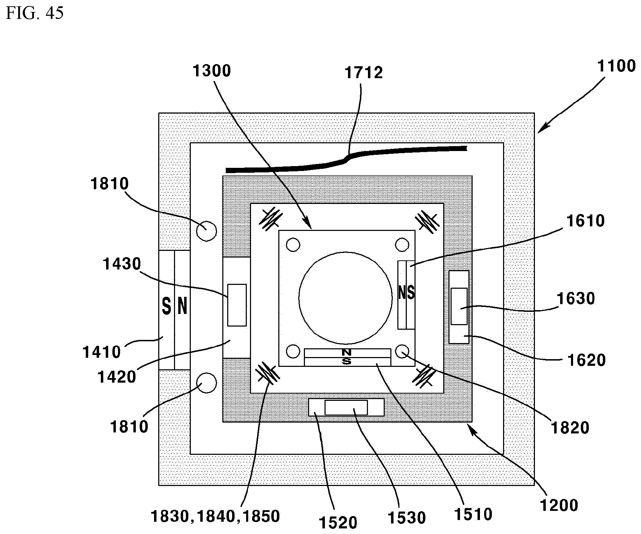

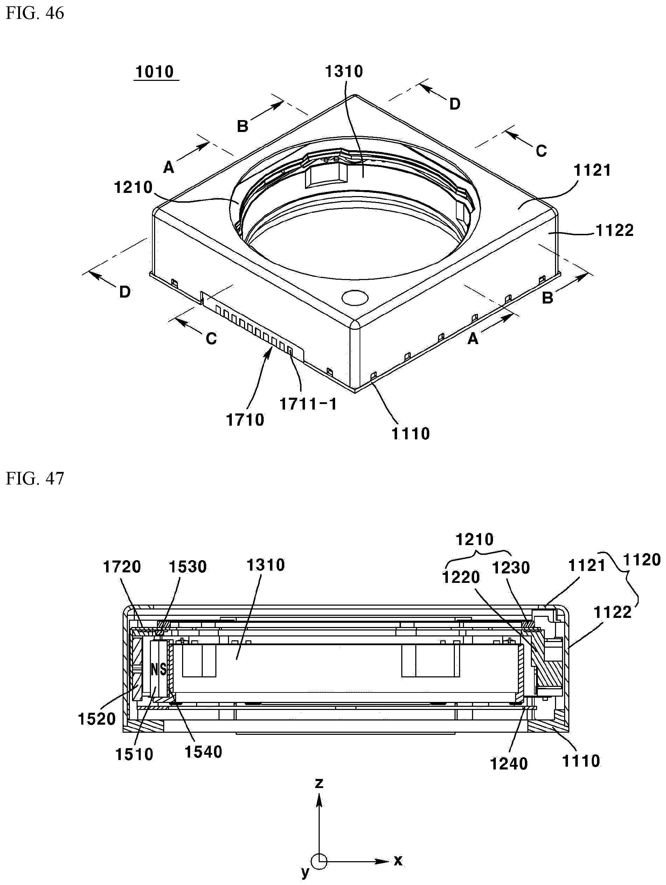

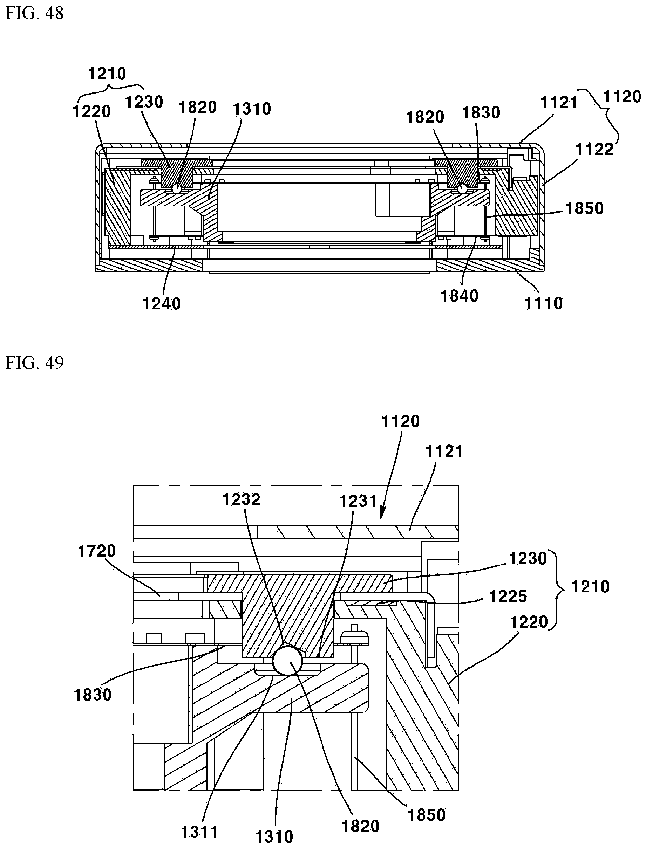

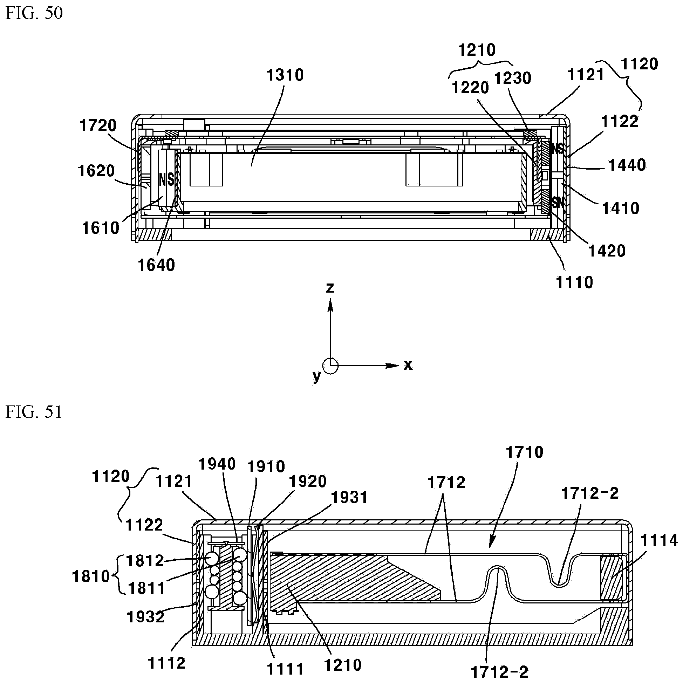

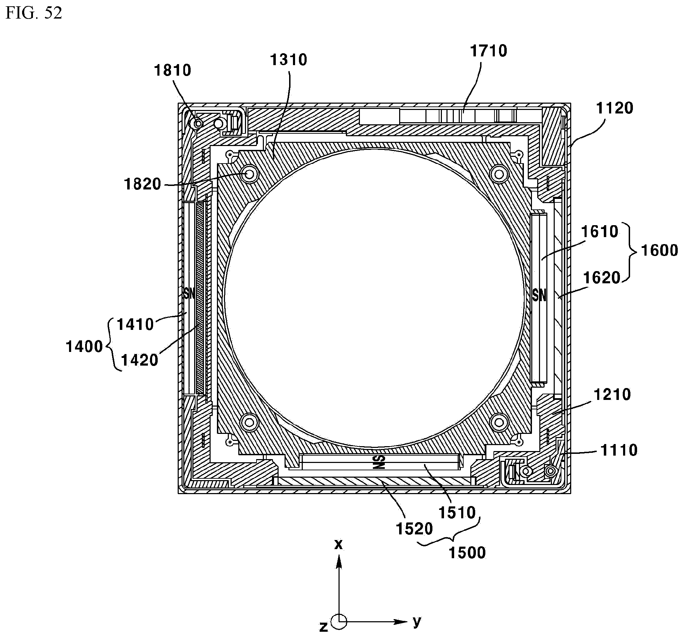

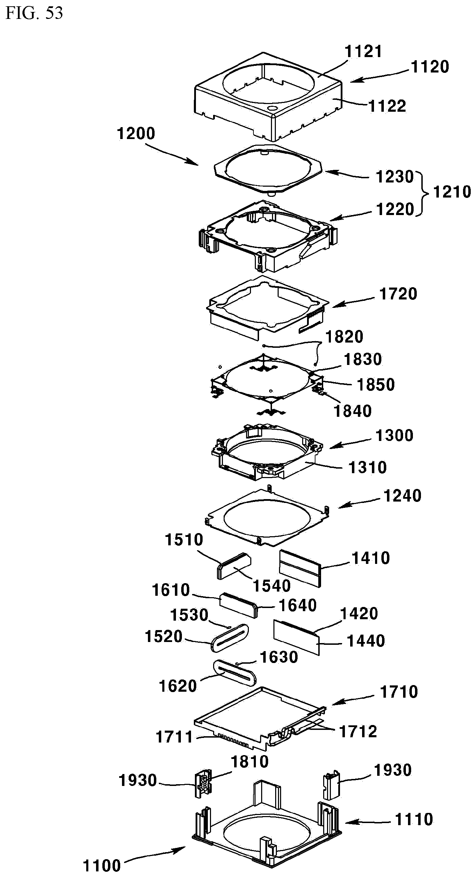

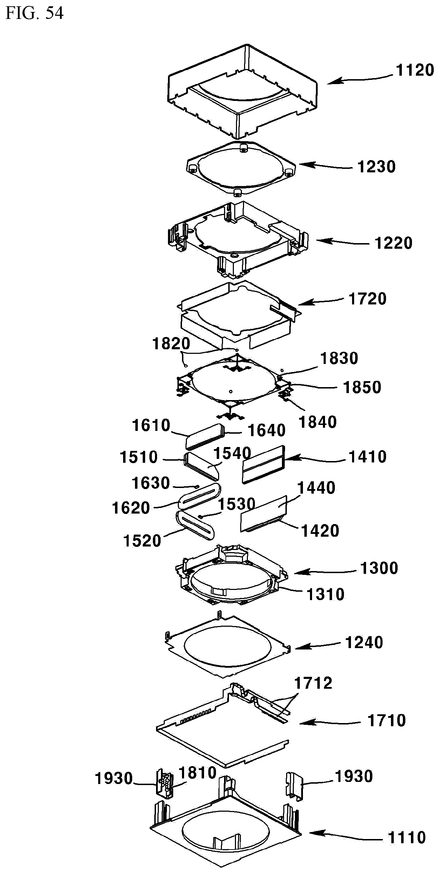

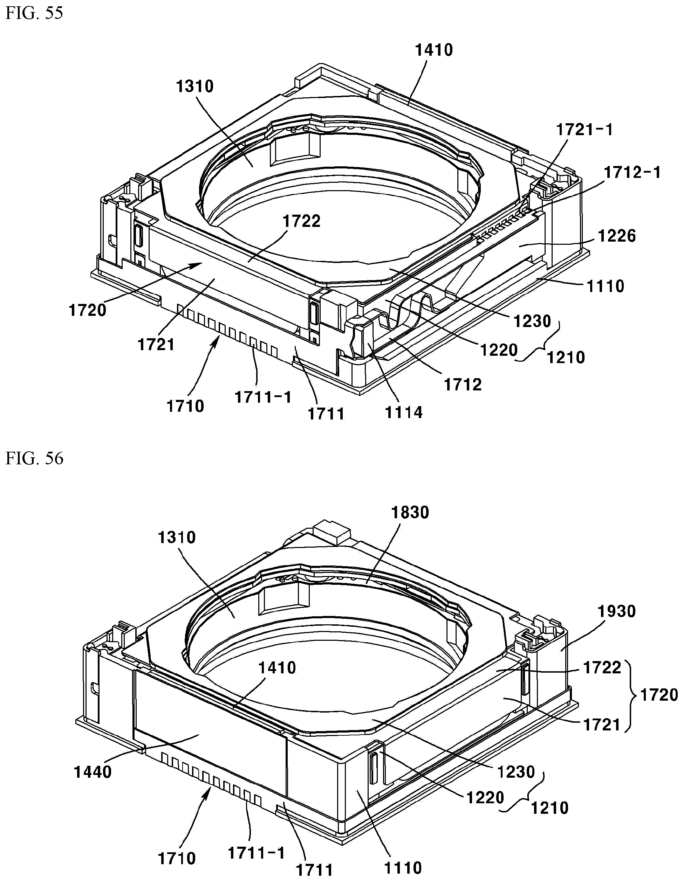

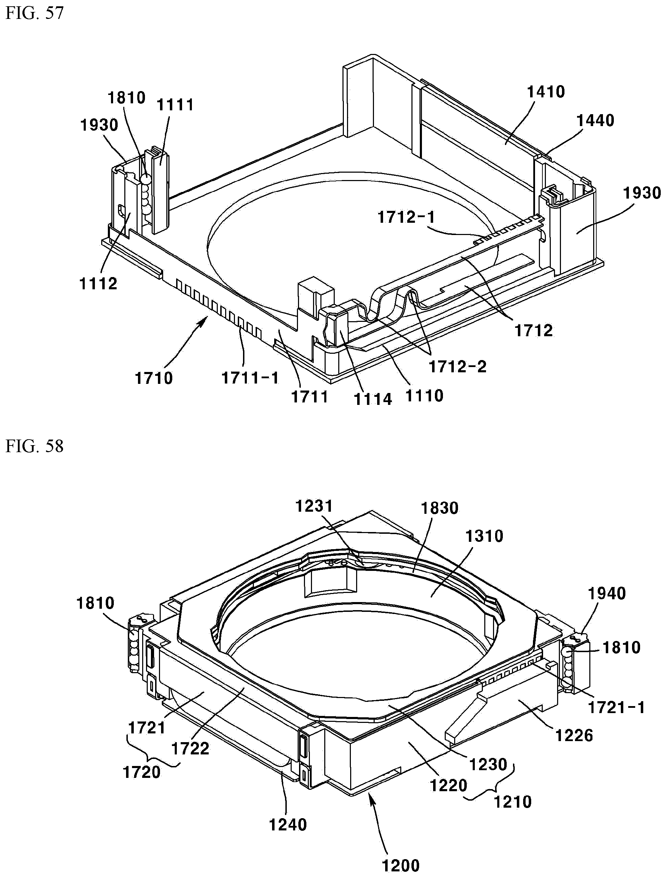

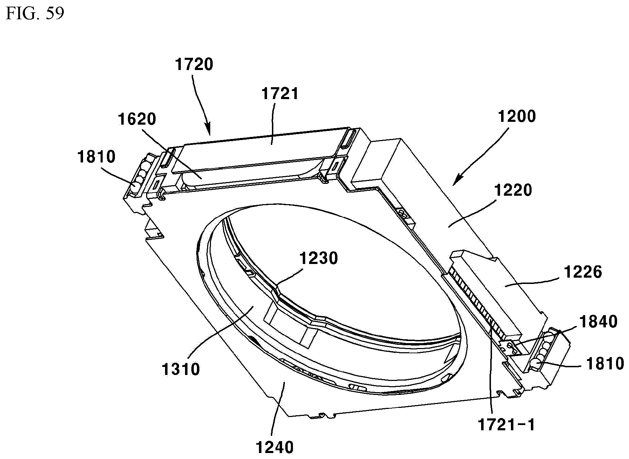

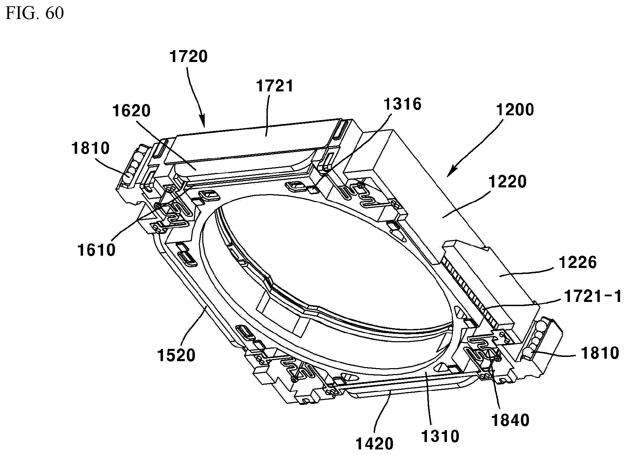

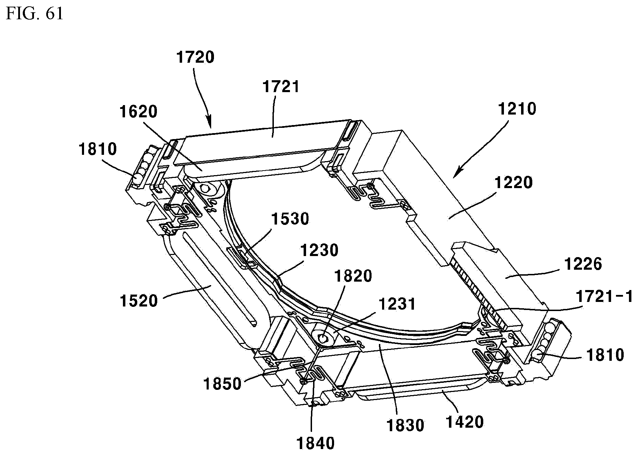

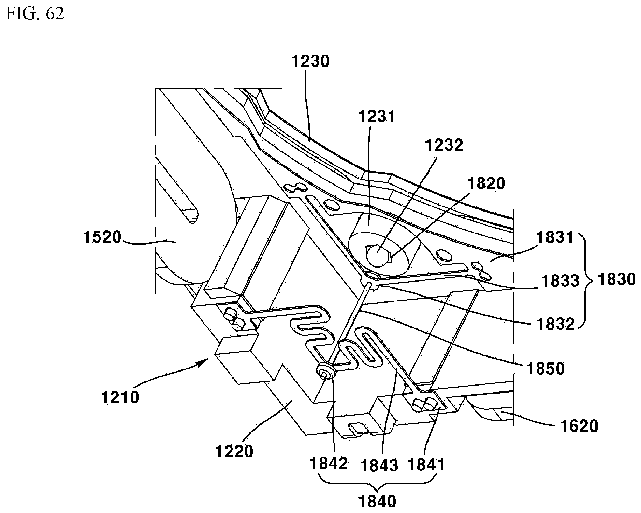

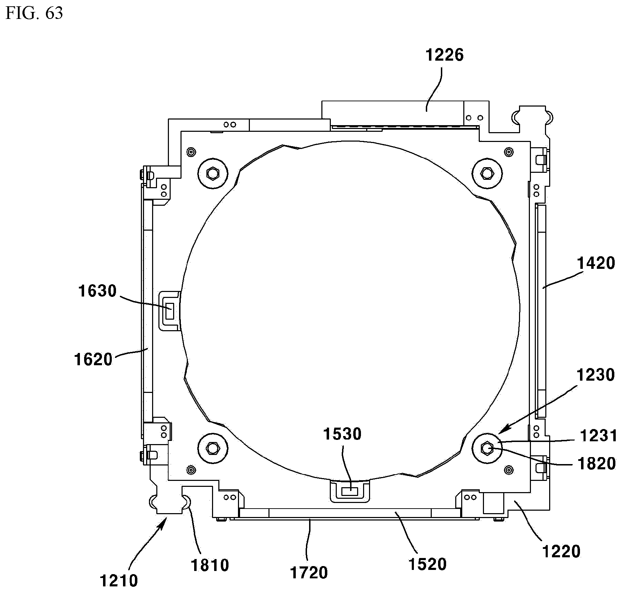

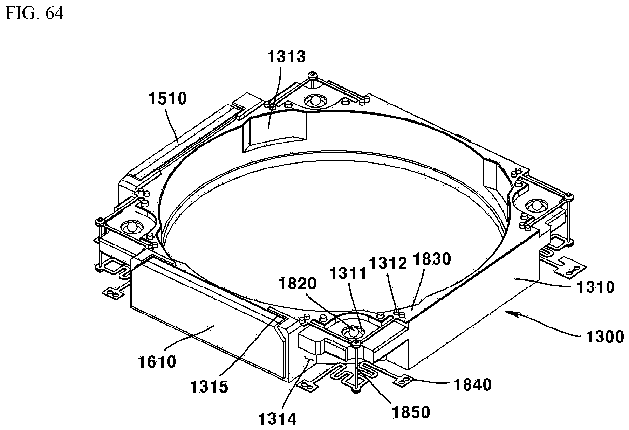

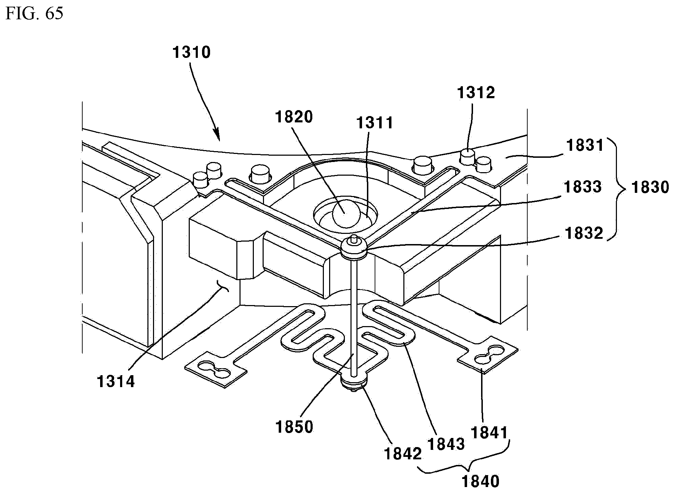

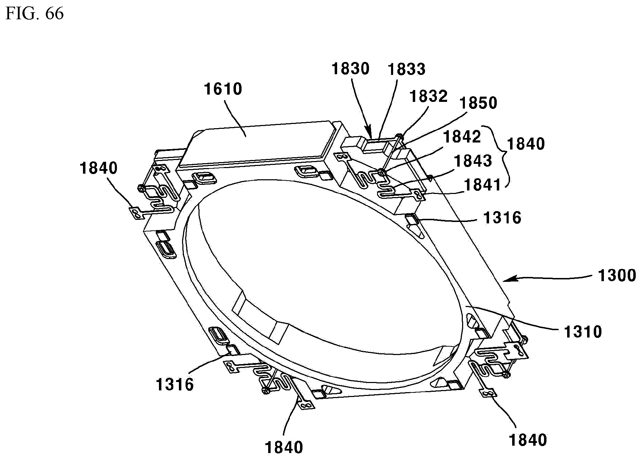

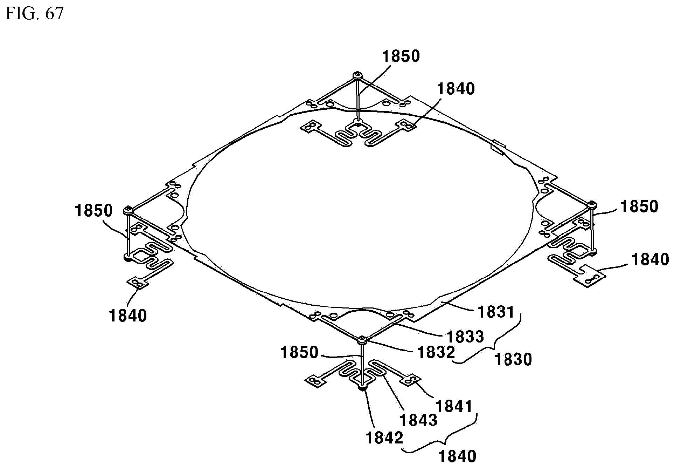

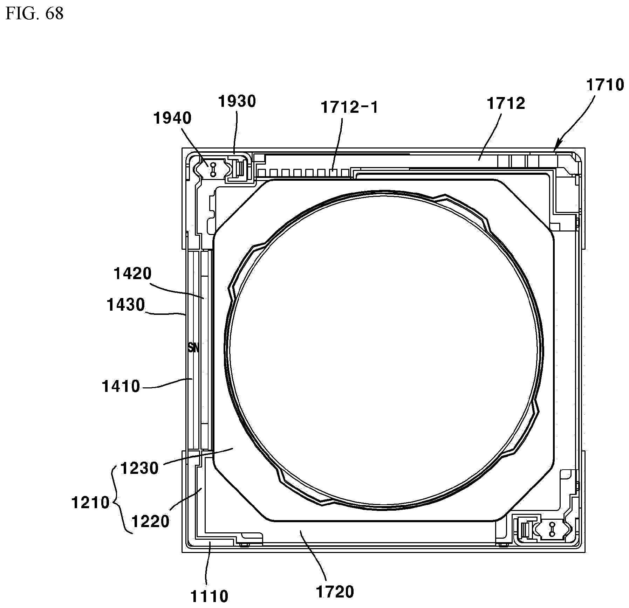

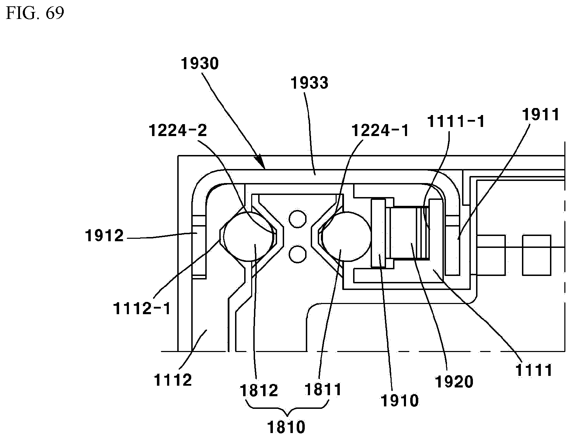

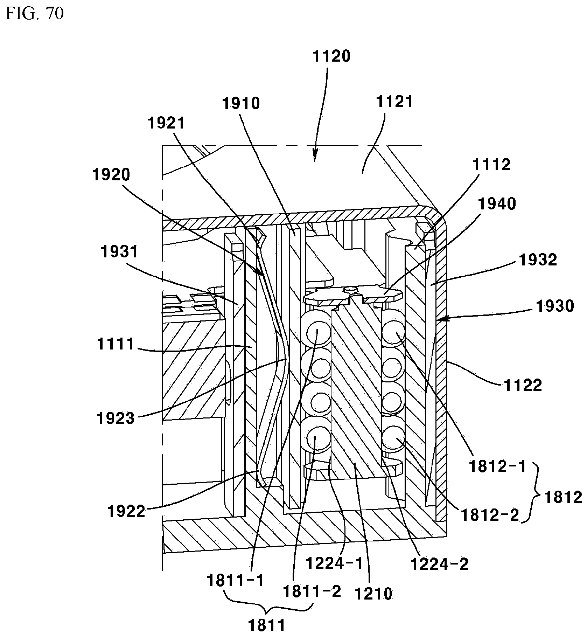

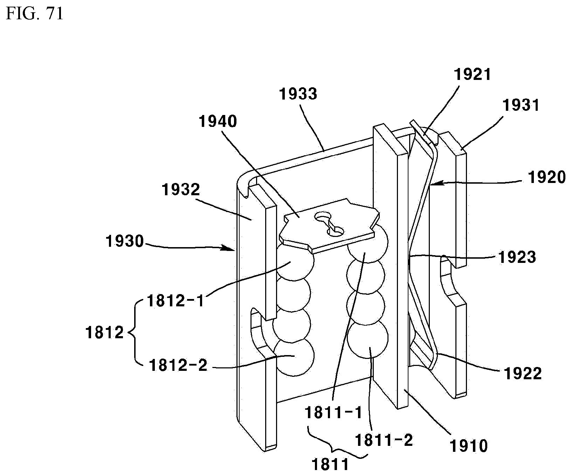

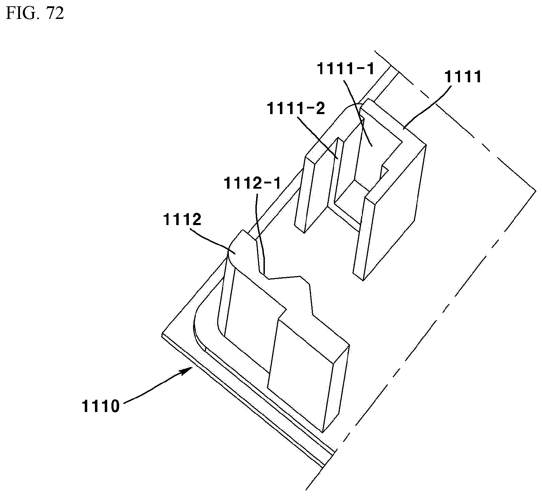

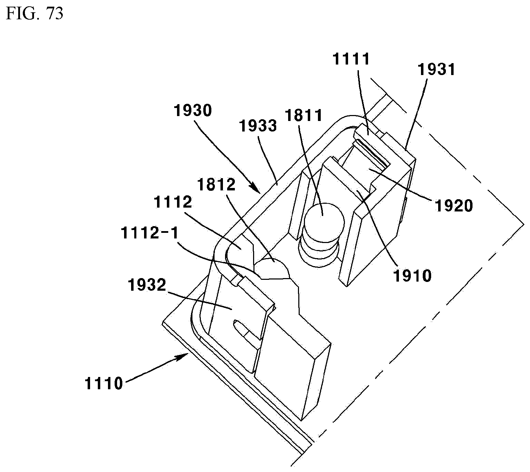

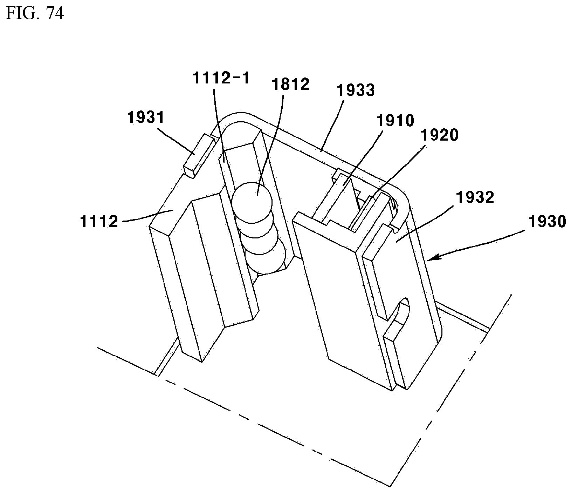

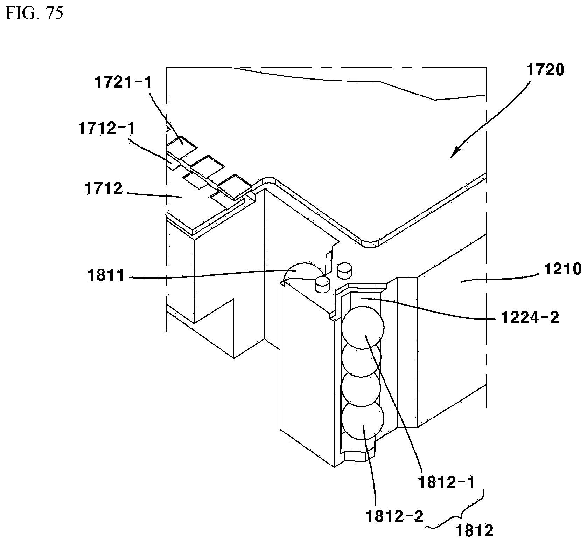

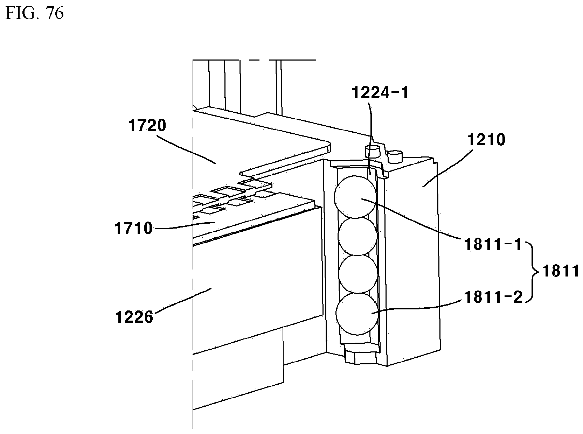

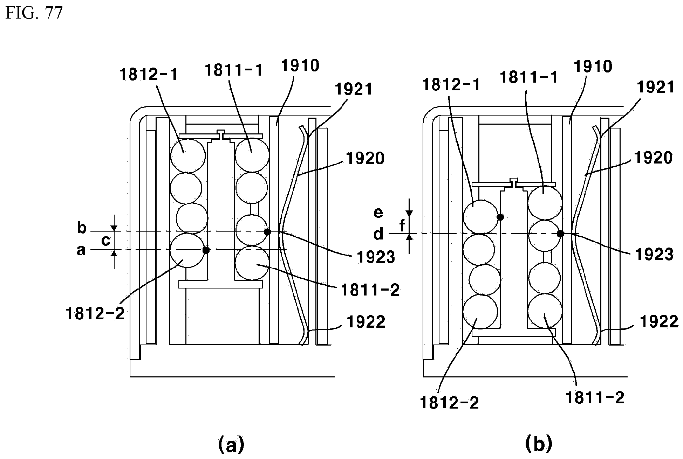

FIG. 45 is a conceptual diagram of a lens driving device according to a second embodiment of the present invention; FIG. 46 is a perspective view of a lens driving device according to a second embodiment of the present invention; FIG. 47 is a cross-sectional view viewed from A-A in FIG. 46; FIG. 48 is a cross-sectional view viewed from B-B in FIG. 46; FIG. 49 is an enlarged view of a partial region of FIG. 48; FIG. 50 is a cross-sectional view viewed from C-C in FIG. 46; FIG. 51 is a cross-sectional view viewed from D-D in FIG. 46; FIG. 52 is a cross-sectional view of a lens driving device according to a second embodiment of the present invention cut in a direction perpendicular to an optical axis and viewed from above; FIG. 53 is an exploded perspective view of a lens driving device according to a second embodiment of the present invention; FIG. 54 is an exploded perspective view of a lens driving device according to a second embodiment of the present invention, viewed from a direction different from that of FIG. 53; FIG. 55 is a perspective view of a lens driving device according to a second embodiment of the present invention in which a cover is omitted; FIG. 56 is a perspective view viewed from a direction different from that in FIG. 55; FIG. 57 is a perspective view illustrating a fixed part and related components of a lens driving device according to a second embodiment of the present invention; FIG. 58 is a perspective view illustrating a moving part and related components of a lens driving device according to a second embodiment of the present invention; FIG. 59 is a bottom perspective view viewed from a direction different from that in FIG. 58; FIG. 60 is a bottom perspective view of a state in which the cover of an AF moving part in FIG. 59 is removed; FIG. 61 is a bottom perspective view of a state in which an OIS moving part is removed in FIG. 60; FIG. 62 is an enlarged view of a partial region of FIG. 61; FIG. 63 is a bottom view of FIG. 61 viewed from below; FIG. 64 is a perspective view illustrating an OIS moving part and related components of a lens driving device according to a second embodiment of the present invention; FIG. 65 is an enlarged view of a partial region of FIG. 64; FIG. 66 is a bottom perspective view of FIG. 64 viewed from a different direction; FIG. 67 is a perspective view of an elastic member of a lens driving device according to a second embodiment of the present invention; FIG. 68 is a plan view of a lens driving device according to a second embodiment of the present invention with a cover removed; FIG. 69 is an enlarged plan view of a part of FIG. 68 in a state where a cover is omitted; FIG. 70 is a sectional perspective view illustrating a ball and a related structure of a lens driving device according to a second embodiment of the present invention; FIG. 71 is a perspective view illustrating a ball and a related structure of a lens driving device according to a second embodiment of the present invention; FIG. 72 is a perspective view illustrating a ball accommodation structure of a base of a lens driving device according to a second embodiment of the present invention; FIG. 73 is a perspective view illustrating a state in which a ball, a plate member, an elastic member, and a reinforcing member are disposed in FIG. 72; FIG. 74 is a perspective view of FIG. 73 viewed from another direction; FIG. 75 is a perspective view illustrating a moving part and a ball of a lens driving device according to a second embodiment of the present invention; FIG. 76 is a perspective view of FIG. 75 viewed from another direction; FIG. 77(a) is a view comparing the heights of a ball and a pressure point in a state in which a moving part moves upward; and FIG. 77(b) is a view comparing the heights of a ball and a pressure point in a state where a moving part moves downward.

The lens driving device **1010** may be a voice coil motor (VCM). The lens driving device **1010** may be a lens driving motor. The lens driving device **1010** may be a lens driving actuator. The lens driving device **1010** may comprise an AF module. The lens driving device **1010** may comprise an OIS module.

The lens driving device **1010** may comprise a fixed part **1100.** The fixed part **1100** may be a relatively fixed part when the moving part moves. The moving part may move against the fixed part **1100.**

The lens driving device **1010** may comprise a base **1110.** The fixed part **1100** may comprise a base **1110.** The base **1110** may be disposed below the AF carrier **1210.** The base **1110** may be disposed below the OIS carrier **1310.** The base **1110** may be coupled with cover **1120.** The AF carrier **1210** and the OIS carrier **1310** may be disposed on the base **1110.** The AF carrier **1210** and the OIS carrier **1310** may be disposed on a lower plate portion of the base **1110.** The AF carrier **1210** and the OIS carrier **1310** may be disposed inside the base **1110.** The AF carrier **1210** and the OIS carrier **1310** may be disposed inside the side wall part of the base **1110.**

The base **1110** may comprise a lower plate portion. The lower plate portion of the base **1110** may support a lower surface of the AF moving part **1200.** The lower plate portion of the base **1110** may support a lower surface of the AF carrier **1210.**

The base **1110** may comprise a pillar part **1111.** The base **1110** may comprise a pillar part **1111.** The pillar part **1111** may be extended from an upper surface of the lower plate portion. The pillar part **1111** may be disposed inside the outer wall part **1112.**

The base **1110** may comprise an inner groove **1111-1.** The pillar part **1111** may comprise an inner groove **1111-1.** The inner groove **1111-1** may be formed in the pillar part **1111.** The inner groove **1111-1** may be an 'AF guide ball accommodating groove'. An AF guide ball **1810** may be disposed in the inner groove **1111-1.** An inner ball **1811** may be disposed in the inner groove **1111-1.** The inner groove **1111-1** may be directly in contact with the AF guide ball **1810.** The inner groove **1111-1** may be disposed in an optical axis direction. The inner groove **1111-1** may comprise a plurality of grooves. The inner groove **1111-1** may comprise two grooves. The two grooves may be disposed parallel to each other. The two grooves may be disposed in a diagonal direction from each other with respect to an optical axis.

The base **1110** may comprise a step **1111-2.** The step **1111-2** may be formed in the pillar part **1111.** A plate member **1910** may be disposed in the step **1111-2.**

The fixed part **1100** may comprise an outer wall part **1112.** The base **1110** may comprise an outer wall part **1112.** The outer wall part **1112** may be a 'side portion'. The outer wall part **1112** may be a 'side plate'. The outer wall part **1112** may be a 'side wall'. The outer wall part **1112** of the base **1110** may be extended from an upper surface of the lower plate portion. The fixed part **1100** may comprise a first protruding part and a second protruding part. At this time, the first protruding part may be the pillar part **1111** and the second protruding part may be the outer wall part **1112.**

The base **1110** may comprise an outer groove **1112-1.** The outer wall part **1112** may comprise an outer groove **1112-1.** The outer groove **1112-1** may be formed to face the inner groove **1111-1.** The outer groove **1112-1** may face the inner groove **1111-1.** The outer groove **1112-1** may be an 'AF guide ball accommodating groove'. An AF guide ball **1810** may be disposed in the outer groove **1112-1.** An outer ball **1812** may be disposed in the outer groove **1112-1.** The outer groove **1112-1** may directly in contact with the AF guide ball **1810.** The outer groove **1112-1** may be disposed in an optical axis direction. The outer groove **1112-1** may comprise a plurality of grooves. The outer groove **1112-1** may comprise two grooves. The two grooves may be disposed parallel to each other. The two grooves may be disposed in a diagonal direction from each other with respect to an optical axis. The outer groove **1112-1** may be disposed at an opposite side of the inner groove **1111-1.** The outer groove **1112-1** may have a shape corresponding to the inner groove **1111-1.** The outer groove **1112-1** and the inner groove **1111-1** may have the same length in an optical axis direction.

The base **1110** may comprise a protruding part **1114.** The protruding part **1114** may be protruded outward. A connection part **1712** of the outer substrate **1710** may be disposed above and below the protruding part **1114.** A groove may be formed in the protruding part **1114** so as not to interfere even when the connecting part **1712** of the outer substrate **1710** moves.

The base **1110** may comprise a step. The step may be formed on a lower end portion of an outer side surface of the base **1110.** The step may be protruded from an outer side surface of the base **1110.** The side plate **1122** of the cover **1120** may be disposed in a step of the base **1110.**

The lens driving device **1010** may comprise a cover **1120.** The fixed part **1100** may comprise a cover **1120.** The cover **1120** may be disposed in the base **1110.** The cover **1120** may be disposed on the base **1110.** The cover **1120** may be coupled to the base **1110.** The cover **1120** may be fixed to the base **1110.** The cover **1120** may accommodate the AF carrier **1210** therein. The cover **1120** may accommodate the OIS carrier **1310** therein. The cover **1120** may be a shield member. The cover **1120** may be a shield can.

The cover **1120** may comprise an upper plate **1121.** The upper plate **1121** may be disposed on a moving part. The upward movement of the moving part may be limited by contacting of the moving part with the upper plate **1121.** The upper plate **1121** may comprise a hole through which light passes.

The cover **1120** may comprise a side plate **1122.** The side plate **1122** may be extended from the upper plate **1121.** The side plate **1122** may be disposed in the base **1110.** The side plate **1122** may be disposed on a step portion being protruded from a lower end portion of an outer side surface of the base **1110.** The side plate **1122** may comprise a plurality of side plates. The side plate **1122** may comprise four side plates. The side plate **1122** may comprise a first side plate and a second side plate being disposed opposite to each other, and a third side plate and a fourth side plate being disposed opposite to each other.

The lens driving device **1010** may comprise a moving part. The moving part may be disposed in the fixed part **1100.** The moving part may be disposed inside the fixed part **1100.** The moving part may be disposed on the fixed part **1100.** The moving part may be movably disposed in the fixed part **1100.** The moving part may move based on the fixed part **1100** by the driving part. The moving part can move during AF driving. The moving part can move during OIS driving. A lens may be coupled to the moving part.

The lens driving device **1010** may comprise an AF moving part **1200.** The AF moving part **1200** may be disposed in the fixed part **1100.** The AF moving part **1200** may be disposed inside the fixed part **1100.** The AF moving part **1200** may be disposed on the fixed part **1100.** The AF moving part **1200** may be disposed between the fixed part **1100** and the OIS moving part **1300.** The AF moving part **1200** may be movably disposed in the fixed part **1100.** The AF moving part **1200** may move in an optical axis direction against the fixed part **1100** by the AF driving part **1400.** The AF moving part **1200** may move during AF driving.

The lens driving device **1010** may comprise an AF carrier **1210.** The AF moving part **1200** may comprise an AF carrier **1210.** The AF carrier **1210** may be an 'AF holder'. The AF carrier **1210** may be a 'housing'. The AF carrier **1210** may be disposed inside the base **1110.** AF carrier **1210** may be disposed on the base **1110.** The AF carrier **1210** may be disposed inside the cover **1120.** The AF carrier **1210** may be disposed between the base **1110** and the OIS carrier **1310.** The AF carrier **1210** may be movably disposed in an optical axis direction.

The AF carrier **1210** may comprise a frame, a first upper plate, and a second upper plate. At this time, the frame may be a body part. The frame may be the holder member **1220.** The first upper plate may be a metal member **1225.** The second upper plate may be a pre-pressurizing member **1230.** The AF carrier **1210** may be a housing. The housing may comprise a first housing and a second housing. At this time, the first housing may comprise the holder member **1220** and the second housing may comprise the pre-pressurizing member **1230.** The OIS carrier **1310** may be a bobbin. The OIS guide member **1820** may be disposed between the housing and the bobbin. The AF guide ball **1810** may be disposed between a side surface of the housing and the cover **1120.** The AF guide ball **1810** may be disposed between a side surface of the housing and a base or pillar of the base.

The AF carrier **1210** may comprise a protruding part. The protruding part may be protruded from the AF carrier **1210** in a first direction perpendicular to the optical axis direction. The protruding part of the AF carrier **1210** may be referred to as a 'third protruding part' to distinguish it from the two protruding parts of the base **1110,** the pillar part **1111** and the outer wall part **1112.** The protruding part of the AF carrier **1210** may be disposed between the pillar part **1111** and the outer wall part **1112** of the base **1110.** The inner ball **1811** may be disposed between the plate member **1910** and the pillar part **1111** of the fixed part **1100.** The inner ball **1812** may be disposed between the pillar part **1111** of the fixed part **1100** and the protruding part of the AF moving part **1200.** The outer ball **1813** may be disposed between the outer wall part **1112** of the fixed part **1100** and the protruding part of the AF moving part **1200.** The pillar part **1111** may comprise a pillar part being disposed in the same corner region as the outer wall part **1112.** That is, the first pillar part and the first outer wall part may be disposed in the first corner region of the base **1110.**

The lens driving device **1010** may comprise a holder member **1220.** The AF carrier **1210** may comprise a holder member **1220.** The holder member **1220** may be formed separately from the pre-pressurizing member **1230.** A lower elastic member **1840** may be coupled to the holder member **1220.**

The AF carrier **1210** may comprise an upper plate. The upper plate may be disposed on the OIS carrier **1310.** The upper plate may be disposed between the OIS carrier **1310** and the upper plate **1121** of the cover **1120.** The upper plate may be disposed on the OIS moving part **1300.**

The AF carrier **1210** may comprise a hole. The holder member **1220** may comprise a hole. The upper plate of the holder member **1220** may comprise a hole. A hole may be formed in an upper plate of the holder member **1220.** The hole can be opened inward. A pre-pressurizing member **1230** may be inserted into the hole. The protruding part **1231** of the pre-pressurizing member **1230** may be inserted into the hole. The hole may be formed as a groove. The hole can be replaced by a groove. That is, as a modified embodiment, the AF carrier **1210** may comprise a groove into which the protruding part **1231** of the pre-pressurizing member **1230** is inserted.

The AF carrier **1210** may comprise a side wall. The sidewall may be extended downward from an upper plate. An inner substrate **1720** may be disposed on a sidewall. An AF coil **1420** may be disposed on the sidewall. An OIS-x coil **1520** may be disposed on a side wall. An OIS-y coil **1620** may be disposed on a side wall. The sidewall may comprise a groove that avoids the coil. The sidewall may comprise a plurality of sidewalls. The sidewall may comprise four sidewalls. The sidewall may comprise a first sidewall and a second sidewall being disposed opposite to each other, and a third sidewall and a fourth sidewall being disposed opposite to each other.

The AF carrier **1210** may comprise an inner groove **1224-1.** The holder member **1220** may comprise an inner groove **1224-1.** The inner groove **1224-1** may be an 'AF guide ball accommodating groove'. An AF guide ball **1810** may be disposed in the inner groove **1224-1.** An inner ball **1811** may be disposed in the inner groove **1224-1.** The inner groove **1224-1** may directly in contact with the AF guide ball **1810.** The inner groove **1224-1** may be disposed in an optical axis direction. The inner groove **1224-1** may guide the AF guide ball **1810** to move in an optical axis direction. The inner groove **1224-1** may comprise a plurality of grooves. The inner groove **1224-1** may comprise two grooves. The two grooves may be disposed parallel to each other. The two grooves may be disposed at a diagonal direction from each other with respect to an optical axis.

The AF carrier **1210** may comprise an outer groove **1224-2.** The holder member **1220** may comprise an outer groove **1224-2.** The outer groove **1224-2** may be an 'AF guide ball accommodating groove'. An AF guide ball **1810** may be disposed in the outer groove **1224-2.** An outer ball **1812** may be disposed in the outer groove **1224-2.** The outer groove **1224-2** may be directly in contact with the AF guide ball **1810.** The outer groove **1224-2** may be disposed in an optical axis direction. The outer groove **1224-2** may guide the AF guide ball **1810** to move in an optical axis direction. The outer groove **1224-2** may comprise a plurality of grooves. The outer groove **1224-2** may comprise two grooves. The two grooves may be disposed parallel to each other. The two grooves may be disposed in a diagonal direction from each other with respect to an optical axis. The outer groove **1224-2** may be disposed at an opposite side of the inner groove **1224-1.** The outer groove **1224-2** may have a shape corresponding to the inner groove **1224-1.** The outer groove **1224-2** and the inner groove **1224-1** may have the same length in an optical axis direction.

The AF carrier **1210** may comprise a metal member **1225.** The holder member **1220** may comprise a metal member **1225.** The metal member **1225** may be insert-injected into the holder member **1220.** At least a portion of the metal member **1225** may be disposed on an upper surface of the holder member **1220.** The metal member **1225** may be disposed to reinforce the strength of the holder member **1220.**

The AF carrier **1210** may comprise a protruding part **1226.** The holder member **1220** may comprise a protruding part **1226.** The protruding part **1226** may be formed on an outer side surface of the AF carrier **1210.** The protruding part **1226** may be protruded outward from the AF carrier **1210.** A connection part **1712** may be disposed on an upper surface and a lower surface of the protruding part **1226.**

The lens driving device **1010** may comprise a pre-pressurizing member **1230.** The AF carrier **1210** may comprise a pre-pressurizing member **1230.** The pre-pressurizing member **1230** may be coupled to an upper surface of the holder member **1220.** The pre-pressurizing member **1230** may be coupled with the holder member **1220.** The pre-pressurizing member **1230** may be inserted and coupled to the holder member **1220** from above. The pre-pressurizing member **1230** may apply pressure to the OIS guide member **1820.** The pre-pressurizing member **1230** may be in contact with the OIS guide member **1820.** The pre-pressurizing member **1230** may be directly in contact with the OIS guide member **1820.** The pre-pressurizing member **1230** may apply pressure to the OIS guide member **1820** by being coupled to the holder member **1220.**

The AF carrier **1210** may comprise a protruding part **1231.** The pre-pressurizing member **1230** may comprise a protruding part **1231.** The protruding part **1231** may be coupled to the hole of the holder member **1220.** The protruding part **1231** of the pre-pressurizing member **1230** may be inserted into a hole of the holder member **1220** from above. The protruding part **1231** of the pre-pressurizing member **1230** may be disposed in a hole of the holder member **1220.** At least a part of the protruding part **1231** of the pre-pressurizing member **1230** may be disposed in a hole of the holder member **1220.** The OIS guide member **1820** may be disposed on a lower end portion of the protruding part **1231** of the pre-pressurizing member **1230.** The protruding part **1231** may comprise a plurality of protrusions. The protruding part **1231** may comprise four protrusions.

The AF carrier **1210** may comprise a groove **1232.** The pre-pressurizing member **1230** may comprise a groove **1232.** The groove **1232** may be an 'OIS guide ball accommodating groove'. The groove **1232** may be formed in the protruding part **1231.** The groove **1232** may be formed on a lower surface of the protruding part **1231.** The groove **1232** may be formed at an end portion of the protruding part **1231.** The groove **1232** may be concavely formed on a lower surface of the protruding part **1231.** An OIS guide ball **1820** may be disposed in the groove **1232.** The groove **1232** may be directly in contact with the OIS guide ball **1820.** In one example, groove **1232** may comprise a flat bottom surface. At this time, the OIS guide ball **1820** may be in contact with the bottom surface of the groove **1232** at one point. In other words, the groove **1232** comprises a flat bottom surface, and the OIS guide ball **1820** may be in contact with the flat surface at one point. Or, the bottom surface of the groove **1232** may comprise at least three planes inclined to each other. In this case, the OIS guide ball **1820** may be in contact with the bottom surface of the groove **1232** at three points.

The lens driving device **1010** may comprise a cover **1240.** The AF moving part **1200** may comprise a cover **1240.** The cover **1240** may be coupled with the AF carrier **1210.** The cover **1240** may be coupled to a lower surface of the AF carrier **1210.** The cover **1240** may be coupled to the AF carrier **1210** at a lower side. The cover **1240** may comprise a hook. The hook of the cover **1240** may be coupled to the AF carrier **1210.** The hook of the cover **1240** is protruded upward and may be coupled to a side surface of the AF carrier **1210.**

The lens driving device **1010** may comprise an OIS moving part **1300.** The OIS moving part **1300** may be disposed in the fixed part **1100.** The OIS moving part **1300** may be disposed inside the fixed part **1100.** The OIS moving part **1300** may be disposed on the fixed part **1100.** The OIS moving part **1300** may be disposed inside the AF moving part **1200.** The OIS moving part **1300** may be movably disposed. The OIS moving part **1300** may move in a direction perpendicular to the optical axis against the fixed part **1100** and the AF moving part **1200** by the OIS driving part. The OIS moving part **1300** may move in an x-axis direction by the OIS-x driving part **1500.** The OIS moving part **1300** may move in a y-axis direction by the OIS-y driving part **1600.** The OIS moving part **1300** may move during OIS driving.

The lens driving device **1010** may comprise an OIS carrier **1310.** The OIS moving part **1300** may comprise an OIS carrier **1310.** The OIS carrier **1310** may be an 'OIS holder'. The OIS carrier **1310** may be a 'bobbin'. The OIS carrier **1310** may be disposed inside the AF carrier **1210.** The OIS carrier **1310** may be disposed inside the base **1110.** The OIS carrier **1310** may be disposed on the base **1110.** The OIS carrier **1310** may be disposed inside the cover **1120.** The OIS carrier **1310** may be movably disposed in a direction perpendicular to the optical axis.

The OIS carrier **1310** may comprise an outer side surface. The OIS carrier **1310** may comprise a plurality of side surfaces. The OIS carrier **1310** may comprise a first side surface and a second side surface being disposed opposite to each other, and a third side surface and a fourth side surface being disposed opposite to each other. The AF coil **1420** may be disposed between a first side surface of the OIS carrier **1310** and the AF magnet **1410.** The OIS-x magnet **1510** may be disposed on a third side surface of the OIS carrier **1310.** The OIS-y magnet **1610** may be disposed on a second side surface of the OIS carrier **1310.**

The OIS carrier **1310** may comprise a groove. The groove may be an 'upper elastic member interference prevention groove'. A groove may be formed on an upper surface of the OIS carrier **1310.** The groove may be concavely formed on an upper surface of the OIS carrier **1310.** The groove may be disposed at a position corresponding to the upper elastic member **1830** to prevent interference between the OIS carrier **1310** and the upper elastic member **1830.**

The OIS carrier **1310** may comprise a groove **1311.** The groove **1311** may be an 'OIS guide ball accommodating groove'. An OIS guide ball **1820** may be disposed in the groove **1311.** The groove **1311** may be directly in contact with the OIS guide ball **1820.** The groove **1311** may be disposed in a direction perpendicular to the optical axis. The groove **1311** may be recessed in an optical axis direction. The groove **1311** may comprise a plurality of grooves. The groove **1311** may comprise four grooves. The groove **1311** may be in contact with the OIS guide ball **1820** at one point. Or, the groove **1311** may be in contact with the OIS guide ball **1820** at two points. The number of contact points between the OIS carrier **1310** and the OIS guide ball **1820** may vary due to the movement of the OIS guide ball **1820.** The groove **1311** may be formed on an upper surface of the OIS carrier **1310.** The groove **1311** may open upward.

The OIS carrier **1310** may comprise a lateral stopper. The lateral stopper may limit the stroke of the OIS carrier **1310** in a lateral direction. That is, when the OIS carrier **1310** moves to the maximum, the lateral stopper of the OIS carrier **1310** may be in contact with one or more of the AF carrier **1210** and the base **1110.** The lateral stopper may be formed on an outer side surface of the OIS carrier **1310.** The lateral stopper may be protruded outward from a side surface of the OIS carrier **1310.**

The OIS carrier **1310** may comprise a protrusion **1312.** The protrusion **1312** may be coupled with the upper elastic member **1830.** The protrusion **1312** may be a 'coupling protrusion'. The upper elastic member **1830** may comprise a hole into which the protrusion **1312** of the OIS carrier **1310** is inserted. The protrusion **1312** may be formed on an upper surface of the OIS carrier **1310.**

The OIS carrier **1310** may comprise a groove **1313.** The groove **1313** may be a 'lens adhesive accommodating groove'. The groove **1313** may be formed on an inner circumferential surface of the OIS carrier **1310.** The groove **1313** may be concavely formed on an inner circumferential surface of the OIS carrier **1310.** An adhesive may be injected between the lens and the OIS carrier **1310** through the groove **1313.** An adhesive for bonding the lens and the OIS carrier **1310** may be disposed in the groove **1313.**

The OIS carrier **1310** may comprise a groove **1314.** The groove **1314** may be formed on a lower surface of the OIS carrier **1310.** The groove **1314** may open outward.

The OIS carrier **1310** may comprise a mounting part **1315.** The mounting part **1315** may be a 'magnet mounting part'. The magnets **1510** and **1620** may be disposed on the mounting part **1315.** The mounting part **1315** may be formed as a groove, for an example.

The OIS carrier **1310** may comprise a lower stopper **1316.** The lower stopper **1316** may be formed on a lower surface of the OIS carrier **1310.** The lower stopper **1316** may be protruded downward from a lower surface of the OIS carrier **1310.** The lower stopper **1316** may limit the downward movement of the OIS carrier **1310** by being in contact with the AF carrier **1210** or the base **1110.**

Hereinafter, one among the 'groove **1311',** the 'groove **1313',** and the 'groove **1314'** of the OIS carrier **1310** is referred to as a 'first groove', the other is referred to as a 'second groove', and another one may be referred to as the 'third groove'.

The lens driving device **1010** may comprise a driving part. The driving part may move the moving part against the fixed part **1100.** The driving part may comprise the AF driving part **1400.** The driving part may comprise an OIS driving part. The driving part may comprise an OIS-x driving part **1500.** The driving part may comprise an OIS-y driving part **1600.** The driving part may comprise a coil and a magnet.

The lens driving device **1010** may comprise an AF driving part **1400.** The AF driving part **1400** may move the AF moving part **1200** in an optical axis direction. The AF driving part **1400** may move the AF carrier **1210** in an optical axis direction. The AF driving part **1400** may move the AF carrier **1210** in an optical axis direction through electromagnetic force. The AF driving part **1400** may comprise a coil and a magnet.

In a second embodiment of the present invention, the AF carrier **1210** and the OIS carrier **1310** can move in an optical axis direction by the interaction between the AF coil **1420** and the AF magnet **1410.** The AF coil **1420,** the AF carrier **1210,** and the OIS carrier **1310** may move integrally in an optical axis direction.

The lens driving device **1010** may comprise an AF magnet **1410.** The AF driving part **1400** may comprise an AF magnet **1410.** The AF magnet **1410** may be an 'AF magnet'. The AF magnet **1410** may be a permanent magnet. The AF magnet **1410** may be disposed in the fixed part **1100.** The AF magnet **1410** may be disposed in the base **1110.** The AF magnet **1410** may be disposed in the cover **1120.** The AF magnet **1410** may be disposed in the side plate **1122** of the cover **1120.** The AF magnet **1410** may be disposed on an outer side surface of the base **1110.** The AF magnet **1410** may be disposed on an inner side surface of the base **1110.** The AF magnet **1410** may be fixed to the base **1110.** AF magnet **1410** may be coupled to the base **1110.** The AF magnet **1410** may be attached to the base **1110** with an adhesive. The AF magnet **1410** may be disposed inside the cover **1120.** The AF magnet **1410** may interact with the AF coil **1420.** The AF magnet **1410** may interact with the AF coil **1420** electromagnetically. The AF magnet **1410** may be disposed at a position corresponding to the AF coil **1420.** The AF magnet **1410** and the AF coil **1420** may face each other. The AF magnet **1410** may face the AF coil **1420.** The AF magnet **1410** may be overlapped with the AF coil **1420** in a direction perpendicular to the optical axis.

The AF magnet **1410** may be a 4-pole magnet. The AF magnet **1410** may comprise a 4-pole magnetized magnet. The AF magnet **1410** may comprise a first magnet part comprising an N pole and an S pole, and a second magnet part comprising an N pole and an S pole. The first magnet part and the second magnet part may be disposed in a vertical direction. The first magnet part and the second magnet part are disposed spaced apart from each other in a vertical direction, and a neutral part may be disposed between the first magnet part and the second magnet part.

The lens driving device **1010** may comprise an AF coil **1420.** The AF driving part **1400** may comprise an AF coil **1420.** The AF coil **1420** may interact with the AF magnet **1410.** The AF coil **1420** may face the AF magnet **1410.** The AF coil **1420** and the AF magnet **1410** may face each other. The AF coil **1420** may be disposed at a position corresponding to the AF magnet **1410.** The AF coil **1420** may be overlapped with the AF magnet **1410** in a direction perpendicular to the optical axis. The AF coil **1420** may be disposed on an inner substrate **1720.** The AF coil **1420** may be disposed in the AF carrier **1210.** The AF coil **1420** may be disposed in the AF moving part **1200.**

In a second embodiment of the present invention, the AF coil **1420** can move in an optical axis direction. The AF coil **1420** may move in an optical axis direction through interaction with the AF magnet **1410.** The AF coil **1420** may move together with the AF moving part **1200.** The AF coil **1420** may move in an optical axis direction together with the AF moving part **1200.** During the AF driving process, the AF coil **1420** may move along with the AF moving part **1200** in an optical axis direction. The AF coil **1420** may be disposed in the AF moving part **1200.** The AF coil **1420** may be fixed to the AF moving part **1200.** The AF coil **1420** may be coupled to the AF moving part **1200.**

The lens driving device **1010** may comprise an AF sensor **1430.** The AF driving part **1400** may comprise an AF sensor **1430.** The AF sensor **1430** may be a Hall sensor. The AF sensor **1430** may be disposed in the inner substrate **1720.** The AF sensor **1430** may detect the AF magnet **1410.** The AF sensor **1430** may detect movement of the AF magnet **1410.** The movement amount or position of the AF magnet **1410** detected by the AF sensor **1430** may be used for feedback of auto focus driving.

The AF sensor **1430** may be a driver IC. The driver IC may comprise a sensing unit. The sensing unit may comprise a Hall IC. The driver IC may be electrically connected to the AF coil **1420.** The driver IC may supply current to the AF coil **1420.**

The AF sensor **1430** may be disposed inside the AF coil **1420.** The AF sensor **1430** may be overlapped with a neutral portion of the AF magnet **1410** in a direction perpendicular to the optical axis. As a modified embodiment, the AF sensor **1430** may be disposed outside the AF coil **1420.** The AF sensor **1430** may be overlapped with the AF coil **1420** in an optical axis direction. The AF sensor **1430** may be overlapped with the AF coil **1420** in a direction perpendicular to the optical axis.

The lens driving device **1010** may comprise an AF yoke **1440.** The AF yoke **1440** may be disposed at a position corresponding to the AF magnet **1410.** An attractive force may act between the AF yoke **1440** and the AF magnet **1410.** The contact between the AF guide ball **1810** and the base **1110** and the AF carrier **1210** can be maintained as it is by the attractive force between the AF yoke **1440** and the AF magnet **1410.** The AF yoke **1440** may be disposed in the inner substrate **1720.** The AF yoke **1440** may be disposed inside the AF coil **1420.**

The lens driving device **1010** may comprise an OIS driving part. The OIS driving part may move the OIS moving part **1300** in a direction perpendicular to the optical axis direction. The OIS driving part may move the OIS carrier **1310** in a direction perpendicular to the optical axis. The OIS driving part may move the OIS carrier **1310** in a direction perpendicular to the optical axis through electromagnetic force.

The lens driving device **1010** may comprise an OIS-x driving part **1500.** The OIS driving part may comprise an OIS-x driving part **1500.** The OIS-x driving part **1500** may move the OIS carrier **1310** in an x-axis direction perpendicular to the optical axis. The OIS-x driving part **1500** may move the OIS carrier **1310** in an x-axis direction perpendicular to the optical axis through electromagnetic force. The OIS-x driving part **1500** may comprise a coil and a magnet.

In a second embodiment of the present invention, the OIS-x magnet **1510** and the OIS-x coil **1520** may move the OIS moving part **1300** in a first direction perpendicular to the optical axis direction. At this time, the first direction may be an x-axis direction. Due to the interaction between the OIS-x coil **1520** and the OIS-x magnet **1510,** the OIS carrier **1310** can move in an x-axis direction perpendicular to the optical axis direction. The OIS-x magnet **1510** and the OIS carrier **1310** may integrally move in an x-axis direction.

The lens driving device **1010** may comprise an OIS-x magnet **1510.** The OIS driving part may comprise an OIS-x magnet **1510.** The OIS-x magnet **1510** may be 'OIS-x magnet'. The OIS-x magnet **1510** may be a permanent magnet. The OIS-x magnet 1510 may be disposed in the OIS moving part **1300.** The OIS-x magnet **1510** may be spaced apart from the AF magnet **1410.** The OIS-x magnet **1510** may be disposed in the OIS carrier **1310.** The OIS-x magnet **1510** may be disposed on an outer side surface of the OIS carrier **1310.** The OIS-x magnet **1510** may be fixed to the OIS carrier **1310.** The OIS-x magnet **1510** may be coupled to the OIS carrier **1310.** The OIS-x magnet **1510** may be attached to the OIS carrier **1310** with an adhesive. The OIS-x magnet **1510** may be disposed inside the cover **1120.** The OIS-x magnet **1510** may interact with the OIS-x coil **1520.** The OIS-x magnet **1510** may interact electromagnetically with the OIS-x coil **1520.** The OIS-x magnet **1510** may be disposed at a position corresponding to the OIS-x coil **1520.** The OIS-x magnet **1510** and the OIS-x coil **1520** may face each other. The OIS-x magnet **1510** may face the OIS-x coil **1520.** The OIS-x magnet **1510** may be overlapped with the OIS-x coil **1520** in a direction perpendicular to the optical axis. The OIS-x magnet **1510** may be overlapped with the OIS-x coil **1520** in an x-axis direction. The OIS-x magnet **1510** can move in an x-axis direction perpendicular to the optical axis.

The OIS-x magnet **1510** may be a two-pole magnet. The OIS-x magnet **1510** may comprise a two-pole magnetized magnet. The OIS-x magnet **1510** may comprise an N pole and an S pole.

The lens driving device **1010** may comprise an OIS-x coil **1520.** The OIS driving part may comprise an OIS-x coil **1520.** The OIS-x coil **1520** may interact with the OIS-x magnet **1510.** The OIS-x coil **1520** may move the OIS-x magnet **1510** in an x-axis direction perpendicular to the optical axis. The OIS-x coil **1520** may move the OIS-x magnet **1510** in an x-axis direction through interaction with the OIS-x magnet **1510.** The OIS-x coil **1520** may face the OIS-x magnet **1510.** The OIS-x coil **1520** and the OIS-x magnet **1510** may face each other. The OIS-x coil **1520** may be disposed at a position corresponding to the OIS-x magnet **1510.** The OIS-x coil **1520** may be overlapped with the OIS-x magnet **1510** in a direction perpendicular to the optical axis. The OIS-x coil **1520** may be disposed in the inner substrate **1720.** The OIS-x coil **1520** may be disposed in the AF carrier **1210.**

In a second embodiment of the present invention, the OIS-x coil **1520** may move together with the AF moving part **1200.** The OIS-x coil **1520** may move in an optical axis direction together with the AF moving part **1200.** During the AF driving process, the OIS-x coil **1520** may move along with the AF moving part **1200** in an optical axis direction. The OIS-x coil **1520** may be disposed in the AF moving part **1200.** The OIS-x coil **1520** may be fixed to the AF moving part **1200.** The OIS-x coil **1520** may be coupled to the AF moving part **1200.**

The lens driving device **1010** may comprise an OIS-x sensor **1530.** The OIS driving part may comprise an OIS-x sensor **1530.** The OIS-x sensor **1530** may be disposed in the inner substrate **1720.** The OIS-x sensor **1530** may comprise a Hall sensor. The OIS-x sensor **1530** may detect the OIS-x magnet **1510.** The OIS-x sensor **1530** may detect the magnetic force of the OIS-x magnet **1510.** The OIS-x sensor **1530** may be disposed above the OIS-x magnet **1520.** The OIS-x sensor **1530** may be overlapped with the OIS-x magnet **1520** in an optical axis direction. In a modified embodiment, the OIS-x sensor **1530** may be disposed inside the OIS-x coil **1520.** The OIS-x sensor **1530** may be overlapped with the OIS-x coil **1520** in an optical axis direction. The OIS-x sensor **1530** may be overlapped with the OIS-x coil **1520** in a direction perpendicular to the optical axis. The OIS-x sensor **1530** may face the OIS-x magnet **1510.** The OIS-x sensor **1530** may be disposed at a position corresponding to the OIS-x magnet **1510.** The OIS-x sensor **1530** may detect the movement of the OIS-x magnet **1510.** The movement amount or position of the OIS-x magnet **1510** detected by the OIS-x sensor **1530** may be used for feedback of hand shake correction driving in an x-axis direction.

The lens driving device **1010** may comprise an OIS-x yoke **1540.** The OIS-x yoke **1540** may be disposed in the OIS-x magnet **1510.** The OIS-x yoke **1540** may be disposed between the OIS-x magnet **1510** and the OIS carrier **1310.** The OIS-x yoke **1540** may enhance the interaction force with the OIS-x coil **1520** by preventing magnetic flux leakage of the OIS-x magnet **1510.**

The lens driving device **1010** may comprise an OIS-y driving part **1600.** The OIS driving part may comprise an OIS-y driving part **1600.** The OIS-y driving part **1600** may move the OIS carrier **1310** in a y-axis direction perpendicular to both the optical axis and the x-axis direction. The OIS-y driving part **1600** may move the OIS carrier **1310** in a y-axis direction perpendicular to both the optical axis and the x-axis direction through electromagnetic force. The OIS-y driving part **1600** may comprise a coil and a magnet.

In a second embodiment of the present invention, the OIS-y magnet **1610** and the OIS-y coil **1620** may move the OIS moving part **1300** in a second direction perpendicular to the optical axis direction and the first direction. At this time, the second direction may be a y-axis direction. Due to the interaction between the OIS-y coil **1620** and the OIS-y magnet **1610,** the OIS carrier **1310** can move in a y-axis direction perpendicular to both the optical-axis direction and the x-axis direction. The OIS-y magnet **1610** and the OIS carrier **1310** may move integrally in a y-axis direction. The OIS-y magnet **1610** may be overlapped with the AF magnet **1410** in a second direction. The OIS-y magnet **1610** may be overlapped with the AF magnet **1410** in a y-axis direction.

The lens driving device **1010** may comprise an OIS-y magnet **1610.** The OIS-y driving part **1600** may comprise an OIS-y magnet **1610.** The OIS-y magnet **1610** may be 'OIS-y magnet'. The OIS-y magnet **1610** may be a permanent magnet. The OIS-y magnet **1520** may be disposed in the OIS moving part **1300.** The OIS-y magnet **1610** may be spaced apart from the OIS-x magnet **1510.** The OIS-y magnet **1610** may be spaced apart from the AF magnet **1410.** The OIS-y magnet **1610** may be disposed in the OIS carrier **1310.** The OIS-y magnet **1610** may be disposed on an outer side surface of the OIS carrier **1310.** The OIS-y magnet **1610** may be fixed to the OIS carrier **1310.** The OIS-y magnet **1610** may be coupled to the OIS carrier **1310.** The OIS-y magnet **1610** may be attached to the OIS carrier **1310** with an adhesive. The OIS-y magnet **1610** may be disposed inside the cover **1120.** The OIS-y magnet **1610** may interact with the OIS-y coil **1620.** The OIS-y magnet **1610** may interact electromagnetically with the OIS-y coil **1620.** The OIS-y magnet **1610** may be disposed at a position corresponding to the OIS-y coil **1620.** The OIS-y magnet **1610** and the OIS-y coil **1620** may face each other. The OIS-y magnet **1610** may face the OIS-y coil **1620.** The OIS-y magnet **1610** may be overlapped with the OIS-y coil **1620** in a direction perpendicular to the optical axis. The OIS-y magnet **1610** may be overlapped with the OIS-y coil **1620** in a y-axis direction. The OIS-y magnet **1610** may move in a y-axis direction.

The OIS-y magnet **1610** may be a two-pole magnet. The OIS-y magnet **1610** may comprise a two-pole magnetized magnet. The OIS-y magnet **1610** may comprise an N pole and an S pole.

The lens driving device **1010** may comprise an OIS-y coil **1620.** The OIS-y driving part **1600** may comprise an OIS-y coil **1620.** The OIS-y coil **1620** may interact with the OIS-y magnet **1610.** The OIS-y coil **1620** may be disposed at an opposite side of the AF coil **1420** with respect to the optical axis. The OIS-y coil **1620** may move the OIS-y magnet **1610** in a y-axis direction perpendicular to both the optical axis and the x-axis. The OIS-y coil **1620** may move the OIS-y magnet **1610** in a y-axis direction through interaction with the OIS-y magnet **1610.** The OIS-y coil **1620** may face the OIS-y magnet **1610.** The OIS-y coil **1620** and the OIS-y magnet **1610** may face each other. The OIS-y coil **1620** may be disposed at a position corresponding to the OIS-y magnet **1610.** The OIS-y coil **1620** may be overlapped with the OIS-y magnet **1610** in a direction perpendicular to the optical axis. The OIS-y coil **1620** may be disposed in the inner substrate **1720.** The OIS-y coil **1620** may be disposed in the AF carrier **1200.**

In a second embodiment of the present invention, the OIS-y coil **1620** may move together with the AF moving part **1200.** The OIS-y coil **1620** may move in an optical axis direction together with the AF moving part **1200.** During the AF driving process, the OIS-y coil **1620** may move along with the AF moving part **1200** in an optical axis direction. The OIS-y coil **1620** may be disposed in the AF moving part **1200.** The OIS-y coil **1620** may be fixed to the AF moving part **1200.** The OIS-y coil **1620** may be coupled to the AF moving part **1200.**

The lens driving device **1010** may comprise an OIS-y sensor **1630.** The OIS-y driving part **1600** may comprise an OIS-y sensor **1630.** The OIS-y sensor **1630** may be disposed in the inner substrate **1720.** The OIS-y sensor **1630** may comprise a Hall sensor. The OIS-y sensor **1630** may detect the OIS-y magnet **1610.** The OIS-y sensor **1630** may detect the magnetic force of the OIS-y magnet **1610.** The OIS-y sensor **1630** may be disposed above the OIS-y magnet **1620.** The OIS-y sensor **1630** may be overlapped with the OIS-y magnet **1620** in an optical axis direction. The OIS-y sensor **1630** may be overlapped with the OIS-y magnet **1620** in a direction perpendicular to the optical axis. In a modified embodiment, the OIS-y sensor **1630** may be disposed inside the OIS-y coil **1620.** The OIS-y sensor **1630** may be overlapped with the OIS-y coil **1620** in an optical axis direction. The OIS-y sensor **1630** may face the OIS-y magnet **1610.** The OIS-y sensor **1630** may be disposed at a position corresponding to the OIS-y magnet **1610.** The OIS-y sensor **1630** may detect the movement of the OIS-y magnet **1610.** The movement amount or position of the OIS-y magnet **1610** detected by the OIS-y sensor **1630** may be used for feedback of hand shake correction driving in a y-axis direction.

The lens driving device **1010** may comprise an OIS-y yoke **1640.** The OIS-y yoke **1640** may be disposed in the OIS-y magnet **1610.** The OIS-y yoke **1640** may be disposed between the OIS-y magnet **1610** and the OIS carrier **1310.** The OIS-y yoke **1640** may prevent magnetic flux leakage of the OIS-y magnet **1610** to enhance interaction force with the OIS-y coil **1620.**

When viewed from above, the AF magnet **1410,** the AF coil **1420,** the OIS-y magnet **1610,** and the OIS-y coil **1620** may be sequentially disposed on an imaginary straight line. When viewed from an upper surface, the AF magnet **1410,** the AF coil **1420,** the OIS-y magnet **1610,** and the OIS-y coil **1620** may be sequentially disposed on an imaginary straight line. When viewed from above, the AF magnet **1410,** the AF coil **1420,** the OIS-y magnet **1610,** and the OIS-y coil **1620** may be disposed in order. When viewed from above, the AF magnet **1410,** the AF coil **1420,** the OIS-y magnet **1610,** and the OIS-y coil **1620** may be sequentially disposed in a y-axis direction. When viewed from above, the AF magnet **1410,** the AF coil **1420,** the OIS-y magnet **1610,** and the OIS-y coil **1620** may be overlapped in a y-axis direction.

The lens driving device **1010** may comprise substrates **1710** and **1720.** The substrates **1710** and **1720** may comprise a flexible printed circuit board (FPCB). The substrates **1710** and **1720** may be electrically connected to the coils **1420, 1520,** and **1620.** The substrates **1710** and **1720** may be electrically connected to the sensors **1430, 1530,** and **1630.**

The lens driving device **1010** may comprise an outer substrate **1710.** An outer substrate **1710** may be disposed in the base **1110.** The outer substrate **1710** may be electrically connected to the coils **1420, 1520,** and **1620.** The outer substrate **1710** may be electrically connected to the sensors **1430, 1530,** and **1630.** The outer substrate **1710** may connect the AF carrier **1210** and the base **1110.** The outer substrate **1710** may elastically connect the AF carrier **1210** and the base **1110.** The outer substrate **1710** may connect the fixed part **1100** and the inner substrate **1720.** The outer substrate **1710** may movably support the AF carrier **1210** against the base **1110.** The outer substrate **1710** may guide the AF carrier **1210** to move in an optical axis direction against the base **1110.** The outer substrate **1710** may comprise a flexible substrate. The outer substrate **1710** may comprise a flexible printed circuit board (FPCB). The outer substrate **1710** may comprise an elastic portion. The outer substrate **1710** may comprise an elastic member. The outer substrate **1710** may comprise an outer side portion **1711** being disposed in the fixed part **1100** and a connection part **1712** being extended from the outer side portion **1711** and coupled to the inner substrate **1720.**

The outer substrate **1710** may comprise an outer side portion **1711.** The outer side portion **1711** may be disposed in the base **1110.** The outer side portion **1711** may be formed to surround the side surface of the base **1110.** The outer side portion **1711** may be disposed on three side surfaces of the base **1110.** The outer side portion **1711** may comprise two terminal units. The two terminal units may be disposed opposite to each other with respect to the optical axis. The terminal unit may comprise a terminal **1711-1.**

The outer substrate **1710** may comprise a terminal **1711-1.** The outer side portion **1711** of the outer substrate **1710** may comprise a terminal **1711-1.** The terminal **1711-1** may be electrically connected to the terminal **1712-1.** The terminal **1711-1** may be disposed in a lower end portion of the base **1110.** The terminal **1711-1** may be coupled to the printed circuit board **1050.** The terminal **1711-1** may be coupled to a terminal of the printed circuit board **1050** through soldering. The terminal **1711-1** may be coupled to a terminal of the printed circuit board **1050** through a conductive member. The terminal **1711-1** may be connected to a terminal of the printed circuit board **1050.** The terminal **1711-1** may be electrically connected to a terminal of the printed circuit board **1050.**

The outer substrate **1710** may comprise a connection part **1712.** The connection part **1712** may be an 'extension part'. The connection part **1712** may be a 'leg part'. The connection part **1712** may be extended from the outer side portion **1711.** At least a portion of the connection part **1712** may move along with the AF carrier **1210.** The extension part may be extended from the outer side portion **1711.** At least a portion of the extension part may move together with the AF carrier **1210.** At least a portion of the connection part **1712** may be disposed perpendicular to the optical axis direction. The connection part **1712** of the outer substrate **1710** may be coupled with the inner substrate **1720** so that the inner substrate **1720** can move in an optical axis direction. At least a portion of the connection part **1712** may be disposed parallel to an optical axis direction.

The connection part **1712** may comprise a plurality of connection parts. The connection part **1712** may comprise a first connection part and a second connection part. The second connection part may be disposed under the first connection part.

The outer substrate **1710** may comprise a terminal **1712-1.** The connection part **1712** of the outer substrate **1710** may comprise a terminal **1712-1.** The terminal **1712-1** may be coupled with the terminal **1721-1** of the inner substrate **1720.** The terminal **1712-1** of the outer substrate **1710** may be coupled to the terminal **1721-1** of the inner substrate **1720** through soldering. The terminal **1712-1** of the outer substrate **1710** may be coupled to the terminal **1721-1** of the inner substrate **1720** through a conductive member. The terminal **1712-1** of the outer substrate **1710** may be connected to the terminal **1721-1** of the inner substrate **1720.** The terminal **1712-1** of the outer substrate **1710** may be electrically connected to the terminal **1721-1** of the inner substrate **1720.**

The outer substrate **1710** may comprise a bent part **1712-2.** The bent part **1712-2** may be formed in the connection part **1712.** The bent part **1712-2** may be formed in each of the first connection part and the second connection part. The bent part **1712-2** may comprise a shape bent at least twice. The bent part **1712-2** may comprise a shape bent in a U shape. The bent part **1712-2** may have a rounded shape. The bent part **1712-2** may comprise a part disposed parallel to an optical axis.

Hereinafter, one of the 'terminal **1711-1'** and the 'terminal **1712-1'** of the outer substrate **1710** may be referred to as a 'first terminal', and the other may be referred to as a 'second terminal'.

The lens driving device **1010** may comprise an inner substrate **1720.** The inner substrate **1720** may be electrically connected to the coils **1420, 1520,** and **1620.** The inner substrate **1720** may be electrically connected to the sensors **1430, 1530,** and **1630.** The inner substrate **1720** may be disposed in the AF moving part **1200.** The inner substrate **1720** may be disposed in the AF carrier **1210.** The inner substrate **1720** may be fixed to the AF carrier **1210.** The inner substrate **1720** may be coupled to the AF carrier **1210.** The inner substrate **1720** may be attached to the AF carrier **1210** with an adhesive. The inner substrate **1720** may comprise a flexible substrate. The inner substrate **1720** may comprise a flexible printed circuit board (FPCB). The inner substrate **1720** may comprise an elastic portion. The inner substrate **1720** may comprise an elastic member.

The inner substrate **1720** may comprise a side plate portion **1721.** The side plate portion **1721** may be disposed on a side surface of the AF carrier **1210.** The side plate portion **1721** may be disposed on an outer side surface of the AF carrier **1210.** In another embodiment, the side plate portion **1721** may be disposed on an inner surface of the AF carrier **1210.** The side plate portion **1721** of the inner substrate **1720** may comprise a plurality of portions. The side plate portion **1721** may comprise first to fourth portions.

The inner substrate **1720** may comprise a first portion. The first portion may be disposed in the AF carrier **1210.** The AF coil **1420** may be disposed in a first portion of the inner substrate **1720.** The AF sensor **1430** may be disposed in a first portion of the inner substrate **1720.** The AF yoke **1440** may be disposed on a first portion of the inner substrate **1720.**

The inner substrate **1720** may comprise a second portion. The second portion can be placed at an opposite side of the first portion. The second portion may be disposed in the AF carrier **1200.** The second portion may be disposed on a second side surface of the AF carrier **1200.** The OIS-y coil **1620** may be disposed in a second portion of the inner substrate **1720.** The OIS-y sensor **1630** may be disposed in a second portion of the inner substrate **1720.** More specifically, the OIS-y sensor **1630** may be disposed in the upper plate portion **1722** which is bent and disposed above a second portion of the inner substrate **1720.** The OIS-y sensor **1630** may be disposed on a lower surface of the upper plate portion **1722.**

The inner substrate **1720** may comprise a third portion. A third portion may be disposed in the AF carrier **1200.** The third portion may be disposed on a third side surface of the AF carrier **1200.** The OIS-x coil **1520** may be disposed in a third portion of the inner substrate **1720.** The OIS-x sensor **1530** may be disposed in a third portion of the inner substrate **1720.** In more detail, the OIS-x sensor **1530** may be disposed in the upper plate portion **1722** bent from an upper side of the third portion of the inner substrate **1720.** The OIS-x sensor **1530** may be disposed on a lower surface of the upper plate portion **1722.**

The inner substrate **1720** may comprise a fourth portion. The fourth portion may be disposed at an opposite side of the third portion. The fourth portion may be disposed in the AF carrier **1200.** The fourth portion may be disposed on a fourth side surface of the AF carrier **1200.**

The inner substrate **1720** may comprise a terminal **1721-1.** The terminal **1721-1** may be disposed in the fourth portion of the inner substrate **1720.** The terminal **1721-1** may be electrically connected to the coils **1420, 1520,** and **1620.** The terminal **1721-1** may be electrically connected to the sensors **1430, 1530,** and **1630.**

The lens driving device **1010** may comprise a guide member. The guide member may comprise a ball. The guide member may comprise a pin. The guide member may comprise a cylindrical member. The guide member may guide the movement of the moving part against the fixed part **1100** in a specific direction.

The lens driving device **1010** may comprise an AF guide ball **1810.** The AF guide ball **1810** may guide the movement of the AF moving part **1200** against the fixed part **1100** in an optical axis direction. The AF guide ball **1810** may guide the movement of the AF carrier **1210** against the base **1110** in an optical axis direction. The AF guide ball **1810** may be disposed between the fixed part **1100** and the AF moving part **1200.** The AF guide ball **1810** may be disposed between the base **1110** and the AF carrier **1210.** The AF guide ball **1810** may be disposed between the base **1110** and the AF carrier **1210** in an x direction. Or, the AF guide ball **1810** may be disposed between the base **1110** and the AF carrier **1210** in a y direction. The AF guide ball **1810** may be disposed in a groove of the base **1110.** The AF guide ball **1810** may be disposed in a groove of the AF carrier **1210.** The AF guide ball **1810** may have a spherical shape. The AF guide ball **1810** may be formed of metal. Grease may be applied to the surface of the AF guide ball **1810.**

The AF guide ball **1810** may be disposed at a first corner of the base **1110.** The AF guide ball **1810** may be disposed at a second corner in a diagonal direction of the first corner of the base **1110.** The AF guide ball **1810** may be disposed at each of the first corner and the second corner of the base **1110.** The first corner region and the second corner region of the fixed part **1100** may be disposed in diagonal directions with respect to an optical axis. The AF guide balls **1810** may be disposed in the first corner region and the second corner region of the fixed part **1100.** Two sets of AF guide balls **1810** may be disposed at each of the first corner and the second corner of the base **1110.** At this time, one set may comprise 4 balls. The two sets may be disposed at an opposite side of the pillar part of the AF carrier **1210** from each other.

When viewed from above, the AF guide ball **1810** may comprise: a first unit ball being disposed in a first corner region of the fixed part **1100;** and a second unit ball being disposed in a second corner region disposed in a diagonal direction of the first corner region of the fixed part **1100.** At this time, the OIS guide ball **1820** may comprise a third unit ball and a fourth unit ball being spaced apart from each other when viewed from above and disposed between the first unit ball and the second unit ball of the AF guide ball **1810** in a diagonal direction.

When viewed from above, the AF guide ball **1810** may comprise: a first unit ball and a second unit ball being disposed in a first corner region of the fixed part **1100;** and a third unit ball and a fourth unit ball being disposed in a second corner region being disposed in a diagonal direction of the first corner region of the fixed part **1100.** The AF guide ball **1810** may be disposed in two sets at one corner.

The AF guide ball **1810** may comprise a ball being overlapped with the OIS guide member **1820** in a direction perpendicular to the optical axis direction. At least a portion of the AF guide ball **1810** may be overlapped with the OIS guide member **1820.**

The AF guide ball **1810** may comprise an inner ball **1811.** The inner ball **1811** may be disposed in the pillar part **1111** of the base **1110.** The inner ball **1811** may be disposed in the inner groove **1111-1** of the base **1110.** The inner ball **1811** may be disposed in the inner groove **1224-1** of the AF carrier **1210.** The inner ball **1811** may be disposed in the inner groove **1224-1** of the AF moving part **1200.** The inner ball **1811** may be disposed in the inner groove **1111-1** of the base **1110** and the inner groove **1224-1** of the AF carrier **1210.** The inner ball **1811** may be disposed between the inner groove **1111-1** of the base **1110** and the inner groove **1224-1** of the AF carrier **1210.** The inner ball **1811** may be disposed between the AF moving part **1200** and the pillar part **1111** of the fixed part **1100.**

The AF guide ball **1810** may comprise an outer ball **1812.** The outer ball **1812** may be disposed in the outer wall part **1112** of the base **1110.** The outer ball **1812** may be disposed in the outer groove **1112-1** of the base **1110.** The outer ball **1812** may be disposed in the outer groove **1224-2** of the AF carrier **1210.** The outer ball **1812** may be disposed in the outer groove **1112-1** of the base **1110** and the outer groove **1224-2** of the AF carrier **1210.** The outer ball **1812** may be disposed between the outer groove **1112-1** of the base **1110** and the outer groove **1224-2** of the AF carrier **1210.** The outer ball **1812** may be disposed between the outer groove **1112-1** of the fixed part **1100** and the outer groove **1224-2** of the AF moving part **1200.** The outer ball **1812** may be disposed between the AF moving part **1200** and the outer wall part **1112** of the fixed part **1100.**

The inner ball **1811** may comprise a plurality of inner balls **1811.** The plurality of inner balls **1811** may be disposed in an optical axis direction. The inner ball **1811** may comprise four inner balls **1811.** The inner ball **1811** may comprise first to fourth inner balls. Two of the four inner balls **1811** may have a large diameter and the other two may have a small diameter. Two balls with a large diameter can be disposed at an uppermost place and at a lowermost place. That is, two balls with a small diameter may be disposed between the two balls with a large diameter.

The inner ball **1811** may comprise an uppermost inner ball **1811-1.** The uppermost inner ball **1811-1** may be disposed at a highest point among the inner balls **1811.** The uppermost inner ball **1811-1** may be disposed closest to the upper plate **1121** of the cover **1120** among the inner balls **1811.** The inner ball **1811** may comprise a lowermost inner ball **1811-2.** The lowermost inner ball **1811-2** may be disposed at a lowest point among the inner balls **1811.** The lowermost inner ball **1811-2** may be disposed closest to the lower plate portion of the base **1110** among the inner balls **1811.** The plurality of inner balls **1811** may comprise balls having a smaller diameter than each of the uppermost inner ball **1811-1** and the lowermost inner ball **1811-2.** The plurality of inner balls **1811** may comprise balls being disposed between the uppermost inner ball **1811-1** and the lowermost inner ball **1811-2.**

The outer ball **1812** may comprise a plurality of outer balls **1812.** The plurality of outer balls **1812** may be disposed in an optical axis direction. The outer ball **1812** may comprise four outer balls **1812.** The outer ball **1812** may comprise first to fourth outer balls. Two of the four outer balls **1812** may have a large diameter and the other two may have a small diameter. Two balls with a large diameter can be disposed at an uppermost place and at a lowermost place. That is, two balls with a small diameter may be disposed between the two balls with a large diameter.

The outer ball **1812** may comprise an uppermost outer ball **1812-1.** The uppermost outer ball **1812-1** may be disposed at a highest point among the outer balls **1812.** The uppermost outer ball **1812-1** may be disposed closest to the upper plate **1121** of the cover **1120** among the outer balls **1812.** The outer ball **1812** may comprise a lowermost outer ball **1812-2.** The lowermost outer ball **1812-2** may be disposed at a lowest point among the outer balls **1812.** The lowermost outer ball **1812-2** may be disposed closest to a lower plate portion of the base **1110** among the outer balls **1812.** The plurality of outer balls **1812** may comprise balls having a smaller diameter than each of the uppermost outer ball **1812-1** and the lowermost outer ball **1812-2.** The plurality of outer balls **1812** may comprise balls being disposed between the uppermost outer ball **1812-1** and the lowermost outer ball **1812-2.**

The AF guide ball **1810** may comprise a plurality of balls being disposed in an optical axis direction. At this time, the plurality of balls may comprise uppermost balls **1811-1** and **1812-1** being disposed at a highest point and lowermost balls **1811-2** and **1812-2** being disposed at a lowest point. The height of the point where the elastic member **1920** presses the plate member **1910** may be disposed between the heights of the uppermost balls **1811-1** and **1812-1** and the heights of the lowermost balls **1811-2** and **1812-2.**

The lens driving device **1010** may comprise an OIS guide ball **1820.** The OIS guide ball **1820** may guide the movement of the OIS carrier **1310** against the AF carrier **1210** in a direction perpendicular to the optical axis. The OIS guide ball **1820** may be disposed between the AF moving part **1200** and the OIS moving part **1300.** The OIS guide ball **1820** may be disposed between the AF carrier **1210** and the OIS carrier **1310.** The OIS guide ball **1820** may be disposed between the AF carrier **1210** and the OIS carrier **1310** in an optical axis direction.

The OIS guide ball **1820** may be disposed between the pre-pressurizing member **1230** of the AF carrier **1210** and the OIS carrier **1310.** The OIS guide ball **1820** may be pressed between the AF carrier **1210** and the OIS carrier **1310** by the pressing force of the elastic members **1830, 1840,** and **1850.** The pre-pressurizing member **1230** may press the OIS guide ball **1820** downward while being coupled to the holder member **1220.** The pre-pressurizing member **1230** may press the OIS guide ball **1820** in a direction of the OIS carrier **1310** while being coupled to the holder member **1220.** At this time, the OIS carrier **1310** may press the OIS guide ball **1820** in a direction of the pre-pressurizing member **1230** by the restoring force of the elastic members **1830, 1840,** and **1850.** Accordingly, the OIS guide ball **1820** may be pressed between the pre-pressurizing member **1230** and the OIS carrier **1310.**

The OIS guide ball **1820** may guide the movement of the OIS moving part **1300** in an x-axis direction and a y-axis direction. The OIS guide ball **1820** may guide the OIS carrier **1310** to move in an x-axis direction and a y-axis direction perpendicular to the optical axis direction against the AF carrier **1210.** That is, the OIS guide ball **1820** may guide the OIS carrier **1310** to move in an x-axis direction and a y-axis direction. In other words, the OIS guide ball **1820** may guide movement in both the x-axis direction and the y-axis direction. For reference, compared to the comparative example in which a ball for guiding an x-axis direction and a ball for guiding a y-axis direction are separately provided, a ball for guiding an x-axis direction and a ball for guiding a y-axis direction are integrally provided. In a second embodiment, the size of the lens driving device **1010** can be minimized. In particular, the height of the lens driving device **1010** in an optical axis direction may be reduced. Through this, the height being protruded from the smartphone, that is, the shoulder height can be minimized. The OIS guide ball **1820** may comprise a plurality of balls. The OIS guide ball **1820** may comprise four balls.

As a modified embodiment, the OIS guide ball **1820** may separately provide a ball for guiding driving in an x-axis direction and a ball for guiding driving in a y-axis direction.

The lens driving device **1010** may comprise an elastic member. The elastic member may be formed to support the OIS driving. The elastic member may support the movement of the OIS moving part **1300.** The elastic member may be formed to press the OIS guide member **1820.** The elastic member may be formed to guide both the OIS-x-axis driving and the OIS-y-axis driving only with the OIS guide member **1820.** The elastic member may comprise a leaf spring. The elastic member may comprise a wire. The elastic member may have elasticity. The elastic member may be formed of metal.

The first support member may be disposed between the fixed part **1100** and the AF moving part **1200.** The first support member may guide the AF moving part **1200** to move in an optical axis direction. The second support member may be disposed between the AF moving part **1200** and the OIS moving part **1300.** The second support member may guide the OIS moving part **1300** to move in a direction perpendicular to the optical axis direction. One side of the third support member may be coupled to the AF moving part **1200** and the other side may be coupled to the OIS moving part **1300.**

The AF moving part **1200** may comprise a first elastic member. The OIS moving part **1300** may comprise a second elastic member. The third support member may couple the first elastic member and the second elastic member. The third support member may comprise a wire **1850.**

The lens driving device **1010** may comprise an upper elastic member **1830.** The upper elastic member **1830** may be an 'upper spring'. The upper elastic member **1830** may be a leaf spring. The upper elastic member **1830** may have elasticity. The upper elastic member **1830** may be disposed in the OIS moving part **1300.** The upper elastic member **1830** may be coupled to the OIS moving part **1300.** The upper elastic member **1830** may be connected to the OIS moving part **1300.** The upper elastic member **1830** may be disposed on an upper surface of the OIS moving part **1300.** The upper elastic member **1830** may be disposed on an upper surface of the OIS carrier **1310.** The upper elastic member **1830** may be disposed in the OIS carrier **1310.** The upper elastic member **1830** may be disposed at an upper portion of the OIS carrier **1310.** The upper elastic member **1830** may be disposed above the OIS carrier **1310.** The upper elastic member **1830** may be disposed perpendicular to the optical axis.

The upper elastic member **1830** may comprise an inner side portion **1831.** The inner side portion **1831** may be coupled to the OIS moving part **1300.** The upper elastic member **1830** may comprise an outer side portion **1832.** The outer side portion **1832** may be coupled to the wire **1850.** The upper elastic member **1830** may comprise a connection part **1833.** The connection part **1833** may connect the inner side portion **1831** and the outer side portion **1832.** The connection part **1833** may elastically connect the inner side portion **1831** and the outer side portion **1832.** The connection part **1833** may comprise elasticity. The connection part **1833** may be an elastic part.

An inner side portion **1831** of the upper elastic member **1830** may be disposed lower than an outer side portion **1832.** The inner side portion **1831** of the upper elastic member **1830** may be disposed lower than the outer side portion **1832** by a first distance. The reason why the inner side portion **1831** of the upper elastic member **1830** is lower than the outer side portion **1832** may be due to the pressing force of the pre-pressurizing member **1230.** Through this structure, the OIS guide member **1820** can be maintained as it is in contact with the pre-pressurizing member **1230** of the AF carrier **1210** and the OIS carrier **1310.**

The lens driving device **1010** may comprise a lower elastic member **1840.** The lower elastic member **1840** may be a 'terminal on a lower surface of the housing' or a 'plate on a lower surface of the housing'. The lower elastic member **1840** may be a leaf spring. The lower elastic member **1840** may have elasticity. The lower elastic member **1840** may be disposed in the AF moving part **1200.** The lower elastic member **1840** may be coupled to the AF moving part **1200.** The lower elastic member **1840** may be connected to the AF moving part **1200.** The lower elastic member **1840** may be disposed on a lower surface of the AF moving part **1200.** The lower elastic member **1840** may be disposed on a lower surface of the AF carrier **1210.** The lower elastic member **1840** may be disposed in the AF carrier **1210.** The lower elastic member **1840** may be disposed at a lower portion of the AF carrier **1210.** The lower elastic member **1840** may be disposed below the AF carrier **1210.** The lower elastic member **1840** may be disposed perpendicular to the optical axis.

The lower elastic member **1840** may comprise an outer side portion **1841.** The outer side portion **1841** may be coupled with the AF moving part **1200.** The lower elastic member **1840** may comprise an inner side portion **1842.** The inner side portion **1842** may be coupled to the wire **1850.** The lower elastic member **1840** may comprise a connection part **1843.** The connection part **1843** may connect the outer side portion **1841** and the inner side portion **1842.** The connection part **1843** may elastically connect the outer side portion **1841** and the inner side portion **1842.** The connection part **1843** may comprise elasticity. The connection part **1843** may be an elastic part.

The lens driving device **1010** may comprise a wire **1850.** The wire **1850** may be a 'side elastic member'. The wire **1850** may be a wire. The wire **1850** may be a wire spring. The wire **1850** may be a suspension wire. The wire **1850** may have elasticity. The wire **1850** may connect the upper elastic member **1830** and the lower elastic member **1840.** The wire **1850** may elastically connect the upper elastic member **1830** and the lower elastic member **1840.** The wire **1850** may be disposed parallel to an optical axis. The wire **1850** may be disposed in an optical axis direction.

The height of the point where the elastic member **1920** presses the plate member **1910** is lower than the height of the ball being disposed lower among the uppermost inner ball **1811-1** and the uppermost outer ball **1812-1,** and may be higher than the height of the ball being disposed higher among the lowermost inner ball **1811-1** and the lowermost outer ball **1812-2.** More specifically, as shown in FIG. **77**(a), when the AF moving part **1200** moves upward, the height **b** of the point where the elastic member **1920** presses the plate member **910** may be higher than the height a of the ball being disposed higher among the lowermost inner ball **1422** and the lowermost outer ball **1412.** A gap c may exist at a height between the two points. In addition, as shown in FIG. 77(b), when the AF moving part **1200** moves downward, the height e of the point where the elastic member **1920** presses the plate member **1910** may be lower than the height **d** of the ball being disposed lower among the uppermost inner ball **1421** and the uppermost outer ball **1411.** A gap **f** may exist at a height between the two points. Through this, generation of a moment generated when the elastic member **1920** presses the plate member **1910** may be prevented or minimized. That is, a phenomenon in which the plate member **1910** is tilted or separated may be prevented.

The lens driving device **1010** may comprise a pressing member. The pressing member may be an 'AF guide ball pressing member'. The pressing member may press the AF guide ball **1810.** The pressing member may be formed to press a ball. The AF guide ball **1810** pressed by the pressing member may be held between the fixed part **1100** and the AF moving part **1200.** The AF guide ball **1810** pressed by the pressing member may be held between the base **1110** and the AF carrier **1210.** The pressing member may maintain the AF guide ball **1810** as it is in contact with the fixed part **1100** and the AF moving part **1200.** The pressing member may maintain the AF guide ball **1810** as it is in contact with the base **1110** and the AF carrier **1210.**

The lens driving device **1010** may comprise a plate member **1910.** The pressing member may comprise a plate member **1910.** The plate member **1910** may be disposed in the AF guide ball **1810.** The plate member **1910** may be in contact with the AF guide ball **1810.** The plate member **1910** may be disposed in the elastic member **1920.** The plate member **1910** may be disposed in the base **1110.** The plate member **1910** may be disposed between the elastic member **1920** and the AF guide ball **1810.** The plate member **1910** may press the AF guide ball **1810** toward the AF carrier **1210** by the elastic member **1920.** The plate member **1910** may be disposed between the AF guide ball **1810** and the fixed part **1100.** The plate member 1910 may be disposed between the inner ball **1811** and the pillar part **1111** of the fixed part **1100.**

The lens driving device **1010** may comprise an elastic member **1920.** The pressing member may comprise an elastic member **1920.** The elastic member **1920** may be a spring. The elastic member **1920** may be a tapered spring. The elastic member **1920** may be disposed in the fixed part **1100.** The elastic member **1920** may press the AF guide ball **1810** toward the AF moving part **1200.** The elastic member **1920** may press the plate member **1910** toward the AF guide ball **1810.** The elastic member **1920** may be disposed between the plate member **1910** and the fixed part **1100.** The elastic member **1920** may push the plate member **1910** against the fixed part **1100.** The elastic member **1920** may press the plate member **1910** in an opposite direction to the fixed part **1100.** The elastic member **1920** may be disposed between the plate member **1910** and the pillar part **1111** of the fixed part **1100.** The elastic member **1920** may be disposed in the inner groove **1111-1** of the fixed part **1100.**

The elastic member **1920** may press the AF guide ball **1810** to be supported by the fixed part **1100.** The elastic member **1920** may press the inner ball **1811** to be supported by the fixed part **1100.** The elastic member **1920** may press the outer ball **1812** to be supported by the fixed part **1100.**

As a modified embodiment, the elastic member **1920** may be disposed in the AF moving part **1200.** At this time, the elastic member **1920** may press the AF guide ball **1810** toward the fixed part **1100.** The elastic member **1920** may be disposed in one of the fixed part **1100** and the AF moving part **1200** to press the AF guide ball **1810** toward the other one of the fixed part **1100** and the AF moving part **1200.** The elastic member **1920** may press the plate member **1910.** The elastic member **1920** may be disposed between the plate member **1910** and the base **1110.** The elastic member **1920** may be disposed between the AF guide ball **1810** and the base **1110.** The elastic member **1920** may be disposed in the base **1110.** The elastic member **1920** may be disposed in the inner groove **1111-1** of the base **1110.** The elastic member **1920** may press the AF guide ball **1810** toward the AF carrier **1210.** Through this, the AF guide ball **1810** can maintain a contact state between the plate member **1910** and the AF carrier **1210.**

The elastic member **1920** may comprise a bent part. The bent part may comprise a bent shape. The bent part may comprise a plurality of bent parts. The bent part may comprise three bent parts. The elastic member **1920** may be bent at least three times. The elastic member **1920** may comprise an upper bent part **1921.** The elastic member **1920** may comprise a lower bent part **1922.** The elastic member **1920** may comprise a connection bent part **1923.** The connection bent part **1923** may be disposed between the upper bent part **1921** and the lower bent part **1922.** The upper bent part **1921** may form an obtuse angle. The lower bent part **1922** may form an obtuse angle. The connection bent part **1923** may form an obtuse angle. The upper bent part **1921** may be disposed in the fixed part **1100.** The lower bent part **1922** may be disposed in the fixed part **1100.** The connection bent part **1923** may be disposed in the plate member **1910.** Through this structure, the elastic member **1920** may push the plate member **1910** against the fixed part **1100.** The connection bent part **1923** may be in contact with the plate member **1910** and press the plate member **1910** toward the AF guide ball **1810.**

The lens driving device **1010** may comprise a reinforcing member **1930.** The reinforcing member **1930** may be disposed in the base **1110.** The reinforcing member **1930** may be disposed to reinforce the strength of the base **1110.** The reinforcing member **1930** may prevent damage to the base **1110.** The reinforcing member **1930** can prevent the pillar part **1111** of the base **1110** from damages. The reinforcing member **1930** may prevent the outer wall part **1112** of the base **1110** from damages. The reinforcing member **1930** may have elasticity. The reinforcing member **1930** may be formed of metal. The reinforcing member **1930** may comprise a shape bent at least twice. The reinforcing member **1930** may be formed in the shape of a symbol 'c' when viewed from above. The reinforcing member **1930** may be opened inward.

The reinforcing member **1930** may comprise an inner side portion **1931.** The inner side portion **1931** may be disposed at an opposite surface of the inner groove **1111-1** of the pillar part **1111** of the fixed part **1100.** The reinforcing member **1930** may comprise an outer side portion **1932.** The outer side portion **1932** may be disposed at an opposite surface of the outer groove **1112-1** of the outer wall part **1112** of the fixed part **1100.** The reinforcing member **1930** may comprise a connection part **1933.** The connection part **1933** may connect the inner side portion **1931** and the outer side portion **1932.**

The lens driving device **1010** may comprise a cover **1940.** The cover **1940** may be disposed above the AF guide ball **1810.** The cover **1940** may be overlapped with the AF guide ball **1810** in an optical axis direction. The cover **1940** may be overlapped with the inner ball **1811** in an optical axis direction. The cover **1940** may be overlapped with the outer ball **1812** in an optical axis direction. The cover **1940** may be disposed on the inner groove **1224-1** and the outer groove **1224-2** of the AF carrier **1210** to prevent the AF guide ball **1810** from escaping upward.

Hereinafter, a component of a lens driving device according to a modified embodiment will be described with reference to drawings.

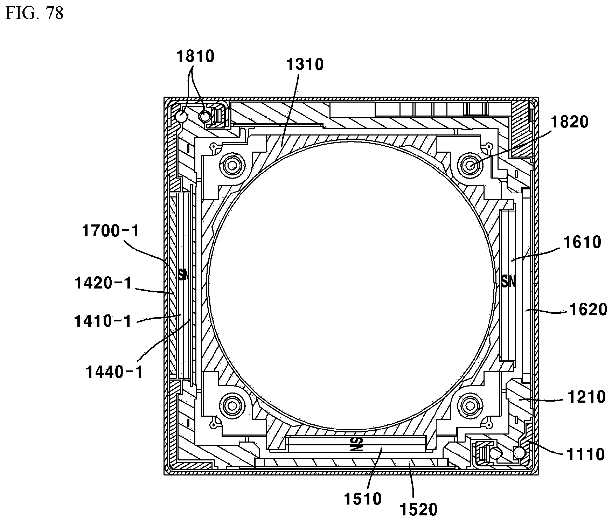

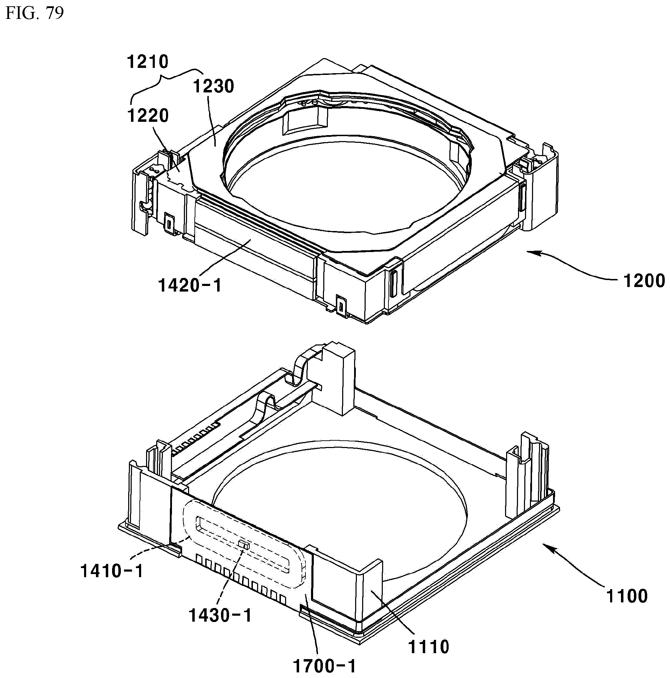

FIG. 78 is a cross-sectional view of a lens driving device according to a modified embodiment cut in a direction perpendicular to an optical axis and viewed from above; and FIG. 79 is an exploded perspective view of some components of a lens driving device according to a modified embodiment.

A lens driving device according to a modified embodiment may comprise an AF driving part **1400.** In a modified embodiment, compared to a second embodiment of the present invention, the positions of the AF coil **1420-1** and the AF magnet **1410-1** may be reversed. That is, in a modified embodiment, the AF coil **1420-1** may be disposed on the fixed part **1100** and the magnet **1410-1** may be disposed on the AF moving part **1200.**

The lens driving device may comprise an AF magnet **1410-1.** The AF driving part **1400** may comprise an AF magnet **1410-1.** The AF magnet **1410-1** may be disposed in the AF moving part **1200.** The AF magnet **1410-1** may be disposed in the AF carrier **1210.** The AF magnet **1410-1** may be disposed between the AF coil **1420-1** and the AF carrier **1210.** The AF magnet **1410-1** may be disposed inside the AF coil **1420-1.** The AF magnet **1410-1** may be overlapped with the AF coil **1420-1** in a direction perpendicular to the optical axis. The AF magnet **1410-1** may face the AF coil **1420-1.** The AF magnet **1410-1** and the AF coil **1420-1** may face each other. The AF magnet **1410-1** may be disposed at a position corresponding to the AF coil **1420-1.** The AF magnet **1410-1** may interact with the AF coil **1420-1.** The AF magnet **1410-1** may interact electromagnetically with the AF coil **1420-1.** The AF magnet **1410-1** may be movable. The AF magnet **1410-1** may be movably disposed. The AF magnet **1410-1** may move during AF operation. The AF magnet **1410-1** may move together with the AF carrier **1210.** The AF magnet **1410-1** can move in an optical axis direction.

The lens driving device may comprise an AF coil **1420-1.** The AF driving part **1400** may comprise an AF coil **1420-1.** The AF coil **1420-1** may be disposed in the substrate **1700-1.** The AF coil **1420-1** may be disposed in the fixed part **1100.** The AF coil **1420-1** may be disposed in the base **1110.** The AF coil **1420-1** may be disposed in the cover **1120.** The AF coil **1420-1** may be disposed outside the AF magnet **1410-1.** The AF coil **1420-1** may be disposed between the side plate **1122** of the cover **1120** and the AF magnet **1410-1.** The AF coil **1420-1** may be fixed. The AF coil **1420-1** can be maintained in a fixed state even during AF driving.

The lens driving device may comprise an AF sensor **1430-1.** The AF driving part **1400** may comprise an AF sensor **1430-1.** The AF sensor **1430-1** may detect the AF magnet **1410-1.** The AF sensor **1430-1** may be disposed in the substrate **1700-1.** The AF sensor **1430-1** may be disposed inside the AF coil **1420-1.** The AF sensor **1430-1** may be a Hall sensor. The movement amount or position of the AF magnet **1410-1** detected by the AF sensor **1430-1** may be used for feedback of auto focus driving.

The lens driving device may comprise an AF yoke **1440-1.** The AF driving part **1400** may comprise an AF yoke **1440-1.** The AF yoke **1440-1** may be disposed at a position corresponding to the AF magnet **1410-1.** The AF yoke **1440-1** may be disposed in the AF magnet **1410-1.** The AF yoke **1440-1** may be disposed between the magnet **1320** and the AF carrier **1210.** The AF yoke **1440-1** may be disposed on an inner surface of the AF magnet **1410-1.** An outer surface of the AF magnet **1410-1** may face the AF coil **1420-1.** Through this, the AF yoke **1440-1** can increase electromagnetic interaction force between the AF magnet **1410-1** and the AF coil **1420-1** by minimizing leakage flux of the AF magnet **1410-1.**

The lens driving device may comprise a substrate **1700-1.** The substrate **1700-**1 may be disposed in the fixed part **1100.** The substrate **1700-1** may be disposed in the base **1110.** The substrate **1700-1** may be disposed in the cover **1120.** The substrate **1700-1** may be disposed in the side plate **1122** of the cover **1120.** The substrate **1700-**1 may be disposed on an inner surface of the side plate **1122** of the cover **1120.** The substrate **1700-1** may be disposed on an outer surface of the side plate **1122** of the cover **1120.** The substrate **1700-1** may be disposed parallel to an optical axis. An AF coil **1420-1** and an AF sensor **1430-1** may be disposed in the substrate **1700-1.** The substrate **1700-1** may comprise a printed circuit board. The substrate **1700-1** may comprise a flexible printed circuit board (FPCB).

A lens driving device according to a modified embodiment may comprise any one or more among: a fixed part **1100;** an AF moving part **1200;** an OIS moving part **1300;** an OIS-x driving part **1500;** an OIS-y driving part **1600;** substrates **1710** and **1720;** balls **1810** and **1820;** elastic members **1830, 1840,** and **1850;** a plate member **1910;** an elastic member **1920;** a reinforcing member **1930;** and a cover **1940.** At this time, for the descriptions on: the fixed part **1100;** the AF moving part **1200;** the OIS moving part **1300;** the OIS-x driving part **1500;** the OIS-y driving part **1600;** the substrates **1710** and **1720;** the balls **1810** and **1820;** the elastic members **1830, 1840,** and **1850;** the plate member **1910;** the elastic member **1920;** the reinforcing member **1930;** and the cover **1940,** the descriptions on the corresponding components in the second embodiment of the present invention may be applied by analogy.

There are advantages in that the second embodiment and the modified embodiment of the present invention have no centering force in an optical axis direction of the yoke compared to the comparative example in which the ball is pressed through the attractive force between the yoke and the magnet using a tapered spring. In addition, by arranging the AF guide balls **1810** diagonally, it is possible to prevent the AF moving part **1200** from rotating or tilting and to secure necessary adhesion. However, as a modified embodiment, both two sets of AF guide balls **1810** may be disposed on one side of the fixed part **1100,** not in a diagonal direction. As another modified embodiment, the AF guide ball **1810** may be used as a shaft structure to minimize the tilt of the module, that is, the AF moving part **1200.**

Hereinafter, auto focus (AF) driving of the lens driving device according to a second embodiment of the present invention will be described with reference to the drawings.

FIGS. 80 to 82 are views for explaining auto focus driving of a lens driving device according to a second embodiment of the present invention. FIG. 80 is a cross-sectional view illustrating the appearance of a moving part in an initial state in which no current is applied to an AF coil. FIG. 81 is a cross-sectional view illustrating a state in which a moving part moves upward in an optical axis direction when a forward current is applied to an AF coil. FIG. 82 is a cross-sectional view illustrating how a moving part moves downward in an optical axis direction when a reverse current is applied to an AF coil.

As illustrated in FIG. 80, the moving part may be disposed at a position spaced apart from both the upper plate **1121** of the cover **1120** and the base **1110** in an initial position where no current is applied to the AF coil **1420.** At this time, the moving part may be the AF moving part **1200.** In addition, the moving part may comprise an AF moving part **1200** and an OIS moving part **1300.**

When a forward current is applied to the AF coil **1420,** the AF coil **1420** may move upward in an optical axis direction due to electromagnetic interaction between the AF coil **1420** and the AF magnet **1410** (see **A** in FIG. 81). At this time, the AF carrier **1210** together with the AF coil **1420** may move upward in an optical axis direction. Furthermore, the OIS carrier **1310** and the lens together with the AF carrier **1210** may move upward in an optical axis direction. Accordingly, the distance between the lens and the image sensor is changed so that the focus of an image formed on the image sensor through the lens can be adjusted.

When a reverse current is applied to the AF coil **1420,** the AF coil **1420** may move downward in an optical axis direction due to electromagnetic interaction between the AF coil **1420** and the AF magnet **1410** (see **B** in FIG. 82). At this time, the AF carrier **1210** together with the AF coil **1420** may move downward in an optical axis direction. Furthermore, the OIS carrier **1310** and the lens together with the AF carrier **1210** may move downward in an optical axis direction. Accordingly, the distance between the lens and the image sensor is changed so that the focus of an image formed on the image sensor through the lens can be adjusted.

Meanwhile, during the movement of the AF coil **1420,** the AF sensor **1430** moves together with the AF coil **1420** and detects the strength of the magnetic field of the AF magnet **1410** to detect the amount or position of the lens in an optical axis direction. The movement amount or position of the lens in an optical axis direction detected by the AF sensor **1430** may be used for autofocus feedback control.

Hereinafter, optical image stabilization (OIS) driving of the lens driving device according to a second embodiment of the present invention will be described with reference to the drawings.

FIGS. 83 to 85 are views for explaining hand shake compensation driving of the lens driving device according to a second embodiment of the present invention. FIG. 83 is a cross-sectional view illustrating the appearance of the OIS moving part in an initial state in which no current is applied to an OIS-x coil and an OIS-y coil. FIG. 84 is a cross-sectional view illustrating a state in which an OIS moving part moves in an x-axis direction perpendicular to an optical axis as current is applied to an OIS-x coil. FIG. 85 is a cross-sectional view illustrating a state in which a current is applied to an OIS-y coil so that an OIS moving part moves in a y-axis direction perpendicular to both the optical axis and the x-axis.

As illustrated in FIG. 83, the moving part may be disposed at an initial position in a state in which no current is applied to an OIS-x coil **1520** and an OIS-y coil **1620.** At this time, the moving part may be the OIS moving part **1300.**

When a current is applied to the OIS-x coil **1520,** the OIS-x magnet **1510** may move in an x-axis direction perpendicular to the optical axis due to electromagnetic interaction between the OIS-x coil **1520** and the OIS-x magnet **1510** (see **A** in FIG. 84). At this time, the OIS carrier **1310** together with the OIS-x magnet **1510** may move in an x-axis direction. Furthermore, the lens may move in an x-axis direction together with the OIS carrier **1310.** More specifically, when a forward current is applied to the OIS-x coil **1520,** the OIS-x magnet **1510,** the OIS carrier **1310,** and the lens may move in one direction on the x-axis. In addition, when a reverse current is applied to the OIS-x coil **1520,** the OIS-x magnet **1510,** the OIS carrier **1310,** and the lens may move in another direction on the x-axis.

When current is applied to the OIS-y coil **1620,** due to the electromagnetic interaction between the OIS-y coil **1620** and the OIS-y magnet **1610,** the OIS-y magnet **1610** can move in a y-axis direction perpendicular to the optical axis (see **B** in FIG. 85). At this time, the OIS carrier **1310** together with the OIS-y magnet **1610** may move in a y-axis direction. Furthermore, the lens may move in a y-axis direction together with the OIS carrier **1310.** More specifically, when a forward current is applied to the OIS-y coil **1620,** the OIS-y magnet **1610,** the OIS carrier **1310,** and the lens may move in one direction on the y-axis. In addition, when a reverse current is applied to the OIS-y coil **1620,** the OIS-y magnet **1610,** the OIS carrier **1310,** and the lens may move in another direction on the y-axis.

Meanwhile, the OIS-x sensor **1530** may detect the amount or position of the OIS-x magnet **1510** by detecting the strength of the magnetic field of the OIS-x magnet **1510.** The movement amount or position detected by the OIS-x sensor **1530** may be used for feedback control for hand shake compensation in an x-axis direction. The OIS-y sensor **1630** may detect the movement amount or position of the OIS-y magnet **1610** by detecting the strength of the magnetic field of the OIS-y magnet **1610.** The movement amount or position detected by the OIS-y sensor **1630** may be used for hand shake compensation feedback control in a y-axis direction.

Hereinafter, a camera device according to a second embodiment of the present invention will be described with reference to the drawings.

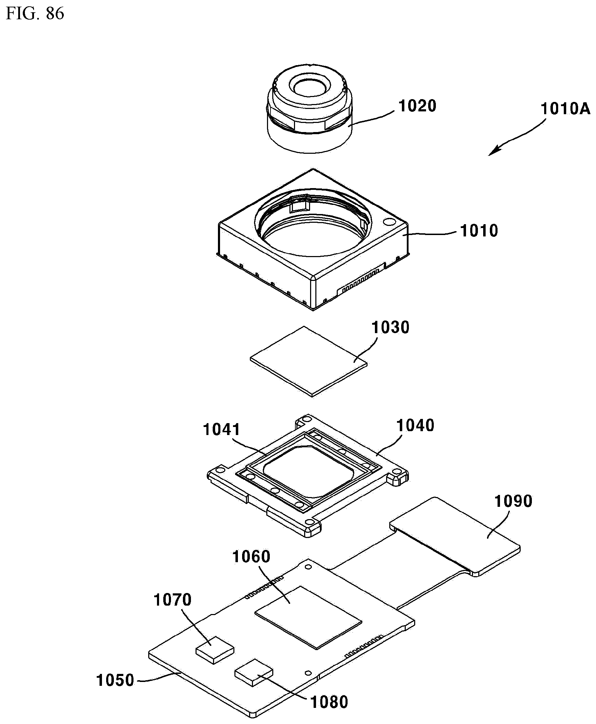

FIG. 86 is an exploded perspective view of a camera device according to a second embodiment of the present invention.

The camera device **1010A** may comprise a camera module.

The camera device **1010A** may comprise a lens module **1020.** The lens module **20** may comprise at least one lens. The lens may be disposed at a position corresponding to the image sensor **1060.** The lens module **1020** may comprise a lens and a barrel. The lens module **1020** may be coupled to the OIS carrier **1310** of the lens driving device **1010.** The lens module **1020** may be coupled to the OIS carrier **1310** by screw-coupling and/or adhesive. The lens module **1020** may move integrally with the OIS carrier **1310.**

The camera device **1010A** may comprise a filter **1030.** The filter **1030** may serve to block light of a specific frequency band from entering the image sensor **1060** from light passing through the lens module **1020.** The filter **1030** may be disposed parallel to an x-y plane. The filter **1030** may be disposed between the lens module **1020** and the image sensor **1060.** The filter **1030** may be disposed in the sensor base **1040.** In a modified embodiment, the filter **1030** may be disposed in base **1110.** The filter **1030** may comprise an infrared filter. The infrared filter may block light of an infrared region from being incident on the image sensor **1060.**

The camera device **1010A** may comprise a sensor base **1040.** The sensor base **1040** may be disposed between the lens driving device **1010** and the printed circuit board **1050.** The sensor base **1040** may comprise a protruding part **1041** in which the filter **1030** is disposed. An opening may be formed in a portion of the sensor base **1040** where the filter **1030** is disposed so that light passing through the filter **1030** may be incident to the image sensor **1060.** The adhesive member may couple or attach the base **1110** of the lens driving device **1010** to the sensor base **1040.** The adhesive member may additionally serve to prevent foreign substances from entering the lens driving device **1010.** The adhesive member may comprise any one or more of an epoxy, a thermosetting adhesive, and an ultraviolet curable adhesive.

The camera device **1010A** may comprise a printed circuit board (PCB) **1050.** The printed circuit board **1050** may be a substrate or a circuit board. The lens driving device **1010** may be disposed on the printed circuit board **1050.** A sensor base **1040** may be disposed between the printed circuit board **1050** and the lens driving device **1010.** The printed circuit board **1050** may be electrically connected to the lens driving device **1010.** An image sensor **1060** may be disposed on the printed circuit board **1050.** The printed circuit board **1050** may comprise various circuits, elements, and control units to convert an image formed by the image sensor **1060** into an electrical signal and transmit the converted electrical signal to an external device.

The camera device **1010A** may comprise an image sensor **1060.** The image sensor **1060** may be a component in which the light passing through the lens and the filter **1030** is incident to form an image. The image sensor **60** may be mounted on the printed circuit board **50.** The image sensor **60** may be electrically connected to the printed circuit board **50.** For an example, the image sensor **60** may be coupled to the printed circuit board **50** by a surface mounting technology (SMT). As another example, the image sensor **60** may be coupled to the printed circuit board **50** using a flip chip technology. The image sensor **60** may be disposed such that an optical axis coincides with a lens. That is, the optical axis of the image sensor **60** and the optical axis of the lens may be aligned. The image sensor **60** may convert light being irradiated onto an effective image region of the image sensor **60** into an electrical signal. The image sensor **60** may be any one among a charge coupled device (CCD), a metal oxide semi-conductor (MOS), a CPD, and a CID.

The camera device **1010A** may comprise a motion sensor **1070.** The motion sensor **1070** may be mounted on a printed circuit board **1050.** The motion sensor **1070** may be electrically connected to a control unit **1080** through a circuit pattern provided on the printed circuit board **1050.** The motion sensor **1070** may output rotational angular velocity information due to the movement of the camera module. The motion sensor **1070** may comprise a 2-axis or 3-axis gyro sensor or an angular velocity sensor.

The camera device **1010A** may comprise a control unit **1080.** The control unit **1080** may be disposed in the printed circuit board **1050.** The control unit **1080** may be electrically connected to the coil **1130** of the lens driving device **1010.** The control unit **1080** may individually control the direction, intensity, and amplitude of current supplied to the coil **1130.** The control unit **1080** may perform an auto focus function and/or a hand shake correction function by controlling the lens driving device **1010.** Furthermore, the control unit **1080** may perform autofocus feedback control and/or hand shake correction feedback control for the lens driving device **1010.**

The camera device **1010A** may comprise a connector **1090.** The connector **1090** may be electrically connected to the printed circuit board **1050.** The connector **1090** may comprise a port for being electrically connected to an external device.

Hereinafter, an optical apparatus according to a second embodiment of the present invention will be described with reference to the drawings.

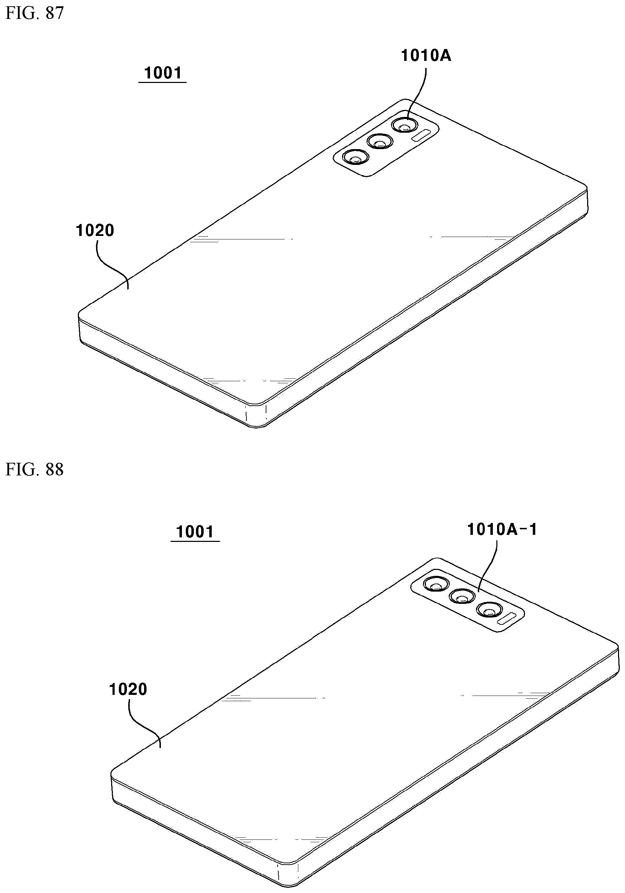

FIG. 87 is a perspective view of an optical apparatus according to a second embodiment of the present invention; and FIG. 88 is a perspective view of an optical apparatus according to a modified embodiment.

The optical apparatus **1001** is a mobile phone, mobile phone, portable terminal, mobile terminal, smart phone, smart pad, portable smart device, digital camera, laptop computer, digital broadcasting terminal, personal digital assistants (PDAs), portable multimedia player (PMP), and navigation. The optical apparatus **1001** may comprise any device for photographing images or photos.

The optical apparatus **1001** may comprise a main body **1020.** The optical apparatus **1001** may comprise a camera device **1010A.** The camera device **1010A** may be disposed on the main body **1020.** The camera device **1010A** may photograph a subject. The optical apparatus **1001** may comprise a display. The display may be disposed on the main body **1020.** The display may output at least one of a video and an image photographed by the camera device **1010A.** The display may be disposed on a first surface of the main body **1020.** The camera device **1010A** may be disposed on at least one of a first surface of the main body **1020** and a second surface opposite to the first surface. As illustrated in FIG. 87, in the camera device **1010A,** triple cameras may be disposed in a vertical direction. As illustrated in FIG. 88, in the camera device **1010A-1,** triple cameras may be disposed in a horizontal direction.

Although the first embodiment and the second embodiment have been separately described above, some components of the first embodiment and some components of the second embodiment may be used interchangeably. That is, some components of the first embodiment may be replaced with corresponding components of the second embodiment. In addition, some components of the second embodiment may be replaced with corresponding components of the first embodiment. In addition, the third embodiment of the present invention may comprise some components of the first embodiment and some components of the second embodiment together.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A lens driving device comprising:
a fixed part;
a first moving part disposed in the fixed part;
a second moving part disposed in the first moving part;
a first driving part configured to move the first moving part in an optical axis direction;
a second driving part configured to move the second moving part in a direction perpendicular to the optical axis direction;
a plate member disposed between the fixed part and the first moving part;
a first ball part disposed between the plate member and the first moving part;
an elastic member disposed between the fixed part and the plate member; and
a second ball part disposed between the fixed part and the first moving part,
wherein the elastic member presses the second ball part to be supported by the fixed part.

2. The lens driving device of claim 1, wherein the fixed part comprises a base, and a first protruding part and a second protruding part protruding from the base in the optical axis direction,
wherein the first moving part comprises a first carrier and a third protruding part protruding from the first carrier in a first direction perpendicular to the optical axis direction,
wherein the first ball part is disposed between the plate and the first protruding part, and
wherein the second ball part is disposed between the second protruding part and the third protruding part.

3. The lens driving device of claim 2, wherein the first protruding part and the second protruding part are disposed on a first corner region of the base.

4. The lens driving device of claim 1, comprising a second ball disposed between the first moving part and the second moving part.

5. The lens driving device of claim 4, comprising a first ball comprising the first ball part and the second ball part,
wherein, when viewed from above, the first ball comprises a first unit ball disposed on a first corner region of the fixed part, and a second unit ball disposed on a second corner region disposed in a diagonal direction of the first corner region of the fixed part.

6. The lens driving device of claim 5, wherein, when viewed from above, the second ball comprises a third unit ball and a fourth unit ball spaced apart from each other and disposed between the first unit ball and the second unit ball in the diagonal direction.

7. The lens driving device of claim 5, wherein the first ball comprises a ball overlapped with the second ball in a direction perpendicular to the optical axis direction.

8. The lens driving device of claim 1, wherein the first driving part comprises a first magnet disposed on the fixed part and a first coil disposed on the first moving part.

9. The lens driving device of claim 8, comprising:
a first substrate disposed on the first moving part; and
a second substrate connecting the fixed part and the first substrate,
wherein the first coil is disposed on the first substrate.

10. The lens driving device of claim 9, wherein the second driving part comprises a second magnet and a second coil configured to move the second moving part in a first direction perpendicular to the optical axis direction, and a third magnet and a third coil configured to move the second moving part in a second direction perpendicular to the optical axis direction and the first direction, and
wherein the second coil and the third coil are disposed on the first substrate.
